# EUROPÄISCHE PATENTSCHRIFT

(11) **EP 4 584 082 B1**
(45) Veröffentlichungstag und Bekanntmachung des Hinweises auf die Patenterteilung: **08.04.2026**
(21) Anmeldenummer: 23818027.7
(22) Anmeldetag: 05.12.2023
(51) Int. Cl.: B32B 5/30

(54) **VERWENDUNG EINES SCHUTZMATERIALS UND EINER SCHUTZBEKLEIDUNG GEGEN KONTAMINATION DURCH POLYZYKLISCHE AROMATISCHE KOHLENWASSERSTOFFE**
USE OF A PROTECTIVE MATERIAL AND AN ITEM OF PROTECTIVE CLOTHING AGAINST CONTAMINATION BY POLYCYCLIC AROMATIC HYDROCARBONS
UTILISATION D'UN MATÉRIAU PROTECTEUR ET D'UN VÊTEMENT PROTECTEUR CONTRE LA CONTAMINATION PAR DES HYDROCARBURES AROMATIQUES POLYCYCLIQUES

(30) Priorität: 06.12.2022 DE 102022132360; 21.12.2022 DE 102022134282
(43) Veröffentlichungstag der Anmeldung: 16.07.2025
(73) Patentinhaber: Blücher GmbH, 40699 Erkrath (DE)
(72) Erfinder: BAGGEN, Brigitte, 40699 Erkrath (DE); VOGT, Sarah, 40699 Erkrath (DE); ARNOLD, Andreas, 40699 Erkrath (DE)
(74) Vertreter: Von Rohr Patentanwälte Partnerschaft mbB
(86) Internationale Anmeldenummer: PCT/EP2023/084240
(87) Internationale Veröffentlichungsnummer: WO 2024/121104

(56) Entgegenhaltungen:
- EP-A1- 1 825 899
- DE-B4- 19 829 975
- US-A- 4 459 332
- US-A1- 2008 176 472
- US-A1- 2018 207 613

## Beschreibung

Die vorliegende Erfindung betrifft das technische Gebiet von textilen Schutzmaterialien bzw. von textiler Schutzbekleidung zum Schutz gegen Kontamination durch polyzyklische aromatische Kohlenwasserstoffe (synonym auch als "polycyclische aromatische Kohlenwasserstoffe" bezeichnet oder abgekürzt auch nur als "PAK" bzw. "PAKs" bezeichnet).

Insbesondere betrifft die vorliegende Erfindung die Verwendung einer textilen Schutzbekleidung, bevorzugt in Form einer textilen Schutzunterbekleidung (d. h. Schutzunterwäsche), zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination").

Weiterhin betrifft die vorliegende Erfindung die Verwendung eines textilen Schutzmaterials, insbesondere in Form einer (textilen) Schutzbekleidung, bevorzugt in Form einer Schutzunterbekleidung (Schutzunterwäsche), zur Verhinderung oder Minimierung einer Kontamination mit aus einer Kontaminationsquelle freigesetzten polyzyklischen aromatischen Kohlenwasserstoffen ("PAK-Kontamination"), insbesondere zum Schutz von einer Einwirkung von polyzyklischen aromatischen Kohlenwasserstoffen (PAKs) ausgesetzten Personen

Darüber hinaus betrifft die vorliegende Erfindung ein Verfahren zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination").

Schließlich betrifft die vorliegende Erfindung ein Schutzbekleidungskombination sowie deren Verwendung zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination") und/oder zur Verhinderung oder Minimierung einer Kontamination mit aus einer Kontaminationsquelle freigesetzten polyzyklischen aromatischen Kohlenwasserstoffen ("PAK-Kontamination"), vorzugsweise zum Schutz von einer Einwirkung von polyzyklischen aromatischen Kohlenwasserstoffen (PAKs) ausgesetzten Personen.

Polyzyklische aromatische Kohlenwasserstoffe bzw. polycyclische aromatische Kohlenwasserstoffe (synonym auch als "PAK" bzw. "PAKs" abgekürzt oder aber gelegentlich auch als "PAH", vom Englischen *"polycyclic aromatic hydrocarbons"* abgeleitet, bezeichnet) ist die Bezeichnung für ein Stoffgruppe, welche aus weit über hundert Einzelstoffen besteht. PAK sind in großen Mengen in Kohle, Teer und Pech enthalten, werden in nennenswerten Mengen aber auch in Abgasen oder Rauchgasen von Verbrennungs- und/oder Hochtemperaturprozessen (z. B. in Brandrauch oder in Abgasen bzw. Verbrennungsgasen von Kokereien, Stahlwerken, Metallverhüttungen, Hochöfen etc.) gefunden. Sie entstehen insbesondere bei der unvollständigen Verbrennung von organischen Stoffen und Materialien.

Die polyzyklischen aromatischen Kohlenwasserstoffe bilden also eine Stoffgruppe von organischen Verbindungen, welche aus mindestens zwei verbundenen, d. h. kondensierten aromatischen Ringsystemen bestehen, wobei die ringförmigen Kohlenwasserstoffe zusätzlich Substituenten tragen können. Dadurch ergibt sich ein großer Variantenreichtum innerhalb der PAK, wobei mehrere hundert Verbindungen bekannt sind. PAK sind überwiegend neutrale und unpolare Feststoffe mit nur geringer Wasserlöslichkeit. Zahlreiche PAK sind nachweislich kanzerogen bzw. karzinogen (d. h. also krebserregend), insbesondere da sie bei der Metabolisierung im Körper epoxidiert werden und die resultierenden Epoxide in einer nucleophilen Ringöffnungsreaktion mit der menschlichen DNA reagieren können.

In Bezug auf den Arbeitsschutz ist die Referenz- bzw. Leitsubstanz dieser Stoffgruppe das sogenannte Benzo[a]pyren. Benzo[a]pyren (synonym auch als "1,2-Benzpyren" bezeichnet) ist also ein polyzyklischer aromatischer Kohlenwasserstoff und kommt beispielsweise im Steinkohlenteer vor, entsteht aber auch bei der unvollständigen Verbrennung von organischen Materialien und Stoffen und ist infolgedessen sehr verbreitet (z. B. in Auto- und Industrieabgasen, aber auch in Zigarettenrauch und in Röstaromen von Kaffeebohnen, daneben in Grillprodukten, welche über Holzkohle oder Kiefernzapfen zubereitet werden, vor allem aber auch in Abgasen oder Rauchgasen von Verbrennungs- und/oder Hochtemperaturprozessen, wie z. B. Brandrauch, Abgasen von Kokereien, Stahlwerken, Metallverhüttungen, Hochöfen etc.). Benzo[a]pyren gilt als karzinogen, keimzellmutagen und reproduktionstoxisch.

Im Hinblick auf den Arbeitsschutz gelten ab einem Benzo[a]pyren-Gehalt von mehr als 50 mg/kg entsprechende Verwendungsbeschränkungen und zusätzliche Richtlinien, nämlich spezielle technische Regeln für Gefahrstoffe (sogenannte TRGS) der Bundesanstalt für Arbeitsschutz und Arbeitsmedizin, wie insbesondere die Richtlinien TRGS 551 und TRGS 524. Die arbeitsrechtliche Akzeptanzkonzentration liegt bei 70 ng/m³ und die arbeitsrechtliche Toleranzkonzentration liegt bei 700 ng/m³. Bei der Ausübung einer beruflichen Tätigkeit durch PAK verursachte Erkrankungen (wie z. B. Schleimhautveränderungen, Krebs oder andere Tumore, insbesondere der Harnwege) infolge einer Kontamination mit polyzyklischen aromatischen Kohlenwasserstoffe werden bei Nachweis der Einwirkung einer kumulativen Dosis von mindestens 80 Benzo[a]pyren-Jahre in Deutschland auf Antrag als Berufskrankheit anerkannt (vgl. z. B. Liste der Berufskrankheiten in Deutschland, Anlage 1 zur Berufskrankheiten-Verordnung (BKV) in der Fassung der Fünften Verordnung zur Änderung der Berufskrankheiten-Verordnung vom 29. Juni 2021).

Die unerwünschte Aufnahme von PAK in den Körper erfolgt im Fall von PACkontaminierter Umgebung durch die Atemluft bzw. über die Atemwegsorgane, darüber hinaus aber auch über die Haut und die Haare.

Insbesondere Feuerwehreinsatzkräfte sind im Laufe ihres Berufslebens einer starken Belastung durch PAK ausgesetzt: Im Einsatzfall sind diese Feuerwehreinsatzkräfte dem Brandrauch unmittelbar ausgesetzt. Brandrauch ist ein Gemisch aus verschiedenen chemischen Stoffen, welche je nach Brandort stark variieren können; im Brandrauch enthalten sind stets auch Substanzen aus der Gruppe der sogenannten polyzyklischen aromatischen Kohlenwasserstoffe, wobei diese polyzyklischen aromatischen Kohlenwasserstoffe unterschiedliche krebserzeugende Wirkung haben und auch über die Haut und die Haare in den Körper aufgenommen werden können. Allein in Deutschland sind 40.000 hauptamtliche sowie 1,3 Millionen ehrenamtliche Feuerwehreinsatzkräfte tätig.

Wie zuvor ausgeführt, sind diese Feuerwehreinsatzkräfte im Einsatzfall dem Brandrauch unmittelbar ausgesetzt, wobei zum Schutz gegenüber dem Brandrauch, insbesondere gegenüber einer Kontamination mit den darin enthaltenen toxischen Substanzen, neben einer Atemschutzausrüstung auch eine Schutzoberbekleidung, insbesondere eine Arbeitsschutzoberbekleidung, vorzugsweise eine persönliche Schutzausrüstung (PSA), speziell im Fall von Feuerwehreinsatzkräften eine Feuerwehrschutzoberbekleidung nach DIN EN 469, getragen wird.

Die DIN EN 469 (aktuelle Fassung: DIN EN 469:2020) mit der Bezeichnung "Schutzkleidung für die Feuerwehr - Leistungsanforderungen für Schutzkleidung für Tätigkeiten der Feuerwehr" regelt die Beschaffenheit von Schutzoberbekleidung für die Feuerwehr zur Brandbekämpfung; insbesondere wird in dieser Vorschrift auf die Leistungsanforderungen der Feuerschutzoberbekleidung bei der Brandbekämpfung, d. h. Beständigkeit bzw. Verhalten der Bekleidung bei Brandeinsätzen (insbesondere Beaufschlagung des Materials mit Flammen bzw. thermischer Strahlung und Hitze) abgestellt. Die Verhinderung des Eindringens toxischer Substanzen, insbesondere PAK, wird jedoch dort überhaupt nicht thematisiert.

Bei Feuerwehreinsätzen, wie insbesondere bei Bränden, kommt es aber unabhängig von den am Brand beteiligten Materialien nahezu immer zur Bildung einer Vielzahl von Gefahrstoffen; je nach Bauart des betroffenen Brandobjekts bzw. der eingesetzten Bau- oder Werkstoffe kommt es neben Brand- bzw. Rauchgasen zusätzlich noch zur Freisetzung von Partikeln, wie Ruß, Staub und Fasern. Die grundlegende Zusammensetzung von Brandrauch und seine Gefährdungseinstufung sind aus umfangreichen Untersuchungen hinlänglich bekannt.

Bei Brandeinsätzen ist in der Regel von der Freisetzung von folgenden Gefahrstoffen auszugehen, nämlich: akut und chronisch giftigen Stoffen (wie z. B. Kohlenmonoxid, Blausäure bzw. Cyanwasserstoff, Styrolen, Salzsäure bzw. Chlorwasserstoff etc.) einerseits und krebserzeugenden bzw. kanzerogenen Stoffen (wie z. B. Benzol, polyzyklischen aromatischen Kohlenwasserstoffen etc.), andererseits.

Wie bei jeder Gefahrstoffexposition gibt es mehrere Wege, wie Brandrauch und andere Verbrennungsprodukte und -rückstände sowie die damit assoziierten Gefahrstoffe, Biostoffe und andere gefährliche Substanzen in den Körper gelangen können, nämlich durch Inkorporation, also durch direkte Aufnahme gefährlicher Stoffe in den Körper, wie z. B. durch Einatmen, Verschlucken oder über die Haut (Resorption), oder durch Kontamination, also Kontakt mit verunreinigten Oberflächen oder Gegenständen, wie z. B. der persönlichen Schutzausrüstung oder anderen Ausrüstungsgegenständen, aber auch mit der Haut selbst.

Viele der bei einem Brandeinsatz vorhandenen bzw. entstehenden Gefahrstoffe, insbesondere auch die PAK, sind hautresorptiv. Ein großer Teil dieser Gefahrstoffe werden zwar von der Schutzoberbekleidung abgehalten; diese Gefahrstoffe lagern sich jedoch auf ihr ab und dringen außerdem zu einem gewissen Teil durch die Schutzoberbekleidung hindurch, so dass sie letztendlich auf die Haut und Haare auftreffen, von wo sie in den Körper aufgenommen bzw. resorbiert werden können.

Die im Brandrauch enthaltenen Gefahrstoffe, hierunter speziell die zuvor genannten PAK, entstehen bei hohen Temperaturen wie im Brandfall aber nicht nur in gasförmiger Form, sondern können auch an den im Brandfall freigesetzten Staub- und Rußpartikeln anhaften und hieran gebunden werden, so dass sie auch noch nach Beendigung eines betreffenden Brandeinsatzes auf der Schutzoberbekleidung verbleiben. Durch die Schutzoberbekleidung eingedrungene Schadstoffpartikel (d. h. mit PAK beladene Staub- oder Rußpartikel) können zudem auf die Haut gelangen und die daran gebundenen PAK von dort in den Körper resorbiert werden.

Bislang fehlt es aber im Stand der Technik an einer effizienten Lösung, um die Penetration von PAK (sowohl in gasförmiger Form als auch in an Partikel gebundener Form) durch die Schutzoberbekleidung hindurch in effizienter Weise zu verhindern.

Aber auch bei vielen anderen Verbrennungs- und Hochtemperaturprozessen entstehen polyzyklische aromatische Kohlenwasserstoffe enthaltende Gase, insbesondere Abgase oder Rauchgase, beispielsweise in Kokereien, Gießereien und Stahlwerken, in Verhüttungsprozessen, in Metall- und Stahlerzeugungs- und - Verarbeitungsprozessen, in Hochofenprozessen, in Abfallverbrennungsprozessen, in Asphalterzeugungs- und -verarbeitungsprozessen, in Glaserzeugungs- und - verarbeitungsprozessen, in Feuerfestwarenerzeugungs- und -verarbeitungsprozessen etc. Personen die sich in den betreffenden Örtlichkeiten aufhalten bzw. in den betreffenden Prozessen tätig sind, insbesondere zu Zwecken der Verrichtung ihrer Arbeit, sind folglich einer erhöhten Einwirkung bzw. Exposition und Kontamination mit polyzyklischen aromatischen Kohlenwasserstoffen ausgesetzt, welche aufgrund der extrem hohen Temperaturen dieser Prozesse sowohl gasförmig als auch in an Partikeln (z. B. Staub- oder Rußpartikeln) gebundener Form auftreten, so dass sowohl die gasförmigen PAK als auch die an Partikel gebundenen PAK nicht nur über die Atemwege, sondern auch über die Haut und die Haare in den Körper aufgenommen werden können.

Im Allgemeinen ist aber die bei den vorgenannten Tätigkeiten üblicherweise eingesetzte Schutzoberbekleidung, insbesondere Arbeitsschutzoberbekleidung, insbesondere persönliche Schutzausrüstung (PSA), wie beispielsweise eine Feuerwehrschutzoberbekleidung nach DIN EN 469:2020, nicht ausreichend, um ein Eindringen PAK-haltiger Kontaminationen entweder in gasförmiger Form oder in an Partikel (wie z. B. Staub-, Ruß- oder Rauchgaspartikel) gebundener Form und folglich ein entsprechendes Auftreffen auf die Haut zu verhindern, so dass es zu einer nennenswerten Exposition und Kontamination der Haut mit PAK und infolgedessen zu einer unerwünschten PAK-Resorption durch die Haut kommt. Da die PAK in an Partikel gebundener Form auch noch nach der erfolgten Exposition auf der Schutzoberbekleidung verbleiben, besteht auch nach Exposition noch die Gefahr einer nachträglichen Kontamination der Haut über die Schutzoberbekleidung.

Die EP 1 825 899 A1 betrifft ein Adsorptionsfiltermaterial mit einem integrierten Partikel- bzw. Aerosolschutz mit Schutzfunktion vorrangig gegenüber biologischen bzw. chemischen Schadstoffen, insbesondere chemischen Kampfstoffen.

Weiterhin betrifft die DE 198 29 975 B4 ein wasserdampfundurchlässiges, flächiges Schutzmaterial, welches einen luftdurchlässigen, textilen Träger und eine darauf applizierte, geschlossene, nichtporöse wasserdampfdurchlässige Sperr- und Haftschicht umfasst, wobei auf der Haftschicht Adsorbentien auf Basis von Aktivkohle haften und wobei die Sperr- und Haftschicht als Dispersion eines wasserdampfdurchlässigen, maskierten Isocyanats, welches mit einem Diamin vernetzt ist, auf dem luftdurchlässigen, textilen Träger aufgetragen ist.

Zudem betrifft die US 2018/207613 A1 ein textiles Schutzmaterial, wobei das textile Schutzmaterial einen vorzugsweise zweidimensionalen bzw. flächigen textilen Träger, eine auf den textilen Träger aufgebrachte Klebstoffschicht sowie wiederum eine an der Klebstoffschicht zum Haften gebrachte Adsorptionsschicht aufweist; die Klebstoffschicht soll dabei in Form einer luftdurchlässig bzw. diskontinuierlich ausgebildeten Schicht auf Basis eines getrockneten bzw. ausgehärteten gebrochenen Klebstoffpolymers ausgebildet sein.

Die US 2008/176472 A1 betrifft ein permeables ABC-Schutzbekleidungsmaterial, welches ein inneres Laminat aus einzelnen durchlässigen Schichten und eine Adsorptionsschicht, welche Aktivkohle enthält, umfasst; zudem umfasst das Schutzbekleidungsmaterial ein reißfestes, hydrophobes und oleophobes Abdeckmaterial, wobei zwischen dem Innenlaminat und dem Abdeckmaterial eine Schicht aus Filtermaterial angeordnet ist, welche als feinporiges Filtervlies ausgebildet ist.

Schließlich betrifft die US 4 459 332 A ein luft- und wasserdurchlässiges, giftige Dämpfe absorbierendes Textilmaterial, welches in übereinanderliegender Anordnung ein erstes inaktives Gewebe oder Vliesmaterial, eine erste luft- und wasserdurchlässige, offenzellige Klebschaumschicht mit einer Aktivkohlefaser-Beflockung, welche zumindest im Wesentlichen senkrecht auf der von der ersten inaktiven Schicht abgewandten Oberfläche der Klebschaumschicht angeordnet ist, aufweist, und mit in den zwischen der Beflockung gebildeten Hohlräumen positioniertem Aktivkohlepulver; das Textilmaterial soll zudem eine zweite luft- und wasserdampfdurchlässige, offenzellige Klebschaumschicht und ein zweites inaktives Gewebes oder Vliesmaterial umfassen.

Bislang hat es aber trotz Kenntnis der Exposition mit PAK-Kontaminationen in den betreffenden Bereichen an einem Lösungskonzept gefehlt, um ein unerwünschtes Durchdringen der Schutzoberbekleidung mit PAK bis auf die Haut des Trägers in effizienter Weise zu vermeiden oder zumindest zu minimieren. Da die Exposition mit polyzyklischen aromatischen Kohlenwasserstoffen oftmals an sehr heißen Örtlichkeiten bzw. bei ohnehin bereits hoher thermischer Belastung des Träges einer solchen Schutzoberbekleidung auftritt, ist das Vorsehen einer zusätzlichen Schutzausrüstung gegenüber dem Eindringen von PAK bislang nicht möglich gewesen, da dies zu einer zusätzlichen und somit nicht tolerablen thermischen Belastung des Trägers bei einem Einsatz führen würde.

Vor diesem Hintergrund besteht daher eine Aufgabe der vorliegenden Erfindung in der Bereitstellung eines effizienten wie ökonomischen Konzepts zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, bzw. zum Schutz vor einer Einwirkung von polyzyklischen aromatischen Kohlenwasserstoffen ausgesetzten Personen gegenüber einer Kontamination mit PAK ("PAK-Kontamination"), insbesondere zur Verhinderung oder Minimierung einer Kontamination mit PAK ("PAK-Kontamination"), wobei durch dieses Konzept insbesondere die zuvor geschilderten Probleme und Nachteile des Standes der Technik zumindest weitestgehend vermieden oder aber wenigstens minimiert bzw. abgeschwächt werden sollen.

Eine weitere Aufgabe der vorliegenden Erfindung ist darin zu sehen, ein effizientes wie ökonomisches Konzept zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, bzw. zum Schutz vor einer Einwirkung von polyzyklischen aromatischen Kohlenwasserstoffen ausgesetzten Personen gegenüber einer Kontamination mit PAK ("PAK-Kontamination"), insbesondere zur Verhinderung oder Minimierung einer Kontamination mit PAK ("PAK-Kontamination"), bereitzustellen, wobei dieses Konzept in Kombination mit einer in dem betreffenden Bereich bestehenden bzw. existenten oder üblichen Schutzoberbekleidung, insbesondere Arbeitsschutzoberbekleidung, vorzugsweise persönlichen Schutzausrüstung (PSA), umsetzbar bzw. realisierbar sein soll. Insbesondere soll das erfindungsgemäße Konzept kompatibel und/oder komplementär in Bezug auf eine in dem betreffenden Bereich bestehende bzw. existente oder übliche Schutzoberbekleidung, insbesondere Arbeitsschutzoberbekleidung, vorzugsweise persönliche Schutzausrüstung (PSA), umsetzbar bzw. realisierbar sein.

Schließlich besteht eine wiederum weitere Aufgabe der vorliegenden Erfindung in der Bereitstellung eines effizienten wie ökonomischen Konzepts zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, bzw. zum Schutz vor einer Einwirkung von polyzyklischen aromatischen Kohlenwasserstoffen ausgesetzten Personen gegenüber einer Kontamination mit PAK ("PAK-Kontamination"), insbesondere zur Verhinderung oder Minimierung einer Kontamination mit PAK ("PAK-Kontamination"), wobei das Konzept auch als eine nachträgliche und/oder komplementäre Ausrüstung in Bezug auf eine in dem betreffenden Bereich bestehende bzw. existente oder übliche Schutzoberbekleidung, insbesondere Arbeitsschutzoberbekleidung, vorzugsweise persönliche Schutzausrüstung (PSA), umsetzbar bzw. realisierbar sein soll. Insbesondere sollen in dem betreffenden Bereich bestehende bzw. existente oder übliche Schutzkonzepte mit dem erfindungsgemäßen Konzept vervollständigt bzw. nachträglich ergänzt bzw. ausgerüstet werden können, insbesondere mit der Zielsetzung eines zusätzlichen und/oder komplementären PAK-Schutzes.

Schließlich besteht eine nochmals weitere Aufgabe der vorliegenden Erfindung in der Bereitstellung eines effizienten wie ökonomischen Konzepts zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, bzw. zum Schutz vor einer Einwirkung von polyzyklischen aromatischen Kohlenwasserstoffen ausgesetzten Personen gegenüber einer Kontamination mit PAK ("PAK-Kontamination"), insbesondere zur Verhinderung oder Minimierung einer Kontamination mit PAK ("PAK-Kontamination"), wobei das Konzept keine bzw. keine signifikante (zusätzliche) Belastung (wie thermische Belastung, mangelnder Tragekomfort, Einschränkung der Bewegungsfreiheit etc.) für die zu schützende Personen mit sich bringen soll. Insbesondere soll das erfindungsgemäße Konzept einen hohen Tragekomfort bei gleichzeitig ausgezeichneter Schutzfunktion gegenüber PAK gewährleisten.

Zur Lösung der zuvor geschilderten Aufgabe schlägt die vorliegende Erfindung somit - gemäß einem **ersten** Aspekt der vorliegenden Erfindung - die Verwendung einer Schutzbekleidung, bevorzugt in Form einer Schutzunterbekleidung (Schutzunterwäsche), gemäß Anspruch 1 vor; weitere, jeweils vorteilhafte Weiterbildungen und Ausgestaltungen dieses Erfindungsaspekts sind Gegenstand der entsprechenden Unteransprüche (d. h. Ansprüche 2 bis 12).

Wiederum ist vorliegend beschrieben - gemäß einem weiteren vorliegend beschriebenen Aspekt - die Verwendung eines textilen Schutzmaterials.

Darüber hinaus ist ein wiederum weiterer Gegenstand der vorliegenden Erfindung - gemäß einem **zweiten** Aspekt der vorliegenden Erfindung - zudem ein Verfahren gemäß dem diesbezüglichen unabhängigen Verfahrensanspruch (Anspruch 13).

Gleichermaßen ist ein wiederum weiterer Gegenstand der vorliegenden Erfindung - gemäß einem **dritten** Aspekt der vorliegenden Erfindung - auch eine Schutzbekleidungskombination zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination") und/oder insbesondere zur Verhinderung oder Minimierung einer Kontamination mit aus einer Kontaminationsquelle freigesetzten polyzyklischen aromatischen Kohlenwasserstoffen ("PAK-Kontamination"), vorzugsweise zum Schutz von einer Einwirkung von polyzyklischen aromatischen Kohlenwasserstoffen (PAKs) ausgesetzten Personen, gemäß dem diesbezüglichen unabhängigen Anspruch (Anspruch 14).

Schließlich ist ein wiederum weiterer Gegenstand der vorliegenden Erfindung - gemäß einem **vierten** Aspekt der vorliegenden Erfindung - auch die Verwendung der erfindungsgemäßen Schutzbekleidungskombination gemäß Anspruch 15.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit die Verwendung einer textilen Schutzbekleidung, bevorzugt in Form einer Schutzunterbekleidung (= Schutzunterwäsche), zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination"),
wobei die Schutzbekleidung ein textiles Schutzmaterial aufweist oder hieraus gebildet ist,
wobei das textile Schutzmaterial als ein mehrlagiges, eine Mehrzahl von miteinander verbundenen (bevorzugt laminierten bzw. mittels Laminierung miteinander verbundenen) Lagen (= Schichten) aufweisendes textiles Verbundmaterial ausgebildet ist,
wobei das textile Schutzmaterial die folgenden Schichten, vorzugsweise in der nachfolgend genannten Abfolge, aufweist:
   (a) eine textile Trägerschicht, wobei die textile Trägerschicht als ein vorzugsweise gasdurchlässiges, textiles Flächengebilde vorliegt und/oder ausgebildet ist,
   (b) eine auf einer Seite der textilen Trägerschicht aufgebrachte Haftmittelschicht, wobei die Haftmittelschicht als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
   (c) eine an der Haftmittelschicht fixierte und/oder zum Haften gebrachte, vorzugsweise diskontinuierlich ausgebildete und/oder gasdurchlässige, Adsorptionsschicht, wobei die Adsorptionsschicht eine Vielzahl einzelner Adsorberpartikel umfasst oder hieraus gebildet ist,
   (d) eine auf der Adsorptionsschicht angeordnete und/oder mit der Adsorptionsschicht verbundene Partikel- und/oder Aerosolfilterschicht, vorzugsweise Partikel- und Aerosolfilterschicht, wobei die Partikel- und/oder Aerosolfilterschicht als ein gasdurchlässiges textiles Flächengebilde, welches eine Vielzahl einzelner Textilfasern umfasst oder hieraus gebildet ist, vorliegt und/oder ausgebildet ist,
   (e) gegebenenfalls eine auf der Partikel- und Aerosolfilterschicht angeordnete und/oder mit der Partikel- und Aerosolfilterschicht verbundene Abdeckschicht, wobei die Abdeckschicht als vorzugsweise gasdurchlässiges textiles Flächengebilde vorliegt und/oder ausgebildet ist.

Des Weiteren kann es erfindungsgemäß vorgesehen sein, dass das textile Schutzmaterial außerdem eine auf der der Haftmittelschicht abgewandten Seite der textilen Trägerschicht angeordnete und/oder hiermit verbundene weitere oder zweite Abdeckschicht aufweist, wobei die weitere oder zweite Abdeckschicht als vorzugsweise gasdurchlässiges textiles Flächengebilde vorliegen und/oder ausgebildet sein kann. Mit anderen Worten kann es erfindungsgemäß vorgesehen sein, dass das textile Schutzmaterial außerdem gegebenenfalls die folgende Schicht aufweist:
(f) eine auf der der Haftmittelschicht abgewandten Seite der textilen Trägerschicht (2) angeordnete und/oder hiermit verbundene weitere oder zweite Abdeckschicht (7), wobei die weitere oder zweite Abdeckschicht (7) als vorzugsweise gasdurchlässiges textiles Flächengebilde vorliegen und/oder ausgebildet sein kann.

Im Allgemeinen wird im Rahmen der vorliegenden Erfindung die Schutzbekleidung und/oder das Schutzmaterial bei der Verwendung und/oder im Anwendungszustand, insbesondere im Tragezustand, derart angeordnet und/oder eingesetzt, dass die Partikel- und/oder Aerosolfilterschicht und/oder die gegebenenfalls vorhandene Abdeckschicht der Kontaminationsquelle zugewandt ist/sind und/oder dass die Partikel- und/oder Aerosolfilterschicht und/oder die gegebenenfalls vorhandene Abdeckschicht vom Träger der Schutzbekleidung abgewandt ist/sind und/oder dass die Partikel- und/oder Aerosolfilterschicht und/oder die gegebenenfalls vorhandene Abdeckschicht eine Außenschicht der Schutzbekleidung und/oder des Schutzmaterials bildet/bilden.

Mit anderen Worten wird im Rahmen der vorliegenden Erfindung die Schutzbekleidung und/oder das Schutzmaterial bei der Verwendung und/oder im Anwendungszustand, insbesondere im Tragezustand, derart angeordnet und/oder eingesetzt wird, dass die textile Trägerschicht und/oder die gegebenenfalls vorhandene weitere oder zweite Abdeckschicht von der Kontaminationsquelle abgewandt ist/sind und/oder dass die textile Trägerschicht und/oder die gegebenenfalls vorhandene weitere oder zweite Abdeckschicht dem Träger der Schutzbekleidung zugewandt ist/sind und/oder dass die textile Trägerschicht und/oder die gegebenenfalls vorhandene weitere oder zweite Abdeckschicht eine Innenschicht der Schutzbekleidung und/oder des Schutzmaterials bildet/bilden.

Mit wiederum anderen Worten bildet bei der erfindungsgemäßen Verwendung der erfindungsgemäß eingesetzten Schutzbekleidung bzw. des erfindungsgemäß eingesetzten Schutzmaterials die vorgenannte textile Trägerschicht die körpernächste Schicht bzw. bildet die optionale Abdeckschicht oder in Abwesenheit der Abdeckschicht die Partikel- und/oder Aerosolfilterschicht die körperfernste Schicht. D. h. der zu dekontaminierende PAK-haltige Gas- und/oder Partikelstrom durchströmt die erfindungsgemäß eingesetzte Schutzbekleidung bzw. das erfindungsgemäß eingesetzte Schutzmaterial in der Abfolge bzw. Reihenfolge der vorgenannten Schichten (e), (d), (c), (b) und schließlich (a).

Auf diese Weise ist sichergestellt, dass die unschädlich zu machenden, freigesetzten polyzyklischen aromatischen Kohlenwasserstoffe (PAK), welche bei hohen Umgebungstemperaturen (z. B. Brandrauch) üblicherweise sowohl in gasförmiger Form als auch in partikulär gebundener Form (z. B. PAK-beladene Ruß-, Rauchgas- und Staubpartikel) vorliegen, zunächst auf die optionale Abdeckschicht und dann auf die Partikel- und/oder Aerosolfilterschicht auftreffen bzw. hiermit in Kontakt gebracht werden, bevor die dann noch verbleibenden PAK-Kontaminationen mit der Adsorptionsschicht bzw. den dort vorhandenen Adsorberpartikeln in Kontakt gebracht werden.

Auf diese Weise ist wiederum gewährleistet, dass bei der erfindungsgemäßen Verwendung im Anwendungszustand zunächst PAK-beladene bzw. PAK-belastete Partikel (z. B. PAK-beladene Staub-, Ruß- oder Rauchgaspartikel bis hin zu Fein- und Feinststaubpartikeln, an welchen PAK anhaften) unschädlich gemacht werden, da gröbere PAK-beladene bzw. PAK-belastete Partikel zunächst von der Abdeckschicht und feinere bis feinste PAK-beladene bzw. PAK-belastete Partikel dann von der nachfolgenden Partikel- und Aerosolfilterschicht zurückgehalten und auf diese Weise unschädlich gemacht werden, bevor schließlich die dann noch verbleibenden, überwiegend gasförmigen PAK-Belastungen (PAK-Kontaminationen) von der Adsorptionsschicht bzw. den dort vorhandenen Adsorberpartikeln adsorbiert und auf diese Weise unschädlich gemacht werden. In diesem Zusammenhang bewirkt die Haftmittelschicht, mittels derer die Adsorptionsschicht auf der textilen Trägerschicht fixiert ist, zudem, dass eine ausreichende Verweilzeit und/oder Konvektion der zu adsorbierenden gasförmigen PAK-Belastungen vorliegt bzw. erfolgt, sodass keine unerwünschten PAK-Durchbrüche durch die untere textile Trägerschicht erfolgen können.

Wie die Anmelderin nun in völlig überraschender Weise herausgefunden hat, ermöglicht die Verwendung der erfindungsgemäß eingesetzten Schutzbekleidung, bevorzugt in Form einer Schutzunterbekleidung (= Schutzunterwäsche), bzw. die Verwendung des erfindungsgemäß eingesetzten Schutzmaterials ein effizientes und ökonomisches Konzept zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination").

Aufgrund des besonders ausgestalteten, insbesondere im Hinblick auf die Einzelkomponenten abgestimmten Aufbaus und der Zusammensetzung der erfindungsgemäß eingesetzten Schutzbekleidung bzw. des erfindungsgemäß eingesetzten Schutzmaterials kann erstmals eine effiziente wie ökonomische doppelte Schutzfunktion gegenüber PAK-Kontaminationen bereitgestellt werden, nämlich dahingehend, dass sowohl ein Schutz gegenüber PAK-Kontaminationen in fester Form (z. B. gegenüber PAK-beladenen Partikeln) als auch PAK-Kontaminationen in gasförmiger Form gewährleistet bzw. sichergestellt ist.

Gleichzeitig wird aufgrund des speziell abgestimmten und aus wenigen wesentlichen Einzelbestandteilen bestehenden Aufbaus der erfindungsgemäß eingesetzten Schutzbekleidung bzw. des erfindungsgemäß eingesetzten Schutzmaterials, insbesondere einhergehend mit einem geringen Flächengewicht, und aufgrund der guten Wasserdampf- und Luftdurchlässigkeit ein hoher Tragekomfort gewährleistet, was insbesondere eine Anwendung auch unter hoher körperlicher Belastung ermöglicht (z. B. Einsatz von Feuerwehrkräften an Brandorten, Verrichtung schwerer körperlicher Arbeiten unter thermischer Belastung bzw. unter Hitzeeinwirkung wie z. B. an Hochöfen, in Glasherstellungsbetrieben, in Feuerfestwarenproduktionsstätten etc.). Der Tragekomfort wird zusätzlich auch noch dadurch erhöht die Adsorptionsschicht bzw. die dort vorhandenen Adsorberpartikel (bevorzugt Aktivkohlepartikel) außerdem als Feuchtigkeits- bzw. Wasserspeicher oder -puffer (z. B. für Köperschweiß) dienen kann bzw. können. Auf diese Weise wird durch die erfindungsgemäß eingesetzte Schutzbekleidung bzw. durch das erfindungsgemäß eingesetzte Schutzmaterial eine multiple Funktionalität bereitgestellt, welche weit über die bloße Schutzfunktion gegenüber PAK-Kontaminationen hinausgeht.

Neben den zuvor aufgezeigten Vorteilen und Besonderheiten der vorliegenden Erfindung ist das erfindungsgemäße Konzept mit einer Vielzahl weiterer Vorteile und Besonderheiten verbunden, von denen - in nicht abschließender Weise - im Folgenden einige wesentliche aufgeführt werden, ohne dass die vorliegende Erfindung hierauf zu beschränken ist.

Eine Besonderheit der vorliegenden Erfindung ist darin zu sehen, dass das zuvor geschilderte erfindungsgemäße Konzept insbesondere in Kombination mit einer in dem betreffenden Bereich bestehenden bzw. existenten oder üblichen Schutzoberbekleidung, insbesondere Arbeitsschutzbekleidung, vorzugsweise persönlichen Schutzausrüstung (PSA), umsetzbar bzw. realisierbar ist (z. B. im Fall von Feuerwehreinsatzkräften speziell in Kombination mit einer Feuerwehrschutzoberbekleidung nach DIN EN 469). Insbesondere ist das erfindungsgemäße Konzept kompatibel und/oder komplementär in Bezug auf eine in dem betreffenden Bereich bestehende bzw. existente oder übliche Schutzoberbekleidung, insbesondere Arbeitsschutzoberbekleidung, vorzugsweise persönliche Schutzausrüstung (PSA), umsetzbar bzw. realisierbar; folglich kann das erfindungsgemäße Konzept in besonders effizienter wie ökonomischer Weise umgesetzt bzw. realisiert werden, insbesondere auch zur nachträglichen zusätzlichen bzw. supplementären Schutzausrüstung speziell gegenüber PAK-Kontaminationen. In diesem Fall wird die erfindungsgemäß eingesetzte Schutzbekleidung bzw. das erfindungsgemäß eingesetzte Schutzmaterial insbesondere als eine Schutzunterbekleidung (Schutzunterwäsche) eingesetzt bzw. verwendet bzw. ausgebildet.

Insbesondere ermöglicht somit das Erfindungskonzept auch eine nachträgliche und/oder komplementäre Ausrüstung in Bezug auf einen in dem betreffenden Bereich bestehende bzw. existente oder übliche Schutzoberbekleidung, insbesondere Arbeitsschutzoberbekleidung, vorzugsweise persönliche Schutzausrüstung (PSA), wie z. B. speziell im Fall von Feuerwehreinsatzkräften in Kombination mit einer bestehenden bzw. existenten oder üblichen Feuerwehrschutzbekleidung nach DIN EN 469. Auf diese Weise können in dem betreffenden Bereich bestehende bzw. existente oder übliche Schutzkonzepte mit dem erfindungsgemäßen Konzept vervollständigt bzw. nachträglich ergänzt bzw. ausgerüstet (nachgerüstet) werden, insbesondere mit der Zielsetzung eines zusätzlichen und/oder komplementären PAK-Schutzes (wobei - wie zuvor bereits ausgeführt - in diesem Fall die erfindungsgemäß eingesetzte Schutzbekleidung bzw. das erfindungsgemäß eingesetzte Schutzmaterial insbesondere als eine Schutzunterbekleidung (Schutzunterwäsche) eingesetzt bzw. verwendet bzw. ausgebildet wird).

Darüber hinaus bedingt das erfindungsgemäße Konzept keine bzw. keine signifikante (zusätzliche) Belastung (wie thermische Belastung, mangelnder Tragekomfort, Einschränkung der Bewegungsfreiheit etc.) für die zu schützende Person. Denn das erfindungsgemäße Konzept gewährleistet einen hohen Tragekomfort bei gleichzeitig ausgezeichneter Schutzfunktion gegenüber PAK (d. h. PAK in gasförmiger wie auch in partikulär gebundener Form). Speziell im Fall der Verwendung der erfindungsgemäß eingesetzten Schutzbekleidung bzw. des erfindungsgemäß eingesetzten Schutzmaterials als Schutzunterbekleidung (Schutzunterwäsche) besteht ohne Weiteres die Möglichkeit, eine im Stand der Technik eingesetzte handelsübliche Bestandsunterwäsche (z. B. handelsübliche zweischichtige Bestandsunterwäsche mit äußerer Wollschicht und innerer Viskoseschicht) durch das erfindungsgemäße Konzept zu ersetzen.

Testungen des erfindungsgemäßen Konzepts in der Praxis bzw. unter Realbedingungen (konkret: Verwendung der erfindungsgemäß eingesetzten Schutzbekleidung bzw. des erfindungsgemäß eingesetzten Schutzmaterials als Schutzunterbekleidung bzw. Schutzunterwäsche in Kombination mit einer üblichen Standard-Feuerwehrschutzoberbekleidung nach DIN EN 469 im Brandfall bzw. zum Schutz gegenüber PAK in Rauchgasen) haben gezeigt, dass - im unmittelbaren Vergleich zu einer nach dem Stand der Technik üblichen Kombination einer handelsüblichen Standard-Unterwäsche (= handelsübliche zweischichtige Bestandsunterwäsche mit äußerer Wollschicht und innerer Viskoseschicht) mit derselben Feuerwehrschutzoberbekleidung nach DIN EN 469 - eine gegenüber PAK um mehr als 200-fach höhere Schutzwirkung erreicht werden kann. Insbesondere lässt sich mit der vorgenannten Kombination aus standardgemäßer Schutzoberbekleidung nach DIN EN 469 einerseits und erfindungsgemäß eingesetzter Schutzbekleidung bzw. erfindungsgemäß eingesetztem Schutzmaterial andererseits ein sogenannter Schutzfaktor in Bezug auf PAK von deutlich mehr als 3.000 erreichen, wohingegen dieser Schutzfaktor im Fall einer Kombination aus derselben Schutzoberbekleidung zusammen mit handelsüblicher Unterwäsche nur bei etwa 15 liegt. Der sogenannte Schutzfaktor in Bezug auf PAK stellt den Kehrwert der Penetration in Bezug auf PAK dar, d. h. wenn z. B. der Schutzfaktor 100 beträgt, bedeutet dies, dass nicht mehr als 1/100 (= ein Hundertstel) der PAK-Kontaminationen das Material durchdringen; ein Schutzfaktor von 100 bedeutet somit eine Penetration bzw. einen Durchbruch von nur 1 % der PAK-Kontaminationen.

Die signifikant gesteigerte PAK Schutzwirkung infolge der Verwendung der erfindungsgemäß eingesetzten Schutzbekleidung bzw. des erfindungsgemäß eingesetzten Schutzmaterials - im Vergleich zu einer herkömmlichen Schutzkombination der vorgenannten Art - bleibt vollkommen überraschend auch noch nach mehreren entsprechenden Brandeinsätzen unter PAK-Einwirkung und selbst noch nach mehrfacher Wäsche der erfindungsgemäß eingesetzten Schutzbekleidung bzw. des erfindungsgemäß eingesetzten Schutzmaterials zumindest im Wesentlichen erhalten.

Weiterführende Testungen haben zudem gezeigt, dass nur bei Verwendung aller zuvor aufgeführter Einzelkomponenten bzw. Einzelbestandteile der erfindungsgemäß eingesetzten Schutzbekleidung bzw. des erfindungsgemäß eingesetzten Schutzmaterials (und zwar in ihrer speziellen wie zielgerichteten Kombination und Abfolge) der gewünschte Hochleistungsschutzeffekt gegenüber einer Kontamination und Penetration von PAK sowohl in gasförmiger als auch in partikulär gebundener Form erreicht werden kann, d. h. bei Veränderung des Aufbaus, insbesondere Veränderung oder Weglassen von Einzelkomponenten bzw. Einzelbestandteilen, und/oder bei Änderung von deren Abfolge kann die zuvor beschriebene Hochleistungsfähigkeit in Bezug auf die gegenüber PAK sowohl in gasförmiger als auch in partikulär gebundener Form bestehende Schutzwirkung nicht erreicht werden.

Über die gezielte Auswahl der Adsorberpartikel der Adsorptionsschicht kann die Leistungsfähigkeit bzw. Schutzleistung gegenüber PAK in der erfindungsgemäß eingesetzten Schutzbekleidung bzw. in dem erfindungsgemäß eingesetzten Schutzmaterial weiterführend gesteigert bzw. maßgeschneidert werden. Besonders gute Ergebnisse werden mit Aktivkohlepartikeln erzielt, insbesondere mit partikulärer Aktivkohle, vorzugsweise kornförmiger oder kugelförmiger Aktivkohle, wie sie nachfolgend noch im Detail beschrieben wird. Hierdurch wird eine besonders hohe Adsorptionsleistung in Bezug auf die unschädlich zu machenden PAK erreicht, so dass eine besonders gute Leistungsfähigkeit erreicht wird.

Aufgrund der hohen Schutzleistungsfähigkeit gegenüber PAK einerseits und aufgrund der Beständigkeit der eingesetzten Materialien der erfindungsgemäß eingesetzten Schutzbekleidung bzw. des erfindungsgemäß eingesetzten Schutzmaterials andererseits ergibt sich zudem eine besonders hohe Langlebigkeit und Beständigkeit, insbesondere Trage- und/oder Verschleißbeständigkeit, so dass das erfindungsgemäße Konzept in hohem Maße ökonomisch wie effizient ist.

Da die erfindungsgemäß eingesetzte Schutzbekleidung bzw. das erfindungsgemäß eingesetzte Schutzmaterial ohne Weiteres nach einem Einsatz wieder dekontaminiert und regeneriert werden kann, insbesondere durch Wäsche, ohne dass die Schutzleistung gegenüber PAK in nennenswertem Maße reduziert wird, ist das erfindungsgemäße Konzept ohne Weiteres kostengünstig umsetzbar und in Bezug auf standardgemäße Bestandschutzausrüstungen auch ohne Weiteres nachrüstbar. Zudem ist hierdurch ein hoher Grad an Nachhaltigkeit gewährleistet.

Insgesamt resultiert somit in Bezug auf die vorliegende Erfindung ein hocheffizientes wie äußerst ökonomisches und darüber hinaus auch hochgradig nachhaltiges Konzept zur Erzielung einer Hochleistungsschutzfunktion gegenüber polyzyklischen aromatischen Kohlenwasserstoffen sowohl in gasförmiger als auch in partikulär gebundener Form, so dass mit der vorliegenden Erfindung ein hochwirksamer Schutz von Personen gegenüber einer Einwirkung und/oder Kontamination von aus einer Kontaminationsquelle freigesetzten polyzyklischen aromatischen Kohlenwasserstoffen bei Aufenthalt und/oder Tätigkeit in Örtlichkeiten, in welchen PAK freigesetzt oder vorhanden sind, bzw. ein hochwirksamer Schutz vor einer Einwirkung von PAK ausgesetzten Personen gegenüber einer PAK-Kontamination, insbesondere zur Verhinderung oder Minimierung einer PAK-Kontamination, bereitgestellt werden kann, wobei von besonderem Vorteil ist, dass das erfindungsgemäße Konzept erforderlichenfalls in Kombination mit einer in dem betreffenden Bereich bestehenden bzw. existenten oder üblichen Schutzoberbekleidung, insbesondere Arbeitsschutzoberbekleidung, vorzugsweise persönlichen Schutzausrüstung (PSA), umsetzbar bzw. realisierbar ist.

Im Ergebnis resultiert somit ein hocheffizientes und leistungsstarkes sowie extrem ökonomisches und darüber hinaus hochgradig nachhaltiges Schutzkonzept gegenüber polyzyklischen aromatischen Kohlenwasserstoffen in gasförmiger wie partikulär gebundener Form zum Schutz von Personen gegenüber PAK-Kontaminationen.

Im Nachfolgenden wird die vorliegende Erfindung anhand von bevorzugte Ausführungsformen bzw. Ausführungsbeispiele darstellenden Zeichnungen bzw. Figurendarstellungen beschrieben, wobei die diesbezüglichen Ausführungen für sämtliche erfindungsgemäße Aspekte gelten und wobei die entsprechenden bevorzugten Ausführungsformen keinesfalls beschränkend sind.

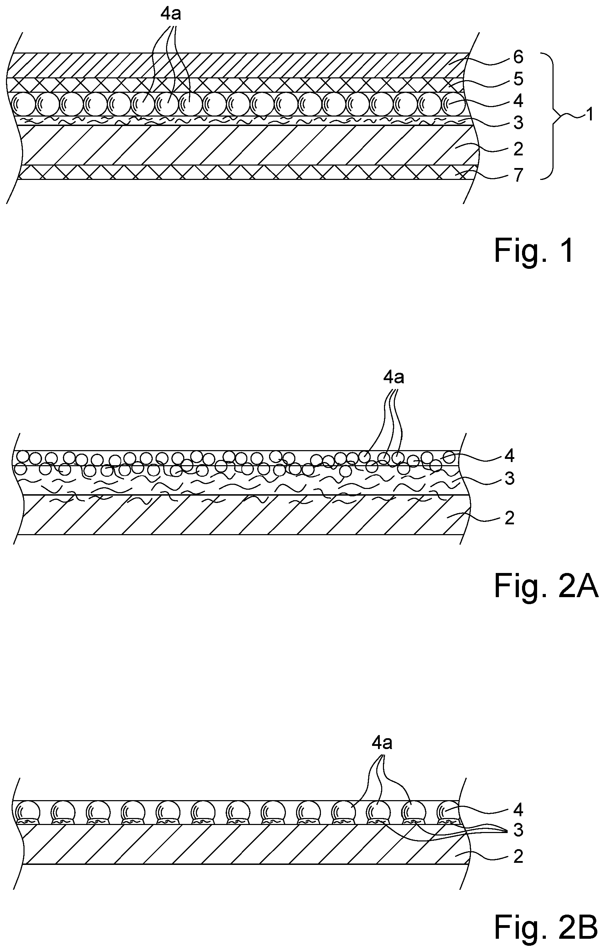

In den Figurendarstellungen zeigt
- Fig. 1: eine Querschnittdarstellung einer erfindungsgemäß eingesetzten Schutzbekleidung 8 bzw. eines erfindungsgemäß eingesetzten Schutzmaterials 1 gemäß einer besonderen Ausführungsform der Erfindung, wobei die Schutzbekleidung 8 bzw. das Schutzmaterial 1 in der in Fig. 1 dargestellten Abfolge eine textile Trägerschicht 2, eine Haftmittelschicht 3, eine Adsorptionsschicht 4 mit einer Vielzahl einzelner Adsorberpartikel 4a, eine Partikel- und/oder Aerosolfilterschicht 5, eine optionale Abdeckschicht 6 sowie eine ebenfalls optionale weitere oder zweite Abdeckschicht 7 aufweist;
- Fig. 2A: eine Teilquerschnittdarstellung einer erfindungsgemäß eingesetzten Schutzbekleidung 8 bzw. eines erfindungsgemäß eingesetzten textilen Schutzmaterials 1 (nämlich nur im Umfang von textiler Trägerschicht 2, Haftmittelschicht 3 und Adsorptionsschicht 4 mit einer Vielzahl einzelner Adsorberpartikel 4a) gemäß einer ersten besonderen und zu Fig. 2B alternativen Ausführungsform der Erfindung, wonach die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines getrockneten und/oder ausgehärteten, insbesondere vernetzten, gebrochenen Klebstoffpolymerschaums auf die textile Trägerschicht 2 aufgebracht und/oder aufgetragen ist;
- Fig. 2B: eine Teilquerschnittdarstellung einer erfindungsgemäß eingesetzten Schutzbekleidung 8 bzw. eines erfindungsgemäß eingesetzten textilen Schutzmaterials 1 (nämlich nur im Umfang von textiler Trägerschicht 2, Haftmittelschicht 3 und Adsorptionsschicht 4 mit einer Vielzahl einzelner Adsorberpartikel 4a) gemäß einer zweiten besonderen und zu Fig. 2A alternativen Ausführungsform der Erfindung, wonach die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die textile Trägerschicht 2 aufgebracht und/oder aufgetragen ist, wobei die Klebstoffschicht in Form eines Rasters einer Vielzahl von über die Trägerschicht 2 verteilten einzelnen (d. h. nicht-zusammenhängenden bzw. nicht-verbundenen) Klebstoff(polymer)-punkten ausgebildet ist;

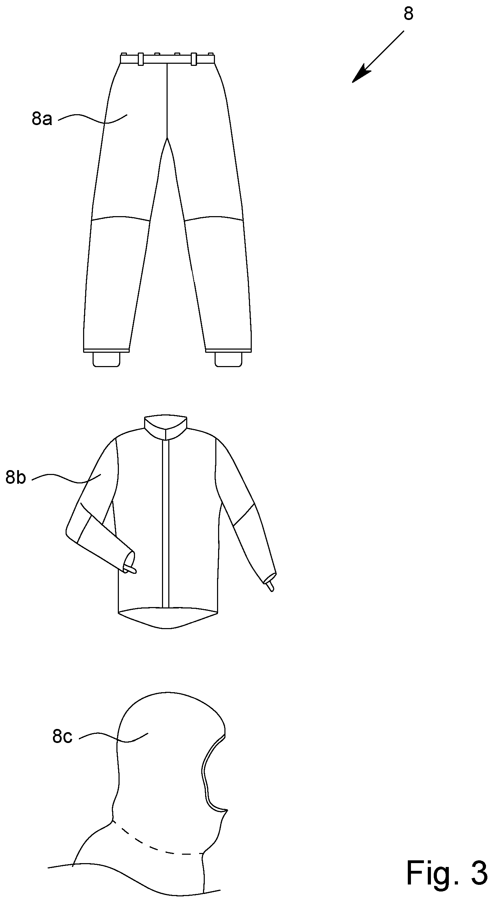

- Fig. 3: eine schematische Darstellung einer erfindungsgemäß eingesetzten Schutzbekleidung 8 gemäß einer besonderen Ausführungsform der Erfindung, wobei die Schutzbekleidung 8 als ein Schutzbeinkleid 8a, insbesondere Schutzhose, und/oder als ein Schutzoberteil 8b, insbesondere Schutzhemd, Schutz-Shirt oder Schutzpullover, insbesondere einschließlich Bedeckung der Arme, und/oder als eine Schutzkopfbedeckung 8c, insbesondere Schutzkopfhaube oder Schutzbalaklava, vorliegt und/oder ausgebildet ist, insbesondere wobei die Schutzbekleidung 8 bevorzugt als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist.

Die die vorliegende Erfindung betreffenden Figurendarstellungen, d. h. die vorstehend genannten Figuren Fig. 1, Figs. 2A und 2B sowie Fig. 3, veranschaulichen und verdeutlichen dabei das erfindungsgemäße Konzept anhand bevorzugter Ausführungsformen bzw. Ausführungsbeispiele, wie sie in den zuvor genannten Zeichnungen bzw. Figurendarstellungen in nicht-beschränkender Weise dargestellt und beschrieben sind.

Wie zuvor beschrieben, zeigt Fig. 1 eine Querschnittdarstellung einer erfindungsgemäß eingesetzten Schutzbekleidung 8 bzw. eines erfindungsgemäß eingesetzten Schutzmaterials 1 gemäß einer besonderen Ausführungsform der Erfindung, wobei die Schutzbekleidung 8 bzw. das Schutzmaterial 1 in der in Fig. 1 dargestellten Abfolge eine textile Trägerschicht 2, eine Haftmittelschicht 3, eine Adsorptionsschicht 4 mit einer Vielzahl einzelner Adsorberpartikel 4a, eine Partikel- und/oder Aerosolfilterschicht 5, eine optionale Abdeckschicht 6 sowie eine ebenfalls optionale weitere oder zweite Abdeckschicht 7 aufweist. Die Beschaffenheit und weitere Eigenschaften der erfindungsgemäß eingesetzten Schutzbekleidung 8 bzw. des erfindungsgemäß eingesetzten Schutzmaterials 1 sowie der einzelnen Schichten 2, 3, 4, 5, 6 und 7 werden nachfolgend noch im Detail im Zusammenhang mit den verschiedenen Erfindungsaspekten beschrieben.

Wie Fig. 1 zeigt, ist das textile Schutzmaterial 1 als ein mehrlagiges, eine Mehrzahl von miteinander verbundenen Lagen bzw. Schichten 2, 3, 4, 5, 6 und 7 aufweisendes textiles Verbundmaterial ausgebildet. Die einzelnen Lagen bzw. Schichten 2, 3, 4, 5, 6 und 7 sind bevorzugt laminiert bzw. mittels Laminierung miteinander verbunden.

Wie ebenfalls zuvor dargelegt, zeigt Fig. 2A eine Teilquerschnittdarstellung einer erfindungsgemäß eingesetzten Schutzbekleidung 8 bzw. eines erfindungsgemäß eingesetzten textilen Schutzmaterials 1 (nämlich nur im Umfang von textiler Trägerschicht 2, Haftmittelschicht 3 und Adsorptionsschicht 4 mit einer Vielzahl einzelner Adsorberpartikel 4a) gemäß einer ersten und zu Fig. 2B alternativen Ausführungsform der Erfindung, wonach die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines getrockneten und/oder ausgehärteten, insbesondere vernetzten, gebrochenen Klebstoffpolymerschaums auf die textile Trägerschicht 2 aufgebracht und/oder aufgetragen ist. Weitergehende Einzelheiten zu dieser ersten besonderen und zu Fig. 2B alternativen Ausführungsform, insbesondere bezüglich der Beschaffenheit und weiteren Eigenschaften der Trägerschicht 2, der Haftmittelschicht 3 und der Adsorptionsschicht 4 sowie der Adsorberpartikel 4a, werden nachfolgend noch im Detail im Zusammenhang mit den verschiedenen Erfindungsaspekten beschrieben.

Wie gleichermaßen zuvor dargelegt, zeigt Fig. 2B eine Teilquerschnittdarstellung einer erfindungsgemäß eingesetzten Schutzbekleidung 8 bzw. eines erfindungsgemäß eingesetzten textilen Schutzmaterials 1 (nämlich nur im Umfang von textiler Trägerschicht 2, Haftmittelschicht 3 und Adsorptionsschicht 4 mit einer Vielzahl einzelner Adsorberpartikel 4a) gemäß einer zweiten besonderen und zu Fig. 2A alternativen Ausführungsform der Erfindung, wonach die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die textile Trägerschicht 2 aufgebracht und/oder aufgetragen ist, wobei die Klebstoffschicht in Form eines Rasters einer Vielzahl von über die Trägerschicht 2 verteilten einzelnen (d. h. nicht-zusammenhängenden bzw. nicht-verbundenen) Klebstoff(polymer)punkten ausgebildet ist. Weitergehende Einzelheiten zu dieser zweiten besonderen und zu Fig. 2A alternativen Ausführungsform, insbesondere bezüglich der Beschaffenheit und weiteren Eigenschaften der Trägerschicht 2, der Haftmittelschicht 3 und der Adsorptionsschicht 4 sowie der Adsorberpartikel 4a, werden nachfolgend noch im Detail im Zusammenhang mit den verschiedenen Erfindungsaspekten beschrieben.

Schließlich zeigt Fig. 3 eine schematische Darstellung einer erfindungsgemäß eingesetzten Schutzbekleidung 8 gemäß einer besonderen Ausführungsform der Erfindung, wobei die Schutzbekleidung 8 als ein Schutzbeinkleid 8a, insbesondere Schutzhose, und/oder als ein Schutzoberteil 8b, insbesondere Schutzhemd, Schutz-Shirt oder Schutzpullover, insbesondere einschließlich Bedeckung der Arme, und/oder als eine Schutzkopfbedeckung 8c, insbesondere Schutzkopfhaube oder Schutzbalaklava, vorliegt und/oder ausgebildet ist. Insbesondere bevorzugt ist es dabei, dass die Schutzbekleidung 8 als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist; hierdurch wird eine besonders optimierte Schutzwirkung erzielt werden. Weitergehende Einzelheiten, insbesondere bezüglich der Beschaffenheit und weiterer Eigenschaften der erfindungsgemäß eingesetzten Schutzbekleidung 8 bzw. des erfindungsgemäß eingesetzten Schutzmaterials 1 sowie der einzelnen Schichten 2, 3, 4, 5, 6 und 7, werden nachfolgend noch im Detail im Zusammenhang mit den verschiedenen Erfindungsaspekten beschrieben.

Nachfolgend wird das erfindungsgemäße Konzept gemäß den verschiedenen Erfindungsaspekten weiterführend erläutert und im Detail dargelegt.

Wie zuvor bereits ausgeführt (und wie gleichermaßen in den Figurendarstellungen gemäß Figs. 1, 2A, 2B und 3 illustriert), ist Gegenstand der vorliegenden Erfindung - gemäß einem **ersten** Aspekt der vorliegenden Erfindung - die Verwendung einer Schutzbekleidung 8 (d. h. textilen Schutzbekleidung), bevorzugt in Form einer Schutzunterbekleidung (= Schutzunterwäsche), zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination"),
wobei die Schutzbekleidung 8 ein textiles Schutzmaterial 1 aufweist oder hieraus gebildet ist,
wobei das textile Schutzmaterial 1 als ein mehrlagiges, eine Mehrzahl von miteinander verbundenen (bevorzugt laminierten bzw. mittels Laminierung miteinander verbundenen) Lagen (= Schichten) 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde vorliegt und/oder ausgebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde, welches eine Vielzahl einzelner Textilfasern umfasst oder hieraus gebildet ist, vorliegt und/oder ausgebildet ist,
   (e) gegebenenfalls eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde vorliegt und/oder ausgebildet ist.

Die mit dem erfindungsgemäßen Konzept im Allgemeinen verbundenen Vorteile und Besonderheiten wurden eingangs bereits im Detail geschildert und dargelegt, so dass zur Vermeidung unnötiger Wiederholungen auf die vorstehenden diesbezüglichen Ausführungen verwiesen werden kann.

Wie ebenfalls bereits zuvor ausgeführt, kann es erfindungsgemäß gemäß einer besonderen Ausführungsform zudem vorgesehen sein, dass das textile Schutzmaterial 1 außerdem die folgende Schicht 7 aufweist:
(f) eine auf der der Haftmittelschicht 3 abgewandten Seite der textilen Trägerschicht 2 angeordnete und/oder hiermit verbundene weitere oder zweite Abdeckschicht 7, wobei die weitere oder zweite Abdeckschicht 7 als vorzugsweise gasdurchlässiges textiles Flächengebilde vorliegt und/oder ausgebildet ist.

Mit anderen Worten kann es erfindungsgemäß gemäß einer besonderen Ausführungsform somit vorgesehen sein, dass das textile Schutzmaterial 1 außerdem eine auf der der Haftmittelschicht 3 abgewandten Seite der textilen Trägerschicht 2 angeordnete und/oder hiermit verbundene weitere oder zweite Abdeckschicht 7 aufweist, wobei die weitere oder zweite Abdeckschicht 7 als vorzugsweise gasdurchlässiges textiles Flächengebilde vorliegt und/oder ausgebildet ist.

Die optionale weitere oder zweite Abdeckschicht 7 dient insbesondere zum zusätzlichen Schutz und zur weitergehenden Steigerung des Tragekomforts und zudem zur Erhöhung der Verschleißbeständigkeit.

Entsprechend einer bevorzugten Ausführungsform der vorliegenden Erfindung gemäß diesem ersten Erfindungsaspekt (und wie gleichermaßen in den Figurendarstellungen gemäß Figs. 1, 2A, 2B und 3 illustriert) ist Gegenstand der vorliegenden Erfindung die Verwendung einer Schutzbekleidung 8 (d. h. textilen Schutzbekleidung), bevorzugt in Form einer Schutzunterbekleidung (= Schutzunterwäsche), zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination"), insbesondere eine Verwendung wie zuvor gemäß dem ersten Erfindungsaspekt beschrieben,
wobei die Schutzbekleidung 8 ein textiles Schutzmaterial 1 aufweist oder hieraus gebildet ist,
wobei das textile Schutzmaterial 1 als ein mehrlagiges, eine Mehrzahl von miteinander verbundenen (bevorzugt laminierten bzw. mittels Laminierung miteinander verbundenen) Lagen (= Schichten) 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde vorliegt und/oder ausgebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde, welches eine Vielzahl einzelner Textilfasern umfasst oder hieraus gebildet ist, vorliegt und/oder ausgebildet ist,
   (e) eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde vorliegt und/oder ausgebildet ist.

Gemäß einer besonderen Ausführungsform gemäß dem ersten Erfindungsaspekt kann es vorgesehen sein, dass die Schutzbekleidung 8 in Form mindestens eines Schutzbekleidungsstücks 8a, 8b, 8c, vorzugsweise in Form einer Mehrzahl von insbesondere zueinander komplementärer Schutzbekleidungsstücke 8a, 8b, 8c, bevorzugt in Form einer Schutzunterbekleidung (Schutzunterwäsche), ausgebildet ist und/oder vorliegt. Diesbezüglich kann es erfindungsgemäß insbesondere vorgesehen sein, dass das Schutzbekleidungsstück 8a, 8b, 8c insbesondere ausgewählt ist aus und/oder vorliegt in Form von: (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen; bevorzugt ausgewählt ist aus und/oder vorliegt in Form von: (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen. Hierdurch kann eine optimale Schutzwirkung gegenüber PAK erzielt werden.

Weiterhin kann es erfindungsgemäß vorgesehen sein, dass die Schutzbekleidung 8 mindestens ein Schutzbekleidungsstück 8a, 8b, 8c, vorzugsweise eine Mehrzahl von insbesondere zueinander komplementärer Schutzbekleidungsstücke 8a, 8b, 8c, bevorzugt in Form einer Schutzunterbekleidung (Schutzunterwäsche), aufweist. Diesbezüglich kann es erfindungsgemäß insbesondere vorgesehen sein, dass das Schutzbekleidungsstück 8a, 8b, 8c insbesondere ausgewählt ist aus und/oder vorliegt in Form von: (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen; bevorzugt ausgewählt ist aus und/oder vorliegt in Form von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen.

Weiterhin ist es gemäß einer bevorzugten Ausführungsform der vorliegenden Erfindung vorgesehen, dass die Schutzbekleidung 8, bevorzugt in Form einer Schutzunterbekleidung (Schutzunterwäsche), zum Schutz von Unterkörper, Oberkörper und Kopf vorliegt und/oder ausgebildet ist. Insbesondere kann es in diesem Zusammenhang vorgesehen sein, dass die Schutzbekleidung 8 eine Mehrzahl von insbesondere zueinander komplementärer Schutzbekleidungsstücke 8a, 8b, 8c aufweist, insbesondere ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen, bevorzugt ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen.

Erfindungsgemäß bevorzugt ist es, dass die Schutzbekleidung 8 in Form einer Schutzunterbekleidung (Schutzunterwäsche) eingesetzt wird und/oder vorliegt. Insbesondere kann es dabei vorgesehen sein, dass die Schutzbekleidung 8 als eine Kombination von (i) Schutzbeinkleid (8a), insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist. Auf diese Weise kann eine besonders gute Schutzwirkung gegenüber PAK erzielt werden.

Gemäß einer erfindungsgemäß besonders bevorzugten Ausführungsform kann es vorgesehen sein, dass die Schutzbekleidung 8 in Form einer Schutzunterbekleidung (Schutzunterwäsche), eingesetzt wird und/oder vorliegt, wobei die Schutzbekleidung 8 als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist. Hierdurch kann eine umfängliche und besonders gute Schutzwirkung gegenüber PAK erreicht werden.

Im Rahmen der vorliegenden Erfindung ist es vorgesehen, dass die Schutzbekleidung 8 und/oder das Schutzmaterial 1 bei der Verwendung und/oder im Anwendungszustand, insbesondere im Tragezustand, derart angeordnet und/oder eingesetzt wird, dass die Partikel- und/oder Aerosolfilterschicht 5 und/oder die gegebenenfalls vorhandene Abdeckschicht 6 der Kontaminationsquelle zugewandt ist/sind und/oder dass die Partikel- und/oder Aerosolfilterschicht 5 und/oder die gegebenenfalls vorhandene Abdeckschicht 6 vom Träger der Schutzbekleidung 8 abgewandt ist/sind und/oder dass die Partikel- und/oder Aerosolfilterschicht 5 und/oder die gegebenenfalls vorhandene Abdeckschicht 6 eine Außenschicht der Schutzbekleidung 8 und/oder des Schutzmaterials 1 bildet/bilden.

Mit anderen Worten ist es im Rahmen der vorliegenden Erfindung vorgesehen, dass die Schutzbekleidung 8 und/oder das Schutzmaterial 1 bei der Verwendung und/oder im Anwendungszustand, insbesondere im Tragezustand, derart angeordnet und/oder eingesetzt wird, dass die textile Trägerschicht 2 und/oder die gegebenenfalls vorhandene weitere oder zweite Abdeckschicht 7 von der Kontaminationsquelle abgewandt ist/sind und/oder dass die textile Trägerschicht 2 und/oder die gegebenenfalls vorhandene weitere oder zweite Abdeckschicht 7 dem Träger der Schutzbekleidung zugewandt ist/sind und/oder dass die textile Trägerschicht 2 und/oder die gegebenenfalls vorhandene weitere oder zweite Abdeckschicht 7 eine Innenschicht der Schutzbekleidung 8 und/oder des Schutzmaterials 1 bildet/bilden.

Wie zuvor bereits dargelegt, wird auf diese Weise sichergestellt, dass die unschädlich zu machenden, freigesetzten polyzyklischen aromatischen Kohlenwasserstoffe (PAK), welche bei hohen Umgebungstemperaturen (z. B. Brandrauch) üblicherweise sowohl in gasförmiger Form als auch in partikulär gebundener Form (z. B. PAK-beladene Ruß-, Rauchgas- und Staubpartikel) vorliegen, zunächst auf die (optionale) Abdeckschicht 6 und dann auf die Partikel und/oder Aerosolfilterschicht 5 auftreffen bzw. hiermit in Kontakt gebracht werden, bevor die dann noch verbleibenden PAK-Kontaminationen mit der Adsorptionsschicht 4 bzw. den dort vorhandenen Adsorberpartikeln 4a in Kontakt gebracht werden, einhergehend mit der zuvor geschilderten Wirkung.

Gemäß einer besonders bevorzugten Ausführungsform ist es vorgesehen, dass die Schutzbekleidung 8 als Schutzunterbekleidung (Schutzunterwäsche) eingesetzt wird. Hierdurch können die zuvor geschilderten Vorteile und Besonderheiten des erfindungsgemäßen Konzepts realisiert werden. Insbesondere erlaubt dies ohne Weiteres eine nachträgliche Ausrüstung in Bezug auf bestehende bzw. existierende Schutzoberbekleidungen in dem betreffenden Bereich (z. B. in komplementärer Ergänzung zu einer Schutzoberbekleidung für Feuerwehreinsatzkräfte nach DIN EN 469 etc.).

Wie zuvor geschildert, ist es erfindungsgemäß besonders bevorzugt, dass die Schutzbekleidung 8 als Schutzunterbekleidung (Schutzunterwäsche) in Kombination mit einer Schutzoberbekleidung, insbesondere in Kombination mit einer Arbeitsschutzoberbekleidung, vorzugsweise in Kombination mit einer persönlichen Schutzausrüstung, eingesetzt wird. Für weitergehende diesbezügliche Einzelheiten kann zudem auf die vorstehenden Ausführungen im Zusammenhang mit den erfindungsgemäßen Vorteilen und Besonderheiten verwiesen werden.

Weiterer vorliegend beschriebener Gegenstand - gemäß einem vorliegend beschriebenen Aspekt - ist zudem (wie auch gleichermaßen in den Figurendarstellungen gemäß Figs. 1, 2A, 2B und 3 illustriert) die Verwendung eines textilen Schutzmaterials 1, insbesondere in Form einer Schutzbekleidung 8, bevorzugt in Form einer Schutzunterbekleidung (= Schutzunterwäsche), zur Verhinderung oder Minimierung einer Kontamination mit aus einer Kontaminationsquelle freigesetzten polyzyklischen aromatischen Kohlenwasserstoffen ("PAK-Kontamination"), insbesondere zum Schutz von einer Einwirkung von polyzyklischen aromatischen Kohlenwasserstoffen (PAKs) ausgesetzten Personen,
wobei das textile Schutzmaterial 1 als ein mehrlagiges, eine Mehrzahl von miteinander verbundenen Lagen 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde vorliegt und/oder ausgebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde, welches eine Vielzahl einzelner Textilfasern umfasst oder hieraus gebildet ist, vorliegt und/oder ausgebildet ist,
   (e) gegebenenfalls eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde vorliegt und/oder ausgebildet ist.

In diesem Zusammenhang kann es erfindungsgemäß auch entsprechend dem vorliegend beschriebenen Aspekt gemäß einer besonderen Ausführungsform zudem vorgesehen sein, dass das textile Schutzmaterial 1 außerdem die folgende Schicht 7 aufweist:
(f) eine auf der der Haftmittelschicht 3 abgewandten Seite der textilen Trägerschicht 2 angeordnete und/oder hiermit verbundene weitere oder zweite Abdeckschicht 7, wobei die weitere oder zweite Abdeckschicht 7 als vorzugsweise gasdurchlässiges textiles Flächengebilde vorliegt und/oder ausgebildet ist-

Mit anderen Worten kann es vorliegend auch entsprechend dem vorliegend beschriebenen Aspekt gemäß einer besonderen Ausführungsform somit vorgesehen sein, dass das textile Schutzmaterial 1 außerdem eine auf der der Haftmittelschicht 3 abgewandten Seite der textilen Trägerschicht 2 angeordnete und/oder hiermit verbundene weitere oder zweite Abdeckschicht 7 aufweist, wobei die weitere oder zweite Abdeckschicht 7 als vorzugsweise gasdurchlässiges textiles Flächengebilde vorliegt und/oder ausgebildet ist.

Die optionale weitere oder zweite Abdeckschicht 7 dient insbesondere zum zusätzlichen Schutz und zur weitergehenden Steigerung des Tragekomforts und zudem zur Erhöhung der Verschleißbeständigkeit.

Entsprechend einer bevorzugten Ausführungsform gemäß diesem vorliegend beschriebenen Aspekt (wie auch gleichermaßen in den Figurendarstellungen gemäß Figs. 1, 2A, 2B und 3 illustriert) ist vorliegend beschriebener Gegenstand die Verwendung eines textilen Schutzmaterials 1, insbesondere in Form einer Schutzbekleidung 8, bevorzugt in Form einer Schutzunterbekleidung (Schutzunterwäsche), zur Verhinderung oder Minimierung einer Kontamination mit aus einer Kontaminationsquelle freigesetzten polyzyklischen aromatischen Kohlenwasserstoffen ("PAK-Kontamination"), insbesondere zum Schutz von einer Einwirkung von polyzyklischen aromatischen Kohlenwasserstoffen (PAKs) ausgesetzten Personen, insbesondere eine Verwendung wie zuvor gemäß dem vorliegend beschriebenen Aspekt beschrieben,
wobei das textile Schutzmaterial 1 als ein mehrlagiges, eine Mehrzahl von miteinander verbundenen Lagen 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde vorliegt und/oder ausgebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde, welches eine Vielzahl einzelner Textilfasern umfasst oder hieraus gebildet ist, vorliegt und/oder ausgebildet ist,
   (e) eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde vorliegt und/oder ausgebildet ist.

Gemäß einer besonderen Ausführungsform nach dem vorliegend beschriebenen Aspekt kann es vorgesehen sein, dass das Schutzmaterial 1 in Form einer Schutzbekleidung 8, insbesondere in Form mindestens eines Schutzbekleidungsstücks 8a, 8b, 8c, vorzugsweise in Form einer Mehrzahl von insbesondere zueinander komplementärer Schutzbekleidungsstücke 8a, 8b, 8c, bevorzugt in Form einer Schutzunterbekleidung (Schutzunterwäsche), ausgebildet ist und/oder vorliegt. Diesbezüglich kann es insbesondere vorgesehen sein, dass die Schutzbekleidung 8 insbesondere ausgewählt ist aus und/oder vorliegt in Form von: (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen, bevorzugt ausgewählt ist aus und/oder vorliegt in Form von: (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen. Auf diese Weise wird eine besonders hohe PAK-Schutzleistung gewährleistet.

Gemäß einer weiteren besonderen Ausführungsform nach dem vorliegend beschriebenen Aspekt kann es weiterhin vorgesehen sein, dass das Schutzmaterial 1 in Form einer Schutzbekleidung 8, bevorzugt in Form einer Schutzunterbekleidung (Schutzunterwäsche), zum Schutz von Unterkörper, Oberkörper und Kopf vorliegt und/oder ausgebildet ist. Diesbezüglich kann es insbesondere vorgesehen sein, dass die Schutzbekleidung 8 eine Mehrzahl von insbesondere zueinander komplementärer Schutzbekleidungsstücke 8a, 8b, 8c aufweist, insbesondere ausgewählt aus und/oder in Form von: (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen, bevorzugt ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen. Auf diese Weise wird eine besonders hohe PAK-Schutzleistung gewährleistet.

Weiterhin kann es nach einer bevorzugten Ausführungsform gemäß dem vorliegend beschriebenen Aspekt vorgesehen sein, dass das Schutzmaterial 1 als eine Schutzbekleidung 8 in Form einer Schutzunterbekleidung (Schutzunterwäsche) eingesetzt wird und/oder vorliegt.

Darüber hinaus kann es bezüglich des vorliegend beschriebenen Aspekts vorgesehen sein, dass das Schutzmaterial 1 als eine Schutzbekleidung 8 in Form einer Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist.

Gemäß einer bevorzugten Ausführungsform nach dem vorliegend beschriebenen Aspekt kann es im Rahmen der Verwendung vorgesehen sein, dass das Schutzmaterial 1 als eine Schutzbekleidung 8 in Form einer Schutzunterbekleidung (Schutzunterwäsche) eingesetzt wird und/oder vorliegt, wobei die Schutzbekleidung 8 als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist.

Bezüglich der Verwendung des Schutzmaterials 1 bei der Verwendung bzw. im Anwendungszustand ist Folgendes auszuführen: Erfindungsgemäß ist es vorgesehen, dass das Schutzmaterial 1 bei der Verwendung und/oder im Anwendungszustand derart angeordnet und/oder eingesetzt wird, dass die Partikel- und/oder Aerosolfilterschicht 5 und/oder die gegebenenfalls vorhandene Abdeckschicht 6 der Kontaminationsquelle zugewandt ist/sind. Mit anderen Worten ist es erfindungsgemäß vorgesehen, dass das Schutzmaterial 1 bei der Verwendung und/oder im Anwendungszustand derart angeordnet und/oder eingesetzt wird, dass die textile Trägerschicht 2 und/oder die gegebenenfalls vorhandene weitere oder zweite Abdeckschicht 7 von der Kontaminationsquelle abgewandt ist/sind. Dies ist mit den zuvor geschilderten Vorteilen und Besonderheiten verbunden.

Mit anderen Worten ist es im Rahmen der erfindungsgemäßen Verwendung vorgesehen, dass das Schutzmaterial 1 in Form einer Schutzbekleidung 8, bevorzugt in Form einer Schutzunterbekleidung (Schutzunterwäsche), eingesetzt wird und/oder vorliegt, wobei die Schutzbekleidung 8 und/oder das Schutzmaterial 1 bei der Verwendung und/oder im Anwendungszustand, insbesondere im Tragezustand, derart angeordnet und/oder eingesetzt wird, dass die Partikel- und/oder Aerosolfilterschicht 5 und/oder die gegebenenfalls vorhandene Abdeckschicht 6 der Kontaminationsquelle zugewandt ist/sind und/oder dass die Partikel- und/oder Aerosolfilterschicht 5 und/oder die gegebenenfalls vorhandene Abdeckschicht 6 vom Träger der Schutzbekleidung 8 abgewandt ist/sind und/oder dass die Partikel- und/oder Aerosolfilterschicht 5 und/oder die gegebenenfalls vorhandene Abdeckschicht 6 eine Außenschicht der Schutzbekleidung 8 und/oder des Schutzmaterials 1 bildet/bilden. Dies ist mit den zuvor geschilderten Vorteilen und Besonderheiten verbunden.

Im Rahmen der vorliegenden Erfindung wird bei der erfindungsgemäßen Verwendung in der Weise vorgegangen, dass das Schutzmaterial 1 in Form einer Schutzbekleidung 8, bevorzugt in Form einer Schutzunterbekleidung (Schutzunterwäsche), eingesetzt wird und/oder vorliegt, wobei die Schutzbekleidung 8 und/oder das Schutzmaterial 1 bei der Verwendung und/oder im Anwendungszustand, insbesondere im Tragezustand, derart angeordnet und/oder eingesetzt wird, dass die textile Trägerschicht 2 und/oder die gegebenenfalls vorhandene weitere oder zweite Abdeckschicht 7 von der Kontaminationsquelle abgewandt ist/sind und/oder dass die textile Trägerschicht 2 und/oder die gegebenenfalls vorhandene weitere oder zweite Abdeckschicht 7 dem Träger der Schutzbekleidung zugewandt ist/sind und/oder dass die textile Trägerschicht 2 und/oder die gegebenenfalls vorhandene weitere oder zweite Abdeckschicht 7 eine Innenschicht der Schutzbekleidung 8 und/oder des Schutzmaterials 1 bildet/bilden. Dies ist mit den zuvor geschilderten Vorteilen und Besonderheiten verbunden.

Die nachfolgenden Ausführungen zur vorliegenden Erfindung beziehen sich sowohl auf die Verwendung gemäß dem ersten Erfindungsaspekt als auch auf die Verwendung gemäß dem weiteren vorliegend beschriebenen Aspekt.

Das Flächengewicht des erfindungsgemäß eingesetzten Schutzmaterials 1 bzw. der erfindungsgemäß eingesetzten Schutzbekleidung 8 kann in weiten Bereichen variieren. Üblicherweise ist es im Rahmen der vorliegenden Erfindung vorgesehen, dass das Schutzmaterial 1 und/oder die Schutzbekleidung 8 ein Gesamtflächengewicht (insbesondere bestimmt als Trockengewicht) im Bereich von 200 g/m² bis 1.000 g/m², insbesondere im Bereich von 225 g/m² bis 750 g/m², vorzugsweise im Bereich von 250 g/m² bis 650 g/m², besonders bevorzugt im Bereich von 275 g/m² bis 600 g/m², noch mehr bevorzugt im Bereich von 300 g/m² bis 450 g/m², aufweist, insbesondere bestimmt gemäß DIN EN 12127, vorzugsweise nach 1-stündiger Trocknung bei 105 °C. Auf diese Weise wird ein guter Tragekomfort bei gleichzeitig ausgezeichneter PAK-Schutzleistung gewährleistet.

Was das erfindungsgemäß eingesetzte Schutzmaterial 1 bzw. die erfindungsgemäß eingesetzte Schutzbekleidung 8 anbelangt, so kann dieses bzw. diese darüber hinaus grundsätzlich nicht-elastisch oder aber zumindest teilweise elastisch ausgebildet sein. Bevorzugt ist es insbesondere, wenn das erfindungsgemäß eingesetzte Schutzmaterial 1 bzw. die erfindungsgemäß eingesetzte Schutzbekleidung 8 zumindest teilweise elastisch ausgebildet ist, insbesondere wobei das erfindungsgemäß eingesetzte Schutzmaterial 1 bzw. die erfindungsgemäß eingesetzte Schutzbekleidung 8 zumindest in den Bereichen elastisch ausgebildet ist, in denen es im Gebrauchs- und/oder Tragezustand einer mechanischen Belastung, insbesondere Biege-, Zug- und/oder Dehnbelastung (Biege-, Zug- und/oder Dehnbeanspruchung), ausgesetzt ist (z. B. im Bereich der Knie, Armbeugen, Achseln, Leisten etc.).

Wie zuvor bereits ausgeführt, ist es erfindungsgemäß vorgesehen und bevorzugt, dass das Schutzmaterial 1 und/oder die Schutzbekleidung 8 gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist. Auf diese Weise wird ein besonders guter Tragekomfort erreicht, und dies ohne die ausgezeichnete PAK-Schutzleistung zu beeinträchtigen.

Die Gasdurchlässigkeit, insbesondere Luftdurchlässigkeit, des erfindungsgemäß eingesetzten Schutzmaterials 1 bzw. der erfindungsgemäß eingesetzten Schutzbekleidung 8 kann in weiten Bereichen variieren. Insbesondere kann das Schutzmaterial 1 und/oder die Schutzbekleidung 8 eine Gasdurchlässigkeit, insbesondere Luftdurchlässigkeit, bei einem Strömungswiderstand von 100 Pascal, insbesondere bestimmt gemäß DIN EN ISO 9237, von mindestens 0,5 mm/s, insbesondere von mindestens 1 mm/s, vorzugsweise von mindestens 2,5 mm/s, besonders bevorzugt von mindestens 3,5 mm/s, ganz besonders bevorzugt von mindestens 5 mm/s, aufweisen. Bevorzugt ist es, dass das Schutzmaterial 1 und/oder die Schutzbekleidung 8 eine Gasdurchlässigkeit, insbesondere Luftdurchlässigkeit, bei einem Strömungswiderstand von 100 Pascal, insbesondere bestimmt gemäß DIN EN ISO 9237, von bis zu 500 mm/s aufweisen. Weiterhin ist es bevorzugt, dass das Schutzmaterial 1 und/oder die Schutzbekleidung 8 eine Gasdurchlässigkeit, insbesondere Luftdurchlässigkeit, bei einem Strömungswiderstand von 100 Pascal, insbesondere bestimmt gemäß DIN EN ISO 9237, im Bereich von 0,5 mm/s bis 500 mm/s, insbesondere im Bereich von 1 mm/s bis 450 mm/s, vorzugsweise im Bereich von 2,5 mm/s bis 400 mm/s, besonders bevorzugt im Bereich von 3,5 mm/s bis 300 mm/s, ganz besonders bevorzugt im Bereich von 5 mm/s bis 250 mm/s, aufweist. Hierdurch wird ein besonders gute Tragekomfort bei gleichzeitig ausgezeichneter PAK-Schutzleistung erreicht.

Auch der Wasserdampfdurchgangswiderstand (Rₑₜ) kann in weiten Bereichen variieren: In diesem Zusammenhang ist es bevorzugt, dass das Schutzmaterial 1 und/oder die Schutzbekleidung 8 einen Wasserdampfdurchgangswiderstand (Rₑₜ), insbesondere bestimmt gemäß DIN EN 343:2019, von höchstens 15 m² Pa / Watt, insbesondere von höchstens 10 m² Pa / Watt, bevorzugt von höchstens 8 m² Pa / Watt, vorzugsweise von höchstens 7 m² Pa / Watt, noch mehr bevorzugt von höchstens 6 m² Pa / Watt, ganz besonders bevorzugt von höchstens 5 m² Pa / Watt, aufweist. Besonders bevorzugt ist es, dass das Schutzmaterial 1 und/oder die Schutzbekleidung 8 einen Wasserdampfdurchgangswiderstand (Rₑₜ) gemäß Klasse 4 der DIN EN 343:2019 aufweist, insbesondere einen Rₑₜ ≤ 15 m² Pa / Watt. Auf diese Weise wird gleichermaßen ein hoher Tragekomfort bei gleichzeitig guter Schutzleistung gewährleistet bzw. ermöglicht.

Auch die Dicke, insbesondere Gesamtquerschnittsdicke des erfindungsgemäß eingesetzten Schutzmaterials 1 bzw. der erfindungsgemäß eingesetzten Schutzbekleidung 8 kann in weiten Bereichen variieren: Insbesondere ist es im Rahmen der vorliegenden Erfindung vorgesehen, dass das Schutzmaterial 1 und/oder die Schutzbekleidung 8 eine Dicke, insbesondere Gesamtquerschnittsdicke, im Bereich von 0,25 mm bis 25 mm, insbesondere im Bereich von 0,5 mm bis 15 mm, bevorzugt im Bereich von 0,6 mm bis 10 mm, vorzugsweise im Bereich von 0,75 mm bis 5 mm, besonders bevorzugt im Bereich von 0,8 mm bis 2 mm, aufweist, insbesondere bestimmt gemäß DIN EN ISO 5084. Auf diese Weise wird gewährleistet, dass zum einen eine ausreichende PAK-Schutzleistung vorliegt und zum anderen ein guter Tragekomfort gewährleistet ist.

Für eine gute Verschleißbeständigkeit des erfindungsgemäß eingesetzten Schutzmaterials 1 bzw. der erfindungsgemäß eingesetzten Schutzbekleidung 8 ist es weiterhin von Vorteil, dass das eingesetzte Schutzmaterial 1 bzw. die eingesetzte Schutzbekleidung 8 über einen definierten Berstdruck und eine definierte Dehnungsbelastung bzw. Dehnungsfähigkeit (Emulation) und darüber hinaus über eine definierte Schrumpfung verfügt.

In diesem Zusammenhang ist es erfindungsgemäß insbesondere bevorzugt, dass das Schutzmaterial 1 und/oder die Schutzbekleidung 8 einen Berstdruck, insbesondere bestimmt nach DIN EN ISO 13938-2, von mindestens 50 kPa (Kilopascal), insbesondere von mindestens 75 kPa, vorzugsweise von mindestens 90 kPa, besonders bevorzugt von mindestens 100 kPa, aufweist.

Bevorzugterweise weist das Schutzmaterial 1 und/oder die Schutzbekleidung 8 einen Berstdruck, insbesondere bestimmt nach DIN EN ISO 13938-2, im Bereich von 50 kPa (Kilopascal) bis 1.000 kPa, insbesondere im Bereich von 75 kPa bis 800 kPa, vorzugsweise im Bereich von 90 kPa bis 600 kPa, besonders bevorzugt im Bereich von 100 kPa 500 kPa, auf. Wie zuvor ausgeführt, ist hierdurch gewährleistet, dass eine hohe Verschleißbeständigkeit vorliegt.

Weiterhin ist es in diesem Zusammenhang erfindungsgemäß insbesondere bevorzugt, dass das Schutzmaterial 1 und/oder die Schutzbekleidung 8 eine Höchstzugkraft und/oder Höchstzugkraftdehnung, bevorzugt in Längs- und Querrichtung, insbesondere bestimmt nach DIN EN ISO 13934-1, von mindestens 200 Newton, insbesondere von mindestens 225 Newton, vorzugsweise von mindestens 250 Newton, besonders bevorzugt von mindestens 275 Newton, aufweist.

Bevorzugterweise weist das Schutzmaterial 1 und/oder die Schutzbekleidung 8 eine Höchstzugkraft und/oder Höchstzugkraftdehnung, bevorzugt in Längs- und Querrichtung, insbesondere bestimmt nach DIN EN ISO 13934-1, im Bereich von 200 Newton bis 4.000 Newton, insbesondere im Bereich von 225 Newton bis 3.750 Newton, vorzugsweise im Bereich von 250 Newton bis 3.500 Newton, besonders bevorzugt im Bereich von 275 Newton 3.000 Newton, auf.

Weiterhin ist es erfindungsgemäß bevorzugt, dass das Schutzmaterial 1 und/oder die Schutzbekleidung 8 eine Dehnungsbelastung und/oder Dehnungsfähigkeit (Elongation) in Längs- und Querrichtung, bestimmt nach DIN 53835-14 bei 20 Newton, von mindestens 2,5 %, vorzugsweise von mindestens 5 %, aufweist. Insbesondere ist es bevorzugt, dass das Schutzmaterial 1 und/oder die Schutzbekleidung 8 eine Dehnungsbelastung und/oder Dehnungsfähigkeit (Elongation) in mindestens eine Richtung, insbesondere in Längs- oder Querrichtung, bestimmt nach DIN 53835-14 bei 20 Newton, von mindestens 2,5 %, vorzugsweise von mindestens 5 %, bevorzugt von mindestens 10 %, aufweist. Wie zuvor ausgeführt, ist hierdurch gewährleistet, dass eine hohe Verschleißbeständigkeit vorliegt.

Weiterhin ist es erfindungsgemäß bevorzugt, dass das Schutzmaterial 1 und/oder die Schutzbekleidung 8 eine Schrumpfung in Längs- und Querrichtung, bestimmt nach DIN EN 5077, von höchstens 10 %, vorzugsweise von höchstens 6 %, aufweist. In diesem Zusammenhang ist es besonders bevorzugt, dass das Schutzmaterial 1 und/oder die Schutzbekleidung 8 eine Schrumpfung in mindestens eine Richtung, insbesondere in Längs- oder Querrichtung, bestimmt nach DIN EN 5077, von höchstens 10 %, vorzugsweise von höchstens 6 %, bevorzugt von höchstens 3 %, aufweist. Auf diese Weise wird neben einer guten Verschleißbeständigkeit auch gewährleistet, dass das erfindungsgemäß eingesetzte Schutzmaterial 1 bzw. die erfindungsgemäß eingesetzte Schutzbekleidung 8 auch gegenüber einer Regenerationsbehandlung, insbesondere mittels Wäsche, beständig ist.

Wie eingangs bereits dargelegt, ist es erfindungsgemäß vorgesehen, dass das Schutzmaterial 1 und/oder die Schutzbekleidung 8 waschbar, insbesondere waschbar und trockenbar, ausgebildet ist. Dies ermöglicht eine gute Regenerierbarkeit und somit eine mehrfache Verwendung, so dass hierdurch die Kostenökonomie und Nachhaltigkeit in signifikanter Weise gesteigert wird.

Bezüglich der Schutzwirkung gegenüber partikulär gebundene PAK-Kontaminationen sind weitere Leistungseigenschaften des erfindungsgemäß eingesetzten Schutzmaterials 1 bzw. der Schutzbekleidung 8 von Bedeutung, insbesondere der mittlere Wirkungsgrad Eₘ nach DIN EN 779 (Juli 1993) der integrale Anfangsdurchlassgrad Dᵢ nach DIN EN 1822 (April 1998; DEHS-Aerosol, MPPS = 0,1 bis 0,3 µm) sowie die mittlere Abscheiderate gegenüber Partikeln und/oder Aerosolen. Diese Eigenschaften bzw. Parameter werden maßgeblich über die erfindungsgemäß vorgesehene Aerosol- und/oder Partikelfilterschicht 5 eingestellt und maßgeschneidert sowie zudem zumindest teilweise auch durch die optional vorgesehene Abdeckschicht 6.

In diesem Zusammenhang ist es für eine gute PAK-Schutzleistung bevorzugt, dass das Schutzmaterial 1 bzw. die Schutzbekleidung 8 einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweist und/oder dass das Schutzmaterial 1 einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweist.

Darüber hinaus ist es im Hinblick auf die Gewährleistung einer guten PAK-Schutzleistung, insbesondere gegenüber partikulär gebundenen PAK, bevorzugt, dass das Schutzmaterial 1 bzw. die Schutzbekleidung 8 einen integralen Anfangsdurchlassgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweist.

Außerdem ist es im Hinblick auf eine gute PAK-Schutzleistung, insbesondere gegenüber partikulär gebundenem PAK, vorteilhaft, dass das Schutzmaterial 1 bzw. die Schutzbekleidung 8 bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist und/oder dass das Schutzmaterial 1 bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweist.

Das Bewertungskriteriums am MPPS (*Most Penetrating Particle Size*) bezeichnet die Partikelgröße, bei welcher ein Filtermaterial (hier: Schutzmaterial 1 bzw. Schutzbekleidung 8) seinen niedrigsten Abscheidegrad verzeichnet.

Außerdem ist es im Hinblick auf eine gute PAK-Schutzleistung, insbesondere gegenüber partikulär gebundenen PAK, vorteilhaft, dass das Schutzmaterial 1 bzw. die Schutzbekleidung 8 einen Abscheidegrad, insbesondere Fraktionsabscheidegrad, von mindestens 80 %, insbesondere von mindestens 85 %,vorzugsweise von mindestens 90 %, aufweist, bestimmt nach DIN EN 1822 bei einer Druckdifferenz von 15 Pascal mit Kaliumchlorid (KCI) als Testsubstanz als Mindestwirkungsgrad (MPPS, insbesondere MPPS = 0,1 µm bis 0,3 µm).

Weiterhin ist es im Hinblick auf eine gute PAK-Schutzleistung, insbesondere gegenüber gasförmigen PAK, vorteilhaft, dass das Schutzmaterial 1 und/oder die Schutzbekleidung 8 eine Butanadsorption, bestimmt gemäß ASTM D5742-16, von mindestens 10 g/m², insbesondere von mindestens 15 g/m², vorzugsweise von mindestens 20 g/m², aufweist. Das Butanadsorptionsvermögen geht maßgeblich auf die Adsorptionsschicht 4 bzw. die Adsorberpartikel 4a, vorzugsweise Aktivkohle, zurück und ist insbesondere ein Maß für das Mikroporenvolumen der Adsorptionsschicht 4 bzw. der Adsorberpartikel 4a. Auf diese Weise wird eine besonders gute Adsorptionsleistung in Bezug auf PAK erreicht. Bezüglich des Butanadsorptionsvermögens von Aktivkohle kann auch auf die noch nachfolgenden Ausführungen Bezug genommen werden.

Die vorstehend genannten Eigenschaften, insbesondere physikochemischen und mechanischen Parameter, des erfindungsgemäß eingesetzten Schutzmaterials 1 bzw. der erfindungsgemäß eingesetzten Schutzbekleidung 8 können durch die Auswahl und Zusammenstellung der einzelnen Schichten 2, 3, 4, 5, 6 und 7, insbesondere Materialauswahl und Beschaffenheit der der einzelnen Schichten 2, 3, 4, 5, 6 und 7, gezielt bzw. maßgeschneidert eingestellt bzw. gesteuert werden. Dies im konkreten Einzelfall zu realisieren, ist dem auf diesem Gebiet tätigen Fachmann als solches bekannt und geläufig, so dass er diesbezüglich auf sein allgemeines Fachwissen zurückgreifen kann und so dass es diesbezüglich keiner weiterführenden Ausführungen bedarf. Dennoch finden sich weitere konkrete und detaillierte Ausführungen hierzu im Nachfolgenden, insbesondere bezüglich der Materialauswahl und Beschaffenheit sowie Kombinationen der einzelnen Schichten 2, 3, 4, 5, 6 und 7.

Nachfolgend werden weiterführende Ausführungen zu den Eigenschaften der einzelnen Schichten 2, 3, 4, 5, 6 und 7 des erfindungsgemäß eingesetzten Schutzmaterials 1 bzw. der erfindungsgemäß eingesetzten Schutzbekleidung 8 dargelegt:
Was die textile Trägerschicht 2 des erfindungsgemäß eingesetzten Schutzmaterials 1 anbelangt, so ist die textile Trägerschicht 2 üblicherweise als ein luftdurchlässiges textiles Flächengebilde ausgebildet ist.

Bevorzugterweise ist die textile Trägerschicht 2 als ein luftdurchlässiges textiles Flächengebilde, bevorzugt als eine Maschenware, insbesondere als Gewirke (Wirkware) oder Gestrick (Strickware), ausgebildet ist.

Weiterhin bevorzugt ist es, dass die textile Trägerschicht 2 Naturfasern und/oder synthetischen Fasern (Chemiefasern), bevorzugt Naturfasern, besonders bevorzugt Baumwollfasern, umfasst oder hieraus gebildet ist.

Besonders bevorzugt ist es, dass die textile Trägerschicht 2 Naturfasern, besonders bevorzugt Baumwollfasern, gegebenenfalls in Kombination mit synthetischen Fasern (Chemiefasern), umfasst oder hieraus gebildet ist.

Gemäß einer besonderen Ausführungsform der vorliegenden Erfindung ist es vorgesehen, dass die textile Trägerschicht 2 ein Flächengewicht (insbesondere bestimmt als Trockengewicht) im Bereich von 10 g/m² bis 275 g/m², insbesondere im Bereich von 15 g/m² bis 175 g/m², vorzugsweise im Bereich von 25 g/m² bis 150 g/m², besonders bevorzugt im Bereich von 30 g/m² bis 100 g/m², aufweist, insbesondere bestimmt gemäß DIN EN 12127, vorzugsweise nach 1-stündiger Trocknung bei 105 °C.

Durch die zuvor geschilderte Ausbildung der textilen Trägerschicht 2 wird ein besonders guter Tragekomfort bei gleichzeitig guten Verschleißeigenschaften des Materials gewährleistet.

Speziell durch die Ausbildung der textilen Trägerschicht 2 als eine Maschenware, insbesondere als Gewirke (Wirkware) oder Gestrick (Strickware), bevorzugt auf der Basis von Naturfasern (besonders bevorzugt Baumwollfasern), gegebenenfalls in Kombination mit synthetischen Fasern (Chemiefasern), werden - neben Tragekomfort und guten Verschleißeigenschaften - zudem gute Dehn- und Reißfestigkeiten erreicht.

Erfindungsgemäß geeignete Materialien mit den vorgenannten Eigenschaften für die Ausbildung einer wie zuvor beschriebenen textile Trägerschicht 2 sind dem auf diesem Gebiet tätigen Fachmann als solches bekannt und geläufig.

Was die Haftmittelschicht 3 des erfindungsgemäß eingesetzten Schutzmaterials 1 anbelangt, so ist diesbezüglich Folgendes auszuführen:
Die Menge des Auftrags der Haftmittelschicht 3 bzw. des Klebstoffs der Haftmittelschicht 3 kann in weiten Bereichen variieren. Im Allgemeinen ist die Haftmittelschicht 3 und/oder der Klebstoff der Haftmittelschicht 3 in einer Auftragsmenge im Bereich von 5 g/m² bis 80 g/m², insbesondere im Bereich von 10 g/m² bis 60 g/m², vorzugsweise im Bereich von 15 g/m² bis 50 g/m², auf die textile Trägerschicht 2 aufgebracht und/oder aufgetragen. Auf diese Weise ist eine gute Fixierung der Adsorptionsschicht 4 bei gleichzeitig geringem Flächengewicht und somit gutem Tragekomfort sowie guter Wasserdampfdurchlässigkeit gewährleistet.

Das Material des Klebstoffs bzw. Klebstoffpolymers kann gleichermaßen in weiten Bereichen variieren. Insbesondere kann es vorgesehen sein, dass der Klebstoff und/oder das Klebstoffpolymer ausgewählt ist aus der Gruppe von Polyacrylaten (PA), Polymethacrylaten (PMA), Polymethylmethacrylaten (PMMA), Polycarbonaten (PC), Polyurethanen (PU) und Silikonen sowie Mischungen oder Kombinationen von mindestens zwei der vorgenannten Verbindungen, vorzugsweise Polyurethan (PU). Die vorgenannten Klebstoffe bzw. Klebstoffpolymere gewährleisten eine ausgezeichnete Fixierung der Adsorptionsschicht 4 bei gleichzeitig gutem Tragekomfort, insbesondere guter Wasserdampfdurchlässigkeit.

Besonders bevorzugt ist es, dass der Klebstoff und/oder das Klebstoffpolymer ein Polyurethan (PU) ist. Dies führt einerseits zu besonders guten Verklebungsergebnissen in Bezug auf die Adsorptionsschicht 4 und gewährleistet, aufgrund der guten Wasserdampfdurchlässigkeit von Polyurethanen, einen ausgezeichneten Tragekomfort. Auch wird durch das Polyurethan die Adsorptionsleistung der Adsorberpartikel 4a bei Benetzung der Oberfläche der Adsorberpartikel 4a am wenigsten beeinträchtigt.

Die Dichte der Haftmittelschicht 3 kann gleichermaßen in weiten Bereichen variieren. Im Allgemeinen ist es bevorzugt, dass die Haftmittelschicht 3 eine Dichte im Bereich von 100 g/l bis 500 g/l, insbesondere im Bereich von 150 g/l bis 400 g/l, vorzugsweise im Bereich von 200 g/l bis 350 g/l, aufweist. Auf diese Weise ist ein geringes Flächengewicht und somit ein guter Tragekomfort des Schutzmaterials 1 bzw. Schutzbekleidung 8 insgesamt gewährleistet.

Gemäß einer besonderen Ausführungsform der vorliegenden Erfindung kann es vorgesehen sein, dass die Haftmittelschicht 3 teilweise in die textile Trägerschicht 2 eingedrungen vorliegt und/oder dass die Haftmittelschicht 3 sich in die textile Trägerschicht 2 hineinerstreckt. Auf diese Weise wird eine besonders sichere Fixierung zwischen textilem Träger 2, Haftmittelschicht 3 und Adsorptionsschicht 4 ermöglicht. Zudem wird auf diese Weise die Dicke der Haftmittelschicht 3 im Querschnitt reduziert, was zu einer geringeren Gesamtdicke des Schutzmaterials 1 bzw. der Schutzbekleidung 8 führt, einhergehend mit einem guten Tragekomfort.

Im Allgemeinen ist es im Rahmen der erfindungsgemäßen Verwendungen vorgesehen, dass die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die textile Trägerschicht 2 aufgebracht und/oder aufgetragen, wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von über die Trägerschicht 2 verteilten Klebstoff(polymer)punkten ausgebildet ist, vorzugsweise in Form eines getrockneten und/oder ausgehärteten, insbesondere vernetzten, gebrochenen Klebstoffpolymerschaums.

Diesbezüglich kann es erfindungsgemäß vorgesehen sein, dass die Klebstoffschicht entweder in Form eines getrockneten und/oder ausgehärteten, insbesondere vernetzten, gebrochenen Klebstoffpolymerschaums oder aber in Form eines Rasters einer Vielzahl von über die Trägerschicht 2 verteilten Klebstoff(polymer)punkten ausgebildet ist, vorzugsweise in Form eines getrockneten und/oder ausgehärteten, insbesondere vernetzten, gebrochenen Klebstoffpolymerschaums.

Auf diese Weise wird eine besonders gute Wasserdampf- und/oder Luftdurchlässigkeit, insbesondere Wasserdampf- und Luftdurchlässigkeit, bei gleichzeitig ausgezeichneten Fixierungs- bzw. Verklebungseigenschaften gewährleistet.

Der Auftrag der Klebstoffschicht in Form eines getrockneten und/oder ausgehärteten, insbesondere vernetzten, gebrochenen Klebstoffpolymerschaums ist im Rahmen der Verklebung besonders bevorzugt, da dies zu besonders geringen Dichten der Haftmittelschicht 3 und somit zu einem besonders geringen Flächengewicht führt, einhergehend mit den damit verbundenen Vorteilen und Besonderheiten (d. h. verbesserter Tragekomfort, geringere Gesamtdicke des Schutzmaterials 1 bzw. der Schutzbekleidung 8 etc.).

Die Ausbildung der Haftmittelschicht 3 bzw. der Klebstoffschicht in Form eines getrockneten und/oder ausgehärteten, insbesondere vernetzten, gebrochenen Klebstoffpolymerschaums ist auch deshalb von Vorteil, weil die Haftmittelschicht 3, nicht nur die Fixierung der Adsorptionsschicht 4 auf der textilen Trägerschicht 2 gewährleistet, sondern zudem auch die Funktion hat, dass im Fall des Auftreffens gasförmiger PAK-Kontaminationen eine ausreichende Verweilzeit und/oder Konvektion der zu adsorbierenden gasförmigen PAK-Belastungen im Verwendungsfall gewährleistet wird. Im Fall der Verklebung in Form des zuvor beschriebenen Klebstoffpolymerschaums bzw. im Fall der Ausbildung der Haftmittelschicht 3 in Form des zuvor beschriebenen Klebstoffpolymerschaums kann diese Funktion der Haftmittelschicht 3 im besonderen Maße erfüllt werden.

Die Aufbringung der Haftmittelschicht 3, insbesondere des Klebstoffs bzw. Klebstoffpolymers der Haftmittelschicht 3, gemäß den beiden vorgenannten Verklebungsarten (d. h. entweder in Form eines getrockneten und/oder ausgehärteten, insbesondere vernetzten, gebrochenen Klebstoffpolymerschaums oder aber in Form eines Rasters einer Vielzahl von einzelnen über die Trägerschicht 2 verteilten Klebstoff(polymer)punkten) ist dem Fachmann als solches hinlänglich bekannt, so dass hierzu keine weiterführenden Ausführungen gemacht werden müssen. Zudem wird diesbezüglich auf die nachfolgende Beschreibung in den Ausführungsbeispielen verwiesen.

Wie zuvor dargelegt, kann es gemäß einer Ausführungsform der vorliegenden Erfindung vorgesehen sein, dass die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines getrockneten und/oder ausgehärteten, insbesondere vernetzten, gebrochenen Klebstoffpolymerschaums auf die textile Trägerschicht 2 aufgebracht und/oder aufgetragen ist. Die mit dieser Ausführungsform verbundenen Vorteile wurden zuvor im Detail geschildert.

Insbesondere kann es dabei vorgesehen sein, dass der gebrochene Klebstoffpolymerschaum eine Vielzahl getrockneter und/oder ausgehärteter, insbesondere vernetzter, zerstörter und/oder geplatzter und/oder kollabierter Schaumblasen aufweist.

Weiterhin kann es insbesondere vorgesehen sein, dass der gebrochene Klebstoffpolymerschaum, insbesondere die getrockneten und/oder ausgehärteten, insbesondere vernetzten, zerstörten und/oder geplatzten und/oder kollabierten Schaumblasen des gebrochenen Klebstoffschaums, eine Vielzahl an zerstörten und/oder gebrochenen und/oder kollabierten Wandungen und/oder Stegen aus Klebstoffpolymer aufweist bzw. aufweisen.

Weiterhin kann es erfindungsgemäß insbesondere vorgesehen sein, dass der gebrochene Klebstoffpolymerschaum einen Anteil an zerstörten und/oder geplatzten und/oder kollabierten Schaumblasen von mindestens 10 %, insbesondere mindestens 30 %, vorzugsweise mindestens 50 %, bevorzugt mindestens 70 %, besonders bevorzugt mindestens 90 %, ganz besonders bevorzugt mindestens 95 %, bezogen auf die Gesamtanzahl an Schaumblasen in dem gebrochenen Klebstoffpolymerschaum, aufweist.

Weiterhin kann es in diesem Zusammenhang insbesondere vorgesehen sein, dass der gebrochene Klebstoffpolymerschaum einen Anteil an zerstörten und/oder geplatzten und/oder kollabierten Schaumblasen im Bereich von 10 % bis 100 %, insbesondere im Bereich von 30 % bis 99,9 %, vorzugsweise im Bereich von 50 % bis 99 %, bevorzugt im Bereich von 70 % bis 99 %, besonders bevorzugt im Bereich von 90 % bis 98 %, bezogen auf die Gesamtanzahl an Schaumblasen in dem gebrochenen Klebstoffpolymerschaum, aufweist.

Darüber hinaus kann es insbesondere vorgesehen sein, dass der gebrochene Klebstoffpolymerschaum nicht geschlossen ausgebildet ist und/oder insbesondere wobei der gebrochene Klebstoffpolymerschaum eine Vielzahl von insbesondere sich in dem gebrochenen Klebstoffpolymerschaum erstreckenden Durchbrechungen, Poren, Kanäle und/oder Öffnungen und/oder eine Vielzahl von insbesondere die jeweiligen Außenseiten des gebrochenen Klebstoffpolymerschaums und/oder der Klebstoffschicht verbindenden Durchbrechungen, Poren, Kanäle und/oder Öffnungen aufweist.

Insbesondere ist es erfindungsgemäß bevorzugt, dass der gebrochene Klebstoffpolymerschaum zusammenhängend und/oder kohärent ausgebildet ist.

Weiterhin kann es insbesondere vorgesehen sein, dass der gebrochene Klebstoffpolymerschaum zumindest im Wesentlichen vollflächig und/oder ganzseitig auf die textile Trägerschicht 2 aufgebracht und/oder aufgetragen ist.

Insbesondere kann es dabei vorgesehen sein, dass der gebrochene Klebstoffpolymerschaum im Vergleich zu einem entsprechenden nichtgeschäumten und/oder kontinuierlich ausgebildeten Klebstoffpolymer eine bzw. ein um mindestens 5 %, insbesondere um mindestens 10 %, vorzugsweise um mindestens 15 %, bevorzugt um mindestens 20 %, besonders bevorzugt um mindestens 25 %, verringerte Dichte und/oder verringertes, insbesondere flächenbezogen verringertes, Volumengewicht, bezogen auf das nichtgeschäumte und/oder kontinuierlich ausgebildete Klebstoffpolymer, aufweist.

Insbesondere kann es weiterhin vorgesehen sein, dass der gebrochene Klebstoffpolymerschaum im Vergleich zu einem entsprechenden nichtgeschäumten und/oder kontinuierlich ausgebildeten Klebstoffpolymer eine bzw. ein im Bereich von 5 % bis 80 %, insbesondere im Bereich von 10 % bis 70 %, vorzugsweise im Bereich von 15 % bis 60 %, bevorzugt im Bereich von 20 % bis 55 %, verringerte Dichte und/oder verringertes, insbesondere flächenbezogen verringertes, Volumengewicht, bezogen auf das nichtgeschäumte und/oder kontinuierlich ausgebildete Klebstoffpolymer, aufweist.

Insbesondere kann es darüber hinaus vorgesehen sein, dass der gebrochene Klebstoffpolymerschaum im Vergleich zu einem entsprechenden intakten und/oder nichtgebrochenen Klebstoffpolymerschaum eine bzw. ein um höchstens 10 %, insbesondere höchstens 5 %, vorzugsweise höchstens 1 %, erhöhte Dichte und/oder erhöhtes, insbesondere flächenbezogen erhöhtes, Volumengewicht, bezogen auf den intakten und/oder nichtgebrochenen Klebstoffpolymerschaum, aufweist.

Weiterhin kann es insbesondere vorgesehen sein, dass der gebrochene Klebstoffpolymerschaum im Vergleich zu einem entsprechenden intakten und/oder nichtgebrochenen Klebstoffpolymerschaum eine um höchstens 30 %, insbesondere um höchstens 20 %, vorzugsweise höchstens um 10 %, bevorzugt um höchstens 5 %, verringerte Elastizität und/oder reversible Dehnbarkeit, bezogen auf den intakten und/oder nichtgebrochenen Klebstoffpolymerschaum, aufweist.

Darüber hinaus kann es insbesondere vorgesehen sein, dass der gebrochene Klebstoffpolymerschaum im Vergleich zu einem entsprechenden intakten und/oder nichtgebrochenen Klebstoffpolymerschaum eine im Bereich von 5 % bis 30 %, insbesondere im Bereich von 10 % bis 20 %, verringerte Elastizität und/oder reversible Dehnbarkeit, bezogen auf den intakten und/oder nichtgebrochenen Klebstoffpolymerschaum, aufweist.

Schließlich kann es bei dieser Ausführungsform insbesondere auch vorgesehen sein, dass der gebrochene Klebstoffpolymerschaum erhältlich ist durch Trocknung und/oder Aushärtung, insbesondere Vernetzung, einer aufgeschäumten, vorzugsweise unter mechanischem Energieeintrag aufgeschäumten, wässrig oder organisch basierten, vorzugsweise wässrig basierten, Lösung und/oder Dispersion des Klebstoffpolymers, insbesondere einhergehend mit einer zumindest teilweisen Brechung des durch die aufgeschäumte Lösung und/oder Dispersion des Klebstoffpolymers bereitgestellten Schaums, insbesondere wobei die Trocknung und/oder Aushärtung, insbesondere Vernetzung, in Gegenwart mindestens eines Schaumbildners und gegebenenfalls mindestens eines Schaumstabilisators und gegebenenfalls mindestens eines Vernetzers und gegebenenfalls mindestens eines Emulgators und gegebenenfalls mindestens eines Verdickers durchgeführt ist.

Für weitergehende diesbezügliche Einzelheiten in Bezug auf dieser besondere Form des Auftrags der Haftmittelschicht 3, insbesondere des Auftrags des Klebstoffs bzw. Klebstoffpolymers, kann insbesondere auch verwiesen werden auf die internationale Offenlegungsschrift WO 2017/016694 A1 deren gesamter Offenbarungsgehalt hiermit durch Bezugnahme eingeschlossen ist.

Gemäß einer alternativen Ausführungsform der Erfindung kann es aber auch vorgesehen sein, dass die Haftmittelschicht 3 und/oder der Klebstoff der Haftmittelschicht 3 als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die textile Trägerschicht 2 aufgebracht und/oder aufgetragen, wobei die Klebstoffschicht in Form eines Rasters einer Vielzahl von über die Trägerschicht 2 verteilten Klebstoff(polymer)punkten (d. h. einzelnen und nicht-zusammenhängenden Klebstoff-(polymer)punkten) ausgebildet ist.

In diesem Zusammenhang ist es insbesondere vorgesehen, dass die Klebstoffschicht höchstens 75 % der Oberfläche der Trägerschicht 2, vorzugsweise höchstens 60 % der Oberfläche der Trägerschicht 2, besonders bevorzugt höchstens 50 % der Oberfläche der Trägerschicht 2, ganz besonders bevorzugt höchstens 40 % der Oberfläche der Trägerschicht 2, bedeckt. Auf diese Weise ist ein guter Tragekomfort, insbesondere eine hohe Wasserdampf- und Luftdurchlässigkeit, bei gleichzeitig ausgezeichneter Fixierung bzw. Verklebung und ausgezeichneten PAK-Schutzleistungseigenschaften gewährleistet.

Insbesondere kann es erfindungsgemäß vorgesehen sein, dass das Raster der Vielzahl von über die Trägerschicht 2 verteilten Klebstoff(polymer)punkten regelmäßig oder unregelmäßig ausgebildet ist.

Weiterhin ist es insbesondere vorgesehen, dass die Klebstoff(polymer)punkte zumindest im Wesentlichen die gleiche Größe, insbesondere Größenausdehnung, besitzen.

Die Durchführung der Aufbringung der Haftmittelschicht 3 insbesondere des Klebstoffs bzw. Klebstoffpolymers, gemäß dieser Ausführungsform ist dem Fachmann ebenfalls hinlänglich bekannt. Zu diesem Zweck kann beispielsweise das Klebstoffpolymer in Form einer Klebstoffpolymerdispersion oder in Form eines Schmelzklebstoffpolymers beispielsweise mittels einer Schablone auf den textilen Träger 2 aufgebracht werden, gefolgt von einem nachfolgenden Auftrag der Adsorberpartikel 4a der Adsorptionsschicht 4 mit anschließender Vernetzung und Aushärtung des Klebstoffs bzw. Klebstoffpolymers. Für diesbezügliche Einzelheiten kann auch auf die nachfolgenden Ausführungsbeispiele verwiesen werden.

Erfindungsgemäß geeignete Materialien mit den vorgenannten Eigenschaften für die Ausbildung einer wie zuvor beschriebenen Haftmittelschicht 3 sind dem auf diesem Gebiet tätigen Fachmann als solches bekannt und geläufig, so dass es diesbezüglich keiner weiterführenden Ausführungen bedarf. Dies gilt auch für die Art und Weise sowie die Mengen des Auftrags etc. sowie bezüglich weiterer Einzelheiten der Ausbildung der Haftmittelschicht 3.

Was die Adsorptionsschicht 4 und die dort vorhandenen Adsorberpartikel 4a des erfindungsgemäß eingesetzten Schutzmaterials 1 anbelangt, so ist diesbezüglich Folgendes auszuführen:
Das Material der Adsorberpartikel 4a der Adsorptionsschicht 4 kann in weiten Bereichen variieren. Insbesondere kann es erfindungsgemäß vorgesehen sein, dass die Adsorberpartikel 4a der Adsorptionsschicht 4 ausgewählt sind aus der Gruppe von:
(i) insbesondere partikulärer Aktivkohle und/oder Aktivkohlepartikeln, vorzugsweise in Form von Aktivkohlepartikeln in Kornform ("Kornkohle") oder Aktivkohlepartikeln in Kugelform ("Kugelkohle") oder Aktivkohlepartikeln in Faserform ("Faserkohle");
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder makroporösen Typ;
(vi) anorganischen Oxiden, insbesondere Siliciumdioxiden, Silicagelen und/oder Aluminiumoxiden;
(vii) porösen organischen Polymeren und/oder porösen organischanorganischen Hybridpolymeren und/oder metallorganischen Gerüstmaterialien, insbesondere MOFs (*Metall Organic Framework*)*,* COFs (*Covalent Organic Framework),* ZIFs (*Zeolithe Imidazolate Framework*)*,* POMs (*Polymer Organic Material*) und/oder OFCs;
(viii) mineralischen Granulaten;
(ix) Klathraten; sowie
(x) deren Mischungen und/oder Kombinationen;
wobei (i) besonders bevorzugt ist.

Im Rahmen der vorliegenden Erfindung ist es insbesondere bevorzugt, dass die Adsorberpartikel 4a der Adsorptionsschicht 4 Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikel in Kugelform, sind. In dieser Weise wird eine besonders gute Schutzleistung gegenüber PAK erreicht.

Erfindungsgemäß geeignete Adsorber bzw. Adsorberpartikel 4a, insbesondere in Form von Aktivkohlen, wie sie nachfolgend beschrieben wird, ist im Handel erhältlich bzw. kommerziell verfügbar, z. B. von der Blücher GmbH, Erkrath/Deutschland, oder anderen kommerziellen Herstellern und Anbietern von Aktivkohle.

Erfindungsgemäß besonders bevorzugt einsetzbare Adsorber bzw. Adsorberpartikel 4a, insbesondere in Form von Aktivkohlen, mit den nachfolgend genannten Eigenschaften und Parametren ist insbesondere in den nachfolgenden Dokumenten des Standes der Technik beschrieben: DE 20 2006 016 898 U1, EP 1 918 022 und US 2008/0107589 A1, WO 01/83688 (PCT/EP 01/04615), WO 2011/003434 (PCT/EP 2009/007172), WO 2008/110233 (PCT/EP 2008/000606) sowie WO 2013/068060 (PCT/EP 2012/003743).

Die Größe der Adsorberpartikel 4a kann ebenfalls in weiten Bereichen variieren. Insbesondere ist es erfindungsgemäß vorgesehen, dass der Durchmesser der Adsorberpartikel 4a, insbesondere der Aktivkohlepartikel, 0,005 mm bis 2,5 mm, vorzugsweise 0,01 mm bis 2 mm, bevorzugt 0,015 mm bis 1,5 mm, besonders bevorzugt 0,02 mm bis 1,25 mm, ganz besonders bevorzugt 0,03 mm bis 1 mm, beträgt und/oder dass der mittlere Durchmesser, insbesondere der mittlere Durchmesser D₅₀, der Adsorberpartikel 4a, insbesondere der Aktivkohlepartikel, 0,01 mm bis 2 mm, insbesondere 0,02 mm bis 1,75 mm, bevorzugt 0,03 mm bis 1,5 mm, besonders bevorzugt 0,04 mm bis 1,25 mm, ganz besonders bevorzugt 0,04 mm bis 1 mm, beträgt. Auf diese Weise ist eine gute Adsorptionskapazität und Beladbarkeit mit PAK bei gleichzeitig akzeptablen Schichtdicken gewährleistet.

Die Menge, mit welchem die Adsorberpartikel 4a vorhanden bzw. aufgebracht sind, kann gleichermaßen in weiten Bereichen variieren. Insbesondere kann es erfindungsgemäß vorgesehen sein, dass die Adsorberpartikel 4a, insbesondere die Aktivkohlepartikel, in einer Menge im Bereich von 5 g/m² bis 300 g/m², insbesondere 25 g/m² bis 275 g/m², vorzugsweise 30 g/m² bis 250 g/m², bevorzugt 50 g/m² bis 200 g/m², eingesetzt werden und/oder dass das Schutzmaterial 1, insbesondere die Adsorptionsschicht 4, die Adsorberpartikel 4a, insbesondere die Aktivkohlepartikel, in einer Menge im Bereich von 5 g/m² bis 300 g/m², insbesondere 25 g/m² bis 275 g/m², vorzugsweise 30 g/m² bis 250 g/m², bevorzugt 50 g/m² bis 200 g/m², aufweist.

Besonders gute Ergebnisse werden erhalten, wenn die Adsorberpartikel 4a, insbesondere der Aktivkohlepartikel, erhältlich sind durch Carbonisierung und nachfolgende Aktivierung eines synthetischen und/oder nicht-naturstoffbasierten partikulären Ausgangsmaterials, insbesondere auf Basis organischer Polymerpartikel.

Ebenfalls besonders gute Ergebnisse werden erhalten, wenn die Adsorberpartikel 4a, insbesondere der Aktivkohlepartikel, aus einem partikulären Ausgangsmaterial auf Basis organischer Polymere, insbesondere auf Basis sulfonierter organischer Polymere, vorzugsweise auf Basis von divinylbenzolvernetztem Polystyrol, bevorzugt auf Basis von Styrol/Divinylbenzol-Copolymeren, erhalten wird, insbesondere durch Carbonisierung und nachfolgende Aktivierung des Ausgangsmaterials, insbesondere wobei der Gehalt an Divinylbenzol in dem Ausgangsmaterial im Bereich von 1 Gew.-% bis 20 Gew.-%, insbesondere 1 Gew.-% bis 15 Gew.-%, vorzugsweise 1,5 Gew.-% bis 12,5 Gew.-%, bevorzugt 2 Gew.-% bis 10 Gew.-%, bezogen auf das Ausgangsmaterial, liegt.

In der erfindungsgemäß bevorzugten Ausführungsform ist es vorgesehen, dass die Adsorberpartikel 4a, insbesondere der Aktivkohlepartikel, auf Basis einer polymerbasierten sphärischen Aktivkohle (PBSAC; *Polymer-based Spherical Activated Carbon*) ausgebildet sind und/oder dass die Adsorberpartikel 4a, insbesondere der Aktivkohlepartikel, aus einer polymerbasierten sphärischen Aktivkohle (PBSAC) gebildet sind. Hiermit werden besonders gute Adsorptionsergebnisse erhalten.

Die Aktivkohle, welche nach der Erfindung bevorzugt eingesetzt wird, weist insgesamt hervorragende Adsorptionseigenschaften auf, welche auch durch die nachfolgenden Spezifikationen charakterisiert sind:
Gemäß einer erfindungsgemäß bevorzugten Ausführungsform ist es vorgesehen, dass die Adsorberpartikel 4a der Adsorptionsschicht 4 Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform, sind. Auf diese Weise werden besonders gute Adsorptionsergebnisse in Bezug auf PAK erhalten. Insbesondere bei Einhaltung der nachfolgend genannten Parameter und Maßgaben lassen sich ausgezeichnete Ergebnisse in Bezug auf die Schutzleistung gegenüber PAK erzielen.

Insbesondere kann es erfindungsgemäß vorgesehen sein, dass die Aktivkohle ein Gesamtporenvolumen, insbesondere ein Gesamtporenvolumen nach Gurvich, im Bereich von 0,3 cm³/g bis 3,8 cm³/g, insbesondere im Bereich von 0,4 cm³/g bis 3,5 cm³/g, vorzugsweise im Bereich von 0,5 cm³/g bis 3 cm³/g, besonders bevorzugt im Bereich von 0,6 cm³/g bis 2,5 cm³/g, ganz besonders bevorzugt im Bereich von 0,5 cm³/g bis 1,5 cm³/g, aufweist. Dies gewährleistet eine besonders gute Adsorptionskapazität.

Insbesondere kann es in diesem Zusammenhang vorgesehen sein, dass mindestens 65 %, insbesondere mindestens 70 %, vorzugsweise mindestens 75 %, bevorzugt mindestens 80 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden. Hierdurch wird eine besonders gute Adsorptionsleistung gegenüber PAK erreicht.

Weiterhin kann es insbesondere vorgesehen sein, dass 50 % bis 95 %, insbesondere 60 % bis 90 %, vorzugsweise 70 % bis 85 %, des Gesamtporenvolumens, insbesondere des Gesamtporenvolumens nach Gurvich, der Aktivkohle durch Poren mit Porendurchmessern von höchstens 50 nm, insbesondere durch Mikro- und/oder Mesoporen, gebildet werden. Auch auf diese Weise wird eine besonders gute Adsorptionsleistung in Bezug auf PAK erhalten.

Weiterhin kann es insbesondere vorgesehen sein, dass 1 % bis 60 %, insbesondere 5 % bis 50 %, vorzugsweise 10 % bis 40 %, bevorzugt 15 % bis 35 %, des Gesamtporenvolumens, insbesondere des Gesamtporenvolumens nach Gurvich, der Aktivkohle durch Poren mit Porendurchmessern von mehr als 2 nm, insbesondere durch Meso- und/oder Makroporen, gebildet werden.

Insbesondere kann es weiterhin vorgesehen sein, dass die Aktivkohle ein durch Poren mit Porendurchmessern von höchstens 2 nm (d.h. ≤ 2 nm) gebildetes Porenvolumen, insbesondere Mikroporenvolumen nach Carbon Black, im Bereich von 0,05 cm³/g bis 2,5 cm³/g, insbesondere 0,15 cm³/g bis 2 cm³/g, vorzugsweise 0,3 cm³/g bis 1,5 cm³/g, aufweist, insbesondere wobei 15 % bis 98 %, insbesondere 25 % bis 95 %, vorzugsweise 35 % bis 90 %, des Gesamtporenvolumens der Aktivkohle durch Poren mit Porendurchmessern von höchstens 2 nm, insbesondere durch Mikroporen, gebildet werden.

Weiterhin kann es insbesondere vorgesehen sein, dass die Aktivkohle eine spezifische BET-Oberfläche im Bereich von 600 m²/g bis 4.000 m²/g, insbesondere 800 m²/g bis 3.500 m²/g, vorzugsweise 1.000 m²/g bis 3.000 m²/g, besonders bevorzugt 1.200 m²/g bis 2.750 m²/g, ganz besonders bevorzugt 1.300 m²/g bis 2.500 m²/g, aufweist.

Darüber hinaus kann es erfindungsgemäß insbesondere vorgesehen sein, dass die Aktivkohle eine durch Poren mit Porendurchmessern von höchstens 2 nm, insbesondere durch Mikroporen, gebildete Oberfläche im Bereich von 400 bis 3.500 m²/g, insbesondere 500 bis 3.000 m²/g, vorzugsweise 600 bis 2.500 m²/g, bevorzugt 700 bis 2.000 m²/g, aufweist.

Insbesondere kann es darüber hinaus vorgesehen sein, dass die Aktivkohle eine durch Poren mit Porendurchmessern im Bereich von 2 nm bis 50 nm, insbesondere durch Mesoporen, gebildete Oberfläche im Bereich von 200 bis 2.000 m²/g, insbesondere 300 bis 1.900 m²/g, vorzugsweise 400 bis 1.800 m²/g, bevorzugt 500 bis 1.700 m²/g, aufweist.

Schließlich kann es erfindungsgemäß insbesondere vorgesehen sein, dass die Aktivkohle einen mittleren Porendurchmesser im Bereich von 0,1 nm bis 55 nm, insbesondere 0,2 nm bis 50 nm, vorzugsweise 0,5 nm bis 45 nm, bevorzugt 1 nm bis 40 nm, aufweist.

Eine erfindungsgemäß bevorzugt eingesetzte Aktivkohle (d. h. Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform) weist eine Abriebfestigkeit, bestimmt gemäß ASTM D3802:2016, von mindestens 90 %, insbesondere von mindestens 95 %, vorzugsweise von mindestens 98 %, besonders bevorzugt von mindestens 99 %, ganz besonders bevorzugt von 100 %, auf. Auf diese Weise ist unter Anwendungsbedingungen bzw. im Tragezustand ein besonders gute Verschleißbeständigkeit gewährleistet.

Eine erfindungsgemäß bevorzugt eingesetzte Aktivkohle (d. h. Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform) weist zudem eine Butanadsorption, bestimmt gemäß ASTM D5742-16, von mindestens 20 %, insbesondere von mindestens 30 %, vorzugsweise von mindestens 35 %, auf. Insbesondere weist eine solche Aktivkohle eine Butanadsorption, bestimmt gemäß ASTM D5742-16, im Bereich von 20 % bis 90 %, insbesondere im Bereich von 30 % bis 85 %, vorzugsweise im Bereich von 35 % bis 80 %, auf. Auf diese Weise wird eine besonders gute Adsorptionsleistung in Bezug auf PAK erreicht. Die Butanaktivität ist insbesondere ein Maß für das Mikroporenvolumen der Aktivkohle (Mikroporen sind Poren mit Durchmessern < 2 nm). Die Butanaktivität bestimmt in Übereinstimmung mit der vorgenannten Methode die Fähigkeit der Aktivkohle, Butan aus trockener Luft zu adsorbieren. Die Butanaktivität ist dabei insbesondere definiert als der Gradient bezüglich der adsorbierten Masse pro Masse der Probe im Gleichgewichtszustand.

Eine erfindungsgemäß bevorzugt eingesetzte Aktivkohle (d. h. Aktivkohlepartikel, vorzugsweise in Form von Aktivkohlepartikel in Kornform ("Kornkohle") oder Aktivkohlepartikel in Kugelform ("Kugelkohle"), bevorzugt Aktivkohlepartikel in Kugelform) weist zudem eine Iodzahl, bestimmt gemäß ASTM D4607:2014, von mindestens 900 mg/g, insbesondere von mindestens 1.000 mg/g, bevorzugt von mindestens 1.100 mg/g, auf. Insbesondere weist eine solche Aktivkohle eine Iodzahl, bestimmt gemäß ASTM D4607:2014, im Bereich von 900 mg/g bis 2.200 mg/g, insbesondere im Bereich von 1.000 mg/g bis 2.100 mg/g, vorzugsweise im Bereich von 1.100 mg/g bis 2.000 mg/g, auf. Auf diese Weise wird eine besonders gute Adsorptionsleistung in Bezug auf PAK erreicht. Die Iodzahl kann insbesondere als ein Maß für diejenige verfügbare Oberfläche der Aktivkohle gewertet werden, welche überwiegend durch Mesoporen, insbesondere auch durch kleine Mesoporen, bereitgestellt wird; die vorgenannten Werte der Iodzahl zeigen, dass die Aktivkohle über eine hohe Mesoporosität verfügt. Mesoporen sind Poren mit Durchmessern im Bereich von 2 nm bis 50 nm.

Erfindungsgemäß geeignete Aktivkohlen, wie sie zuvor beschrieben worden sind, sind kommerziell verfügbar bzw. im Handel erhältlich, insbesondere von der Blücher GmbH, Erkrath/Deutschland, oder anderen kommerziellen Aktivkohleherstellern.

Gemäß einer besonderen Ausführungsform der vorliegenden Erfindung wird derart vorgegangen, dass die Adsorberpartikel 4a der Adsorptionsschicht 4 derart an der Haftmittelschicht 3 fixiert und/oder zum Haften gebracht sind, dass mindestens 30 % der Oberfläche der Adsorberpartikel 4a, insbesondere mindestens 40 % der Oberfläche der Adsorberpartikel 4a, vorzugsweise mindestens 60 % der Oberfläche der Adsorberpartikel 4a, nicht mit Klebstoff(polymer) bedeckt sind und/oder dass 30 % bis 95 % der Oberfläche der Adsorberpartikel 4a, insbesondere 40 % bis 90 % der Oberfläche der Adsorberpartikel 4a, vorzugsweise 60 % bis 85 % der Oberfläche der Adsorberpartikel 4a, nicht mit Klebstoff(polymer) bedeckt sind. Hierdurch ist gewährleistet, dass eine gute Adsorptionsleistung in Bezug auf PAK sichergestellt ist.

Insbesondere kann es in diesem Zusammenhang erfindungsgemäß vorgesehen sein, dass mindestens 30 % der Oberfläche der Adsorberpartikel 4a, insbesondere mindestens 40 % der Oberfläche der Adsorberpartikel 4a, vorzugsweise mindestens 60 % der Oberfläche der Adsorberpartikel 4a, nicht mit Klebstoff(polymer) bedeckt sind.

Weiterhin kann es in diesem Zusammenhang vorgesehen sein, dass 30 % bis 95 % der Oberfläche der Adsorberpartikel 4a, insbesondere 40 % bis 90 % der Oberfläche der Adsorberpartikel 4a, vorzugsweise 60 % bis 85 % der Oberfläche der Adsorberpartikel 4a, nicht mit Klebstoff(polymer) bedeckt sind.

Erfindungsgemäß geeignete Materialien mit den vorgenannten Eigenschaften für die Ausbildung einer wie zuvor beschriebenen Adsorptionsschicht 4 bzw. von zuvor beschriebenen Adsorberpartikeln 4a sind dem auf diesem Gebiet tätigen Fachmann als solches bekannt und geläufig, so dass es diesbezüglich keiner weiterführenden Ausführungen bedarf. (vgl. auch vorstehende Ausführungen hierzu).

Was die erfindungsgemäß vorgesehene Partikel- und/oder Aerosolfilterschicht 5 anbelangt, so kann hierzu Folgendes ausgeführt werden:
Im Rahmen der vorliegenden Erfindung ist es insbesondere vorgesehen, dass die Partikel- und/oder Aerosolfilterschicht 5 als ein gasdurchlässiges textiles Flächengebilde, welches eine Vielzahl einzelner Textilfasern mit Faserdurchmessern im Bereich von 10 nm bis 30 µm, bevorzugt im Bereich von 50 nm bis 10 µm, umfasst oder hieraus gebildet ist, vorliegt und/oder ausgebildet ist, vorzugsweise mit einem Flächengewicht (insbesondere bestimmt als Trockengewicht), insbesondere bestimmt gemäß DIN EN 12127, vorzugsweise nach 1-stündiger Trocknung bei 105 °C, im Bereich von 2 g/m² bis 100 g/m², insbesondere im Bereich von 5 g/m² bis 90 g/m², besonders bevorzugt im Bereich von 10 g/m² bis 80 g/m². Hierdurch ist ein guter Tragekomfort bei gleichzeitig guter Schutzleistung gewährleistet.

Weiterhin ist es im Rahmen der vorliegenden Erfindung insbesondere vorgesehen, dass die Partikel- und/oder Aerosolfilterschicht 5 ein Flächengewicht (insbesondere bestimmt als Trockengewicht) im Bereich von 2 g/m² bis 100 g/m², insbesondere im Bereich von 5 g/m² bis 90 g/m², besonders bevorzugt im Bereich von 10 g/m² bis 80 g/m², aufweist, insbesondere bestimmt gemäß DIN EN 12127, vorzugsweise nach 1-stündiger Trocknung bei 105 °C.

Üblicherweise ist es im Rahmen der vorliegenden Erfindung vorgesehen, dass die Textilfasern der Partikel- und/oder Aerosolfilterschicht 5 Faserdurchmesser im Bereich von 10 nm bis 30 µm, bevorzugt im Bereich von 50 nm bis 10 µm, aufweisen. Auf diese Weise wird eine gute Schutzleistung der Partikel- und/oder Aerosolfilterschicht 5 gewährleistet.

Weiterhin kann es im Rahmen der vorliegenden Erfindung insbesondere vorgesehen sein, dass als Textilfasern der Partikel- und/oder Aerosolfilterschicht 5 synthetische Fasern (Chemiefasern) eingesetzt werden, insbesondere aus der Gruppe von Polyestern (PES); Polyolefinen, wie Polyethylen (PE), Polypropylen (PP), Polyoxyethylen und Polyoxypropylen; Polyvinylchloriden (CLF); Polyvinylidenchloriden (CLF); Acetaten (CA); Triacetaten (CTA); Polyacryl (PAN), insbesondere Polyacrylnitrilen; Polyamiden (PA); Polyvinylalkohol (PVAL); Polyurethanen; Polyvinylestern; Poly(meth-)acrylaten; Polyvinylidenfluoriden (PVDF); sowie deren Mischungen, besonders bevorzugt Polyurethanen; Polyestern, Polyolefinen, Polyamiden, Polyacrylnitrilen, Poly(meth-)acrylaten und Polyvinylidenfluoriden (PVDF) sowie deren Mischungen, ganz besonders bevorzugt Poyurethanen. Textilfasern aus Polyurethanen sind ganz besonders bevorzugt, da auf diese Weise ein hoher Tragekomfort gewährleistet ist, insbesondere im Hinblick auf die Wasserdampfdurchlässigkeit des Materials.

Gemäß einer bevorzugten Ausführungsform der vorliegenden Erfindung ist es daher vorgesehen, dass als Textilfasern der Partikel- und/oder Aerosolfilterschicht 5 Polyurethanfasern eingesetzt werden.

Üblicherweise ist es vorgesehen, dass die Partikel- und/oder Aerosolfilterschicht 5 als ein Gelege oder Textilverbundstoff, insbesondere Vlies (Non-Woven), besonders bevorzugt als ein Vlies (Non-Woven), ausgebildet ist.

Gemäß einer besonderen Ausführungsform der vorliegenden Erfindung ist es vorgesehen, dass die Partikel- und/oder Aerosolfilterschicht 5 als ein Gelege oder Textilverbundstoff, insbesondere Vlies (Non-Woven), besonders bevorzugt als ein Vlies (Non-Woven), von Polyurethanfasern ausgebildet ist und/oder vorliegt.

Schließlich ist es im Rahmen der vorliegenden Erfindung vorgesehen, dass die Partikel- und/oder Aerosolfilterschicht 5 durch Elektrospinnen, Meltblow-Verfahren oder eine Kombination dieser beiden Verfahren, vorzugsweise durch eine Kombination von Elektrospinnen und Meltblow-Verfahren, hergestellt ist. Hierdurch wird eine besonders gute Leistungsfähigkeit der Partikel- und/oder Aerosolfilterschicht 5 erreicht. Ganz besonders bevorzugt ist die Herstellung durch eine Kombination von Elektrospinnen und Meltblow-Verfahren, da auf diese Weise unterschiedlich dichte Abschnitte in der Partikel- und/oder Aerosolfilterschicht 5 resultieren, die insgesamt zu einer ausgezeichneten Leistungsfähigkeit führen.

Was die Anordnung und Fixierung der Partikel- und/oder Aerosolfilterschicht 5 innerhalb des Schutzmaterials 1 bzw. der Schutzbekleidung 8 anbelangt, so ist hierzu Folgendes auszuführen:
Insbesondere kann es erfindungsgemäß vorgesehen sein, dass die Partikel- und/oder Aerosolfilterschicht 5 unmittelbar auf der Adsorptionsschicht 4 angeordnet, insbesondere auf und/oder an der Adsorptionsschicht 4 fixiert, vorzugsweise hierauf laminiert, ist.

Weiterhin kann es im Rahmen der vorliegenden Erfindung insbesondere vorgesehen sein, dass die Partikel- und/oder Aerosolfilterschicht 5 auf und/oder an der Adsorptionsschicht 4 fixiert ist, vorzugsweise mittels Laminierung, insbesondere wobei die Partikel- und/oder Aerosolfilterschicht 5 außerdem auf und/oder an der Abdeckschicht 6 fixiert ist, vorzugsweise mittels Laminierung.

Schließlich kann es im Rahmen der vorliegenden Erfindung vorgesehen sein, dass die Partikel- und/oder Aerosolfilterschicht 5 auf und/oder an der Adsorptionsschicht 4 fixiert ist, vorzugsweise mittels Laminierung, und wobei die Partikel- und/oder Aerosolfilterschicht 5 außerdem auf und/oder an der Abdeckschicht 6 fixiert ist, vorzugsweise mittels Laminierung.

Gemäß einer besonderen Ausführungsform der vorliegenden Erfindung ist es weiterhin vorgesehen, dass die Partikel- und/oder Aerosolfilterschicht 5 ein durch und/oder aus Textilfasern, insbesondere synthetische Textilfasern, vorzugsweise Polyurethanfasern, gebildetes textiles Flächengebilde mit einer durch die Textilfasern begrenzten Vielzahl von Poren oder Maschen ist; insbesondere wobei die Partikel- und/oder Aerosolfilterschicht 5 eine mittlere Porengröße oder mittlere Maschenweite von höchstens 200 µm, insbesondere von höchstens 100 µm, vorzugsweise von höchstens 75 µm, besonders bevorzugt von höchstens 50 µm, ganz besonders bevorzugt von höchstens 40 µm, noch mehr bevorzugt von höchstens 10 µm, aufweist und/oder insbesondere wobei die Partikel- und/oder Aerosolfilterschicht 5 eine mittlere Porengröße oder mittlere Maschenweite im Bereich von 0,5 µm bis 200 µm, insbesondere im Bereich von 0,75 µm bis 100 µm, vorzugsweise im Bereich von 1 µm bis 75 µm, besonders bevorzugt im Bereich von 1,5 µm bis 50 µm, ganz besonders bevorzugt im Bereich von 1,75 µm bis 40 µm, noch mehr bevorzugt im Bereich von 2 µm bis 10 µm, aufweist. Hierdurch ist eine besonders gute Leistungsfähigkeit der erfindungsgemäß eingesetzten Partikel- und/oder Aerosolfilterschicht 5 gegeben.

Weiterhin kann es im Rahmen der vorliegenden Erfindung vorgesehen sein, dass die Partikel- und/oder Aerosolfilterschicht 5 Poren oder Maschen, insbesondere eine Vielzahl von Poren oder Maschen, aufweist; insbesondere wobei die mittlere Porengröße oder mittlere Maschenweite höchstens 200 µm, insbesondere höchstens 100 µm, vorzugsweise höchstens 75 µm, besonders bevorzugt höchstens 50 µm, ganz besonders bevorzugt höchstens 40 µm, noch mehr bevorzugt höchstens 10 µm, beträgt und/oder insbesondere wobei die mittlere Porengröße oder mittlere Maschenweite im Bereich von 0,5 µm bis 200 µm, insbesondere im Bereich von 0,75 µm bis 100 µm, vorzugsweise im Bereich von 1 µm bis 75 µm, besonders bevorzugt im Bereich von 1,5 µm bis 50 µm, ganz besonders bevorzugt im Bereich von 1,75 µm bis 40 µm, noch mehr bevorzugt im Bereich von 2 µm bis 10 µm, liegt. Auf diese Weise wird eine besonders gute Leistungsfähigkeit der Partikel- und/oder Aerosollfilterschicht 5 erreicht.

Gemäß einer weiteren besonderen Ausführungsform der vorliegenden Erfindung kann es vorgesehen sein, dass die Partikel- und/oder Aerosolfilterschicht 5 ein durch und/oder aus Textilfasern, insbesondere synthetische Textilfasern, vorzugsweise Polyurethanfasern, gebildetes textiles Flächengebilde mit durch die Textilfasern begrenzten Poren oder Maschen ist; insbesondere wobei das Verhältnis der mittleren Porengröße oder Maschenweite zum mittleren Durchmesser der Textilfasern im Bereich von 0,1 bis 2.000, insbesondere im Bereich von 1 bis 500, vorzugsweise im Bereich von 5 bis 350, besonders bevorzugt im Bereich von 10 bis 300, ganz besonders bevorzugt im Bereich von 25 bis 250, liegt.

Weiterhin ist die erfindungsgemäß eingesetzte Partikel- und/oder Aerosolfilterschicht 5 durch eine Reihe von Leistungsparametern definiert, um eine besonders gute Schutzleistung innerhalb des Schutzmaterials 1 bzw. der Schutzbekleidung 8 zu gewährleisten:
Insbesondere ist es erfindungsgemäß vorgesehen, dass die Partikel- und/oder Aerosolfilterschicht 5 einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweist und/oder dass die Partikel- und/oder Aerosolfilterschicht 5 einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweist.

Weiterhin ist es erfindungsgemäß vorgesehen, dass die Partikel- und/oder Aerosolfilterschicht 5 einen integralen Anfangsdurchlassgrad Di nach DIN EN 1822 (April 1998; DEHS-Aerosol, MPPS = 0,1 bis 0,3 µm) von höchstens 60 %, insbesondere höchstens 50 %, vorzugsweise höchstens 40 %, besonders bevorzugt höchstens 30 %, ganz besonders bevorzugt höchstens 20 %, aufweist.

Außerdem ist es im Rahmen der vorliegenden Erfindung vorgesehen, dass die Partikel- und/oder Aerosolfilterschicht 5 bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist und/oder dass die Partikel- und/oder Aerosolfilterschicht 5 bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweist.

Außerdem ist es im Rahmen der vorliegenden Erfindung vorgesehen, dass die Partikel- und/oder Aerosolfilterschicht 5 einen Abscheidegrad, insbesondere Fraktionsabscheidegrad, von mindestens 80 %, insbesondere von mindestens 85 %,vorzugsweise von mindestens 90 %, aufweist, bestimmt nach DIN EN 1822 bei einer Druckdifferenz von 15 Pascal mit Kaliumchlorid (KCI) als Testsubstanz als Mindestwirkungsgrad (MPPS, insbesondere MPPS = 0,1 µm bis 0,3 µm).

Die Ausbildung der Partikel- und/oder Aerosolfilterschicht 5 in der zuvor beschriebenen Weise gewährleistet eine gute Schutzleistung bei gleichzeitig gutem Tragekomfort, insbesondere ausreichender Wasserdampf- und Luftdurchlässigkeit.

Was die Dicke der Partikel- und/oder Aerosolfilterschicht 5 anbelangt, so kann diese in weiten Bereichen variieren. Insbesondere ist es erfindungsgemäß vorgesehen, dass die Partikel- und/oder Aerosolfilterschicht 5 eine Dicke im Bereich von 0,001 mm bis 5 mm, insbesondere im Bereich von 0,01 mm bis 2,5 mm, vorzugsweise im Bereich von 0,01 mm bis 1 mm, noch mehr bevorzugt im Bereich von 0,05 bis 0,8 mm aufweist, insbesondere bestimmt gemäß DIN EN ISO 5084.

Weiterhin ist es erfindungsgemäß bevorzugt, dass die Partikel- und/oder Aerosolfilterschicht 5 als ein HEPA-Filter (High Efficiency Penetration oder Particulate Air) oder ULPA-Filter (Ultra Low Penetration oder Particulate Air) ausgebildet ist.

Gemäß einer besonders bevorzugten Ausführungsform der vorliegenden Erfindung ist es vorgesehen, dass die Partikel- und/oder Aerosolfilterschicht 5 als ein durch und/oder aus Textilfasern, insbesondere Polyurethanfasern, mit Faserdurchmessern im Bereich von 10 nm bis 5 µm, bevorzugt 100 nm bis 1,1 µm, gebildetes luftdurchlässiges textiles Flächengebilde in Form eines Vliesstoffes (Vlieses, Non-Woven), vorzugsweise mit einem Flächengewicht (insbesondere bestimmt gemäß DIN EN 12127, vorzugsweise nach 1-stündiger Trocknung bei 105 °C) im Bereich von 2 g/m² bis 100 g/m², insbesondere im Bereich von 5 g/m² bis 90 g/m², besonders bevorzugt im Bereich von 10 g/m² bis 80 g/m², ausgebildet ist, wobei die Partikel- und/oder Aerosolfilterschicht 5 durch Elektrospinnen, Meltblow-Verfahren oder eine Kombination dieser beiden Verfahren hergestellt ist. Hierdurch wird eine besonders gute Leistungsfähigkeit der Partikel- und/oder Aerosolfilterschicht 5 bei gleichzeitig gutem Tragekomfort, insbesondere Wasserdampfdurchlässigkeit und Gasdurchlässigkeit erreicht.

Erfindungsgemäß geeignete Materialien mit den vorgenannten Eigenschaften für die Ausbildung einer wie zuvor beschriebenen Partikel- und/oder Aerosolfilterschicht 5 sind dem auf diesem Gebiet tätigen Fachmann als solches bekannt und geläufig, so dass es diesbezüglich keiner weiterführenden Ausführungen bedarf (vgl. z. B. hierzu auch EP 1 825 899, US 8 062 411, US 2007/0240576 A1, EP 2 160 228, US 8 366 816 etc.).

Was die textile Abdeckschicht 6 anbelangt, so ist hierzu Folgendes auszuführen:
Insbesondere ist es im Rahmen der vorliegenden Erfindung - wie zuvor ausgeführt - vorgesehen, dass die Abdeckschicht 6 als vorzugsweise gasdurchlässiges textiles Flächengebilde ausgebildet ist und/oder vorliegt.

Bevorzugt ist es erfindungsgemäß vorgesehen, dass die Abdeckschicht 6 als ein luftdurchlässiges textiles Flächengebilde, bevorzugt als eine Maschenware, insbesondere als Gewirke (Wirkware) oder Gestrick (Strickware), ausgebildet ist.

Insbesondere wird erfindungsgemäß derart vorgegangen, dass die Abdeckschicht 6 Naturfasern und/oder synthetischen Fasern (Chemiefasern), bevorzugt Naturfasern, besonders bevorzugt Baumwollfasern, umfasst oder hieraus gebildet ist.

Weiterhin kann es erfindungsgemäß vorgesehen sein, dass die Abdeckschicht 6 Naturfasern, besonders bevorzugt Baumwollfasern, gegebenenfalls in Kombination mit synthetischen Fasern (Chemiefasern), umfasst oder hieraus gebildet ist.

Darüber hinaus kann erfindungsgemäß derart vorgegangen werden, dass die Abdeckschicht 6 Naturfasern, besonders bevorzugt Baumwollfasern, gegebenenfalls in Kombination mit synthetischen Fasern (Chemiefasern), vorzugsweise Elastanfasern, umfasst oder hieraus gebildet ist. Auf diese Weise wird eine gute Beständigkeit und Belastbarkeit im Anwendungszustand erreicht, da auf diese Weise die Abdeckschicht 6 eine gute Elastizität und Dehnfähigkeit aufweist.

Schließlich kann es erfindungsgemäß vorgesehen sein, dass die Abdeckschicht 6 ein Flächengewicht (insbesondere bestimmt als Trockengewicht) im Bereich von 10 g/m² bis 275 g/m², insbesondere im Bereich von 15 g/m² bis 175 g/m², vorzugsweise im Bereich von 25 g/m² bis 150 g/m², besonders bevorzugt im Bereich von 30 g/m² bis 100 g/m², aufweist, insbesondere bestimmt gemäß DIN EN 12127, vorzugsweise nach 1-stündiger Trocknung bei 105 °C.

Erfindungsgemäß geeignete Materialien mit den vorgenannten Eigenschaften für die Ausbildung einer wie zuvor beschriebenen Abdeckschicht 6 sind dem auf diesem Gebiet tätigen Fachmann als solches bekannt und geläufig, so dass es diesbezüglich keiner weiterführenden Ausführungen bedarf.

Was schließlich die weitere oder zweite Abdeckschicht 7 anbelangt, so ist diesbezüglich Folgendes auszuführen:
Insbesondere kann es im Rahmen der vorliegenden Erfindung vorgesehen sein, dass die weitere oder zweite Abdeckschicht 7 als vorzugsweise gasdurchlässiges textiles Flächengebilde ausgebildet ist und/oder vorliegt.

Darüber hinaus kann es im Rahmen der vorliegenden Erfindung vorgesehen sein, dass die weitere oder zweite Abdeckschicht 7 als ein luftdurchlässiges textiles Flächengebilde, bevorzugt als eine Maschenware, insbesondere als Gewirke (Wirkware) oder Gestrick (Strickware), ausgebildet ist.

Außerdem kann im Rahmen der vorliegenden Erfindung derart vorgegangen werden, dass die weitere oder zweite Abdeckschicht 7 Naturfasern und/oder synthetischen Fasern (Chemiefasern), bevorzugt Naturfasern, besonders bevorzugt Baumwollfasern, umfasst oder hieraus gebildet ist.

Des Weiteren kann im Rahmen der vorliegenden Erfindung derart vorgegangen werden, dass die weitere oder zweite Abdeckschicht 7 Naturfasern, besonders bevorzugt Baumwollfasern, gegebenenfalls in Kombination mit synthetischen Fasern (Chemiefasern), umfasst oder hieraus gebildet ist.

Gemäß einer erfindungsgemäß bevorzugten Ausführungsform kann es vorgesehen sein, dass die weitere oder zweite Abdeckschicht 7 Naturfasern, besonders bevorzugt Baumwollfasern, gegebenenfalls in Kombination mit synthetischen Fasern (Chemiefasern), vorzugsweise Elastanfasern, umfasst oder hieraus gebildet ist.

Schließlich kann es im Rahmen der vorliegenden Erfindung vorgesehen sein, dass die weitere oder zweite Abdeckschicht 7 ein Flächengewicht (insbesondere bestimmt als Trockengewicht) im Bereich von 10 g/m² bis 275 g/m², insbesondere im Bereich von 15 g/m² bis 175 g/m², vorzugsweise im Bereich von 25 g/m² bis 150 g/m², besonders bevorzugt im Bereich von 30 g/m² bis 100 g/m², aufweist, insbesondere bestimmt gemäß DIN EN 12127, vorzugsweise nach 1-stündiger Trocknung bei 105 °C.

Erfindungsgemäß geeignete Materialien mit den vorgenannten Eigenschaften für die Ausbildung einer wie zuvor beschriebenen weiteren oder zweiten Abdeckschicht 7 sind dem auf diesem Gebiet tätigen Fachmann als solches bekannt und geläufig, so dass es diesbezüglich keiner weiterführenden Ausführungen bedarf.

Auf Basis der Ausbildung der einzelnen Schichten 2, 3, 4, 5, 6 und 7 wird ein besonders leistungsfähiges Schutzmaterial 1 bzw. eine besonders leistungsfähige Schutzbekleidung 8 bereitgestellt, wie eingangs geschildert, einhergehend mit den zuvor beschriebenen Vorteilen und Besonderheiten.

Entsprechend einer besonders bevorzugten Ausführungsform der vorliegenden Erfindung gemäß dem ersten Erfindungsaspekt ist Gegenstand der vorliegenden Erfindung die Verwendung einer Schutzbekleidung 8 (d. h. textilen Schutzbekleidung), bevorzugt in Form einer Schutzunterbekleidung (Schutzunterwäsche), zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination"), insbesondere eine Verwendung wie zuvor gemäß dem ersten Erfindungsaspekt beschrieben,
wobei die Schutzbekleidung 8 ein textiles Schutzmaterial 1 aufweist oder hieraus gebildet ist,
wobei das textile Schutzmaterial 1 als ein mehrlagiges, eine Mehrzahl von miteinander verbundenen Lagen 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde, bevorzugt als eine Maschenware, insbesondere als Gewirke (Wirkware) oder Gestrick (Strickware), vorliegt und/oder ausgebildet ist, wobei die textile Trägerschicht 2 Naturfasern und/oder synthetischen Fasern (Chemiefasern), bevorzugt Naturfasern, besonders bevorzugt Baumwollfasern, umfasst oder hieraus gebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist, wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von über die Trägerschicht 2 verteilten Klebstoff(polymer)punkten ausgebildet ist, vorzugsweise in Form eines getrockneten und/oder ausgehärteten, insbesondere vernetzten, gebrochenen Klebstoffpolymerschaums, und wobei die Haftmittelschicht 3 teilweise in die textile Trägerschicht 2 eingedrungen vorliegt und/oder sich in die textile Trägerschicht 2 hineinerstreckt,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist, wobei die Adsorberpartikel 4a der Adsorptionsschicht 4 Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikeln in Kugelform, sind,
      insbesondere wobei die Adsorberpartikel 4a der Adsorptionsschicht 4 derart an der Haftmittelschicht 3 fixiert und/oder zum Haften gebracht sind, dass 30 % bis 95 % der Oberfläche der Adsorberpartikel 4a nicht mit Klebstoff(polymer) bedeckt sind,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde in Form eines Vliesstoffes (Vlieses, Non-Woven), welches eine Vielzahl einzelner Textilfasern, insbesondere Polyurethanfasern, mit Faserdurchmessern im Bereich von 10 nm bis 5 µm umfasst oder hieraus gebildet ist, vorliegt und/oder ausgebildet ist, wobei die Partikel- und/oder Aerosolfilterschicht 5 durch Elektrospinnen, Meltblow-Verfahren oder bevorzugt durch eine Kombination dieser beiden Verfahren hergestellt ist,
   (e) gegebenenfalls eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde, bevorzugt als eine Maschenware, insbesondere als Gewirke (Wirkware) oder Gestrick (Strickware), vorliegt und/oder ausgebildet ist, wobei die Abdeckschicht 6 Naturfasern, besonders bevorzugt Baumwollfasern, gegebenenfalls in Kombination mit synthetischen Fasern (Chemiefasern), vorzugsweise Elastanfasern, umfasst oder hieraus gebildet ist;
wobei das Schutzmaterial 1 und/oder die Schutzbekleidung 8 gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist,
   insbesondere wobei das Schutzmaterial 1 und/oder die Schutzbekleidung 8 eine Gasdurchlässigkeit, insbesondere Luftdurchlässigkeit, bei einem Strömungswiderstand von 100 Pascal, insbesondere bestimmt gemäß DIN EN ISO 9237, im Bereich von 0,5 mm/s bis 500 mm/s, insbesondere im Bereich von 1 mm/s bis 450 mm/s, vorzugsweise im Bereich von 2,5 mm/s bis 400 mm/s, besonders bevorzugt im Bereich von 3,5 mm/s bis 300 mm/s, ganz besonders bevorzugt im Bereich von 5 mm/s bis 250 mm/s, aufweist; und/oder
   insbesondere wobei das Schutzmaterial 1 und/oder die Schutzbekleidung 8 einen Wasserdampfdurchgangswiderstand (Rₑₜ), insbesondere bestimmt gemäß DIN EN 343:2019, von höchstens 15 m² Pa / Watt, insbesondere von höchstens 10 m² Pa / Watt, bevorzugt von höchstens 8 m² Pa / Watt, vorzugsweise von höchstens 7 m² Pa / Watt, noch mehr bevorzugt von höchstens 6 m² Pa / Watt, ganz besonders bevorzugt von höchstens 5 m² Pa / Watt, aufweist;
   und/oder
wobei das Schutzmaterial 1 und/oder die Schutzbekleidung 8 einen Abscheidegrad, insbesondere Fraktionsabscheidegrad, von mindestens 90 % aufweist, bestimmt nach DIN EN 1822 bei einer Druckdifferenz von 15 Pascal mit Kaliumchlorid (KCI) als Testsubstanz als Mindestwirkungsgrad (MPPS, insbesondere MPPS = 0,1 µm bis 0,3 µm);
   und/oder
wobei das Schutzmaterial 1 und/oder die Schutzbekleidung 8 eine Butanadsorption, bestimmt gemäß ASTM D5742-16, von mindestens 20 g/m² aufweist;
insbesondere wobei die Schutzbekleidung 8 als Schutzunterbekleidung (Schutzunterwäsche) in Kombination mit einer Schutzoberbekleidung, insbesondere in Kombination mit einer Arbeitsschutzoberbekleidung, vorzugsweise in Kombination mit einer persönlichen Schutzausrüstung, eingesetzt wird; und/oder
insbesondere wobei die Schutzbekleidung 8 in Form mindestens eines Schutzbekleidungsstücks 8a, 8b, 8c, vorzugsweise in Form einer Mehrzahl von insbesondere zueinander komplementärer Schutzbekleidungsstücke 8a, 8b, 8c, bevorzugt in Form einer Schutzunterbekleidung (Schutzunterwäsche) und/oder bevorzugt zum Schutz von Unterkörper, Oberkörper und Kopf, ausgebildet ist und/oder vorliegt, insbesondere ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen, bevorzugt ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen.

Entsprechend einer besonders bevorzugten Ausführungsform gemäß dem weiteren vorliegend beschriebenen Aspekt ist vorliegend beschriebener Gegenstand die Verwendung eines textilen Schutzmaterials 1, insbesondere in Form einer Schutzbekleidung 8, bevorzugt in Form einer Schutzunterbekleidung (Schutzunterwäsche), zur Verhinderung oder Minimierung einer Kontamination mit aus einer Kontaminationsquelle freigesetzten polyzyklischen aromatischen Kohlenwasserstoffen ("PAK-Kontamination"), insbesondere zum Schutz von einer Einwirkung von polyzyklischen aromatischen Kohlenwasserstoffen (PAKs) ausgesetzten Personen, insbesondere eine Verwendung wie zuvor gemäß dem weiteren vorliegend beschriebenen Aspekt beschrieben,
wobei das textile Schutzmaterial 1 als ein mehrlagiges, eine Mehrzahl von miteinander verbundenen Lagen 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde, bevorzugt als eine Maschenware, insbesondere als Gewirke (Wirkware) oder Gestrick (Strickware), vorliegt und/oder ausgebildet ist, wobei die textile Trägerschicht 2 Naturfasern und/oder synthetischen Fasern (Chemiefasern), bevorzugt Naturfasern, besonders bevorzugt Baumwollfasern, umfasst oder hieraus gebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist, wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von über die Trägerschicht 2 verteilten Klebstoff(polymer)punkten ausgebildet ist, vorzugsweise in Form eines getrockneten und/oder ausgehärteten, insbesondere vernetzten, gebrochenen Klebstoffpolymerschaums, und wobei die Haftmittelschicht 3 teilweise in die textile Trägerschicht 2 eingedrungen vorliegt und/oder sich in die textile Trägerschicht 2 hineinerstreckt,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist, wobei die Adsorberpartikel 4a der Adsorptionsschicht 4 Aktivkohlepartikel, vorzugsweise in Form von Aktivkohlepartikeln in Kornform ("Kornkohle") oder Aktivkohlepartikeln in Kugelform ("Kugelkohle"), bevorzugt in Form von Aktivkohlepartikeln in Kugelform, sind,
      insbesondere wobei die Adsorberpartikel 4a der Adsorptionsschicht 4 derart an der Haftmittelschicht 3 fixiert und/oder zum Haften gebracht sind, dass 30 % bis 95 % der Oberfläche der Adsorberpartikel 4a nicht mit Klebstoff(polymer) bedeckt sind,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde in Form eines Vliesstoffes (Vlieses, Non-Woven), welches eine Vielzahl einzelner Textilfasern, insbesondere Polyurethanfasern, mit Faserdurchmessern im Bereich von 10 nm bis 5 µm umfasst oder hieraus gebildet ist, vorliegt und/oder ausgebildet ist, wobei die Partikel- und/oder Aerosolfilterschicht 5 durch Elektrospinnen, Meltblow-Verfahren oder bevorzugt durch eine Kombination dieser beiden Verfahren hergestellt ist,
   (e) gegebenenfalls eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde, bevorzugt als eine Maschenware, insbesondere als Gewirke (Wirkware) oder Gestrick (Strickware), vorliegt und/oder ausgebildet ist, wobei die Abdeckschicht 6 Naturfasern, besonders bevorzugt Baumwollfasern, gegebenenfalls in Kombination mit synthetischen Fasern (Chemiefasern), vorzugsweise Elastanfasern, umfasst oder hieraus gebildet ist;
wobei das Schutzmaterial 1 und/oder die Schutzbekleidung 8 gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist,
   insbesondere wobei das Schutzmaterial 1 und/oder die Schutzbekleidung 8 eine Gasdurchlässigkeit, insbesondere Luftdurchlässigkeit, bei einem Strömungswiderstand von 100 Pascal, insbesondere bestimmt gemäß DIN EN ISO 9237, im Bereich von 0,5 mm/s bis 500 mm/s, insbesondere im Bereich von 1 mm/s bis 450 mm/s, vorzugsweise im Bereich von 2,5 mm/s bis 400 mm/s, besonders bevorzugt im Bereich von 3,5 mm/s bis 300 mm/s, ganz besonders bevorzugt im Bereich von 5 mm/s bis 250 mm/s, aufweist; und/oder
   insbesondere wobei das Schutzmaterial 1 und/oder die Schutzbekleidung 8 einen Wasserdampfdurchgangswiderstand (Rₑₜ), insbesondere bestimmt gemäß DIN EN 343:2019, von höchstens 15 m² Pa / Watt, insbesondere von höchstens 10 m² Pa / Watt, bevorzugt von höchstens 8 m² Pa / Watt, vorzugsweise von höchstens 7 m² Pa / Watt, noch mehr bevorzugt von höchstens 6 m² Pa / Watt, ganz besonders bevorzugt von höchstens 5 m² Pa / Watt, aufweist;
   und/oder
wobei das Schutzmaterial 1 und/oder die Schutzbekleidung 8 einen Abscheidegrad, insbesondere Fraktionsabscheidegrad, von mindestens 90 % aufweist, bestimmt nach DIN EN 1822 bei einer Druckdifferenz von 15 Pascal mit Kaliumchlorid (KCI) als Testsubstanz als Mindestwirkungsgrad (MPPS, insbesondere MPPS = 0,1 µm bis 0,3 µm);
   und/oder
wobei das Schutzmaterial 1 und/oder die Schutzbekleidung 8 eine Butanadsorption, bestimmt gemäß ASTM D5742-16, von mindestens 20 g/m² aufweist;
insbesondere wobei die Schutzbekleidung 8 als Schutzunterbekleidung (Schutzunterwäsche) in Kombination mit einer Schutzoberbekleidung, insbesondere in Kombination mit einer Arbeitsschutzoberbekleidung, vorzugsweise in Kombination mit einer persönlichen Schutzausrüstung, eingesetzt wird; und/oder
insbesondere wobei die Schutzbekleidung 8 in Form mindestens eines Schutzbekleidungsstücks 8a, 8b, 8c, vorzugsweise in Form einer Mehrzahl von insbesondere zueinander komplementärer Schutzbekleidungsstücke 8a, 8b, 8c, bevorzugt in Form einer Schutzunterbekleidung (Schutzunterwäsche) und/oder bevorzugt zum Schutz von Unterkörper, Oberkörper und Kopf, ausgebildet ist und/oder vorliegt, insbesondere ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, (iii) Schutzkopfbedeckung 8c, insbesondere Schutzkopfhaube, Schutzkapuze oder Schutzbalaklava, (iv) Schutzoverall, Schutzeinteiler oder Schutz-Ganzanzug, (v) Schutzhandbedeckung, insbesondere Schutzhandschuh, und (vi) Schutzfußbedeckung, insbesondere Schutzstrumpf, Schutzsocke oder Schutzfüßling, sowie deren Kombinationen, bevorzugt ausgewählt aus und/oder in Form von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube, Schutzkapuze oder Schutzbalaklava, sowie deren Kombinationen.

Weiterhin kann es erfindungsgemäß vorgesehen sein, dass das erfindungsgemäß eingesetzte Schutzmaterial 1 und/oder die erfindungsgemäß eingesetzte Schutzbekleidung 8 mit einer flammhemmenden oder flammresistenten Ausrüstung versehen ist, insbesondere mit einer flammhemmenden oder flammresistenten Ausrüstung auf Basis halogen- und/oder phosphorhaltiger Flammschutzmittel, bevorzugt Phosphatester, Phosphonate, Phosphinate. Insbesondere kann es dabei erfindungsgemäß vorgesehen sein, dass die flammhemmende oder flammresistente Ausrüstung durch Imprägnierung des Schutzmaterials 1 und/oder der Schutzbekleidung 8 mit dem Flammschutzmittel erfolgt ist. Hierdurch wird eine nochmals gesteigerte Schutzwirkung erzielt.

Die erfindungsgemäßen Verwendungen sowohl gemäß dem ersten Erfindungsaspekt als auch gemäß dem weiteren vorliegend beschriebenen Aspekt ermöglichen zahlreiche Anwendungen.

So können die erfindungsgemäßen Verwendungen sowohl gemäß dem ersten Erfindungsaspekt als auch gemäß dem weiteren vorliegend beschriebenen Aspekt insbesondere eingesetzt werden zum Schutz von Personen gegenüber polyzyklische aromatische Kohlenwasserstoffe enthaltenden Gasen, insbesondere Abgasen oder Rauchgasen, von Verbrennungs- und/oder Hochtemperaturprozessen, insbesondere zum Schutz von Personen gegenüber polyzyklische aromatische Kohlenwasserstoffe enthaltenden Gasen, insbesondere Abgasen oder Rauchgasen, von, aus oder in Bränden, Kokereien, Gießereien Stahlwerken, Verhüttungsprozessen, Metall- und Stahlerzeugungs- und -verarbeitungsprozessen, Hochofenprozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen.

Weiterhin können die erfindungsgemäßen Verwendungen sowohl gemäß dem ersten Erfindungsaspekt als auch gemäß dem weiteren vorliegend beschriebenen Aspekt insbesondere zum Einsatz kommen in Fällen, bei denen die polyzyklischen aromatischen Kohlenwasserstoffe aus Gasen, insbesondere Abgasen oder Rauchgasen, von Verbrennungs- und/oder Hochtemperaturprozessen, stammen, insbesondere aus Gasen, insbesondere Abgasen oder Rauchgasen, von, aus oder in Bränden, Kokereien, Gießereien Stahlwerken, Verhüttungsprozessen, Metall- und Stahlerzeugungs- und -verarbeitungsprozessen, Hochofenprozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen.

Darüber hinaus können die erfindungsgemäßen Verwendungen sowohl gemäß dem ersten Erfindungsaspekt als auch gemäß dem weiteren vorliegend beschriebenen Aspekt insbesondere zum Einsatz kommen in Fällen, bei denen die zu schützenden Personen Feuerwehrleute oder arbeitende Personen in Kokereien, Gießereien Stahlwerken, Verhüttungsprozessen, Metall- und Stahlerzeugungs- und -verarbeitungsprozessen, Hochofenprozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen sind, vorzugsweise Feuerwehrleute.

Bevorzugt können die erfindungsgemäßen Verwendungen sowohl gemäß dem ersten Erfindungsaspekt als auch gemäß dem weiteren vorliegend beschriebenen Aspekt insbesondere zum Einsatz kommen zum Schutz von Feuerwehrleuten gegenüber polyzyklische aromatische Kohlenwasserstoffe enthaltenden Gasen, insbesondere Abgasen oder Rauchgasen, aus Bränden. Insbesondere kann dabei die Schutzbekleidung 8 als Schutzunterbekleidung (Schutzunterwäsche) in Kombination mit einer Schutzoberbekleidung, insbesondere in Kombination mit einer Arbeitsschutzoberbekleidung, vorzugsweise in Kombination mit einer persönlichen Schutzausrüstung, bevorzugt in Kombination mit einer Feuerwehrschutzoberbekleidung nach DIN EN 469, eingesetzt wird. Insbesondere kann in diesem Zusammenhang die Schutzbekleidung 8 in Form einer Schutzunterbekleidung (Schutzunterwäsche), eingesetzt werden und/oder vorliegen, wobei die Schutzbekleidung 8 als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegen und/oder ausgebildet sein kann.

Des Weiteren ist ein wiederum weiterer Gegenstand der vorliegenden Erfindung - gemäß einem **zweiten** Aspekt der vorliegenden Erfindung - ein Verfahren zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination"),
wobei die Personen mit einer Schutzbekleidung 8, bevorzugt in Form einer Schutzunterbekleidung (Schutzunterwäsche), ausgerüstet und/oder versehen, insbesondere bekleidet, werden
wobei die Schutzbekleidung 8 ein textiles Schutzmaterial 1 aufweist oder hieraus gebildet ist,
wobei das textile Schutzmaterial 1 als ein mehrlagiges, eine Mehrzahl von miteinander verbundenen Lagen 2, 3, 4, 5, 6 aufweisendes textiles Verbundmaterial ausgebildet ist,
wobei das textile Schutzmaterial 1 die folgenden Schichten 2, 3, 4, 5, 6, vorzugsweise in der nachfolgend genannten Abfolge, aufweist:
   (a) eine textile Trägerschicht 2, wobei die textile Trägerschicht 2 als ein vorzugsweise gasdurchlässiges, textiles Flächengebilde vorliegt und/oder ausgebildet ist,
   (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
   (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist,
   (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde, welches eine Vielzahl einzelner Textilfasern umfasst oder hieraus gebildet ist, vorliegt und/oder ausgebildet ist,
   (e) gegebenenfalls eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde vorliegt und/oder ausgebildet ist.

Insbesondere erfolgt der Einsatz des erfindungsgemäßen Verfahrens zum Schutz von Personen gegenüber polyzyklische aromatische Kohlenwasserstoffe enthaltenden Gasen, insbesondere Abgasen oder Rauchgasen, von Verbrennungs- und/oder Hochtemperaturprozessen, insbesondere zum Schutz von Personen gegenüber polyzyklische aromatische Kohlenwasserstoffe enthaltenden Gasen, insbesondere Abgasen oder Rauchgasen, von, aus oder in Bränden, Kokereien, Gießereien Stahlwerken, Verhüttungsprozessen, Metall- und Stahlerzeugungs- und -verarbeitungsprozessen, Hochofenprozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen.

Besonders bevorzugt erfolgt der Einsatz des erfindungsgemäßen Verfahrens zum Schutz von Feuerwehrleuten gegenüber polyzyklische aromatische Kohlenwasserstoffe enthaltenden Gasen, insbesondere Abgasen oder Rauchgasen, aus Bränden;

Insbesondere kann dabei - wie zuvor im Zusammenhang mit den erfindungsgemäßen Verwendungen geschildert - die Schutzbekleidung 8 als Schutzunterbekleidung (Schutzunterwäsche) in Kombination mit einer Schutzoberbekleidung, insbesondere in Kombination mit einer Arbeitsschutzoberbekleidung, vorzugsweise in Kombination mit einer persönlichen Schutzausrüstung, bevorzugt in Kombination mit einer Feuerwehrschutzoberbekleidung nach DIN EN 469, eingesetzt werden.

Insbesondere kann dabei weiterhin - wie zuvor im Zusammenhang mit den erfindungsgemäßen Verwendungen geschildert - die Schutzbekleidung 8 in Form einer Schutzunterbekleidung (Schutzunterwäsche), eingesetzt werden und/oder vorliegen, wobei die Schutzbekleidung 8 bevorzugt als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegen und/oder ausgebildet sein kann.

Für weitergehende Einzelheiten zu dem zuvor beschriebenen erfindungsgemäßen Verfahren gemäß dem zweiten Erfindungsaspekt kann Bezug genommen werden auf die obigen Ausführungen zu den zuvor beschriebenen erfindungsgemäßen Verwendungen gemäß dem ersten und dem weiteren vorliegend beschriebenen Aspekt, wobei diese Ausführungen in Bezug auf das erfindungsgemäße Verfahren entsprechend gelten.

Gleichermaßen ist ein wiederum weiterer Gegenstand der vorliegenden Erfindung - gemäß einem **dritten** Aspekt der vorliegenden Erfindung - auch eine Schutzbekleidungskombination zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination") und/oder insbesondere zur Verhinderung oder Minimierung einer Kontamination mit aus einer Kontaminationsquelle freigesetzten polyzyklischen aromatischen Kohlenwasserstoffen ("PAK-Kontamination"), vorzugsweise zum Schutz von einer Einwirkung von polyzyklischen aromatischen Kohlenwasserstoffen (PAKs) ausgesetzten Personen,
wobei die Schutzbekleidungskombination aufweist:
(A) eine Schutzoberbekleidung, insbesondere eine Arbeitsschutzoberbekleidung, vorzugsweise eine persönliche Schutzausrüstung, bevorzugt eine Feuerwehrschutzoberbekleidung nach DIN EN 469; und
(B) eine Schutzbekleidung 8 in Form einer Schutzunterbekleidung (Schutzunterwäsche), insbesondere wobei die Schutzbekleidung 8 als eine Kombination von (i) Schutzbeinkleid 8a, insbesondere Schutzhose, (ii) Schutzoberteil 8b, insbesondere Schutzhemd, Schutz-Shirt oder Schutzpullover, insbesondere einschließlich Bedeckung der Arme, und (iii) Schutzkopfbedeckung 8c, insbesondere Schutzkopfhaube oder Schutzbalaklava, vorliegt und/oder ausgebildet ist;
   wobei die Schutzbekleidung 8 ein textiles Schutzmaterial 1 aufweist oder hieraus gebildet ist,
   wobei das textile Schutzmaterial 1 als ein mehrlagiges, eine Mehrzahl von miteinander verbundenen Lagen 2, 3, 4, 5, 6 aufweisendes textiles Verbundmaterial ausgebildet ist,
   wobei das textile Schutzmaterial 1 die folgenden Schichten 2, 3, 4, 5, 6, vorzugsweise in der nachfolgend genannten Abfolge, aufweist:
      (a) eine textile Trägerschicht 2, wobei die textile Trägerschicht 2 als ein vorzugsweise gasdurchlässiges, textiles Flächengebilde vorliegt und/oder ausgebildet ist,
      (b) eine auf einer Seite der textilen Trägerschicht 2 aufgebrachte Haftmittelschicht 3, wobei die Haftmittelschicht 3 als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
      (c) eine an der Haftmittelschicht 3 fixierte und/oder zum Haften gebrachte, vorzugsweise diskontinuierlich ausgebildete und/oder gasdurchlässige, Adsorptionsschicht 4, wobei die Adsorptionsschicht 4 eine Vielzahl einzelner Adsorberpartikel 4a umfasst oder hieraus gebildet ist,
      (d) eine auf der Adsorptionsschicht 4 angeordnete und/oder mit der Adsorptionsschicht 4 verbundene Partikel- und/oder Aerosolfilterschicht 5, vorzugsweise Partikel- und Aerosolfilterschicht 5, wobei die Partikel- und/oder Aerosolfilterschicht 5 als ein gasdurchlässiges textiles Flächengebilde, welches eine Vielzahl einzelner Textilfasern umfasst oder hieraus gebildet ist, vorliegt und/oder ausgebildet ist,
      (e) gegebenenfalls eine auf der Partikel- und Aerosolfilterschicht 5 angeordnete und/oder mit der Partikel- und Aerosolfilterschicht 5 verbundene Abdeckschicht 6, wobei die Abdeckschicht 6 als vorzugsweise gasdurchlässiges textiles Flächengebilde vorliegt und/oder ausgebildet ist.

Für weitergehende Einzelheiten zu der zuvor beschriebenen erfindungsgemäßen Schutzbekleidungskombination gemäß dem dritten Erfindungsaspekt kann Bezug genommen werden auf die obigen Ausführungen zu den zuvor beschriebenen erfindungsgemäßen anderen Erfindungsaspekten (d. h. erster und zweiter Erfindungsaspekt) sowie zu dem weiteren vorliegend beschriebenen Aspekt, wobei diese Ausführungen in Bezug auf die erfindungsgemäße Schutzbekleidungskombination entsprechend gelten.

Schließlich ist ein wiederum weiterer Gegenstand der vorliegenden Erfindung - gemäß einem **vierten** Aspekt der vorliegenden Erfindung - auch die Verwendung der zuvor unter dem dritten Erfindungsaspekt beschriebenen erfindungsgemäßen Schutzbekleidungskombination zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination ("PAK-Kontamination"), insbesondere zur Verhinderung oder Minimierung einer Kontamination ("PAK-Kontamination") (vgl. Anspruch 15) bzw. die Verwendung der zuvor unter dem dritten Erfindungsaspekt beschriebenen erfindungsgemäßen Schutzbekleidungskombination zur Verhinderung oder Minimierung einer Kontamination mit aus einer Kontaminationsquelle freigesetzten polyzyklischen aromatischen Kohlenwasserstoffen ("PAK-Kontamination"), insbesondere zum Schutz von einer Einwirkung von polyzyklischen aromatischen Kohlenwasserstoffen (PAKs) ausgesetzten Personen (vgl. Anspruch 15).

Für weitergehende Einzelheiten zu der zuvor beschriebenen erfindungsgemäßen Verwendung gemäß dem vierten Erfindungsaspekt kann Bezug genommen werden auf die obigen Ausführungen zu den zuvor beschriebenen erfindungsgemäßen anderen Erfindungsaspekten (d. h. erster bis dritter Erfindungsaspekt) sowie zu dem weiteren vorliegend beschriebenen Aspekt, wobei diese Ausführungen in Bezug auf die erfindungsgemäße Verwendung gemäß dem vierten Erfindungsaspekt entsprechend gelten.

Somit resultiert insgesamt in Bezug auf die vorliegende Erfindung ein hocheffizientes wie äußerst ökonomisches und darüber hinaus auch hochgradig nachhaltiges Konzept zur Erzielung einer Hochleistungsschutzfunktion gegenüber polyzyklischen aromatischen Kohlenwasserstoffen sowohl in gasförmiger als auch in partikulär gebundener Form, so dass mit der vorliegenden Erfindung ein hochwirksamer Schutz von Personen gegenüber einer Einwirkung und/oder Kontamination von aus einer Kontaminationsquelle freigesetzten polyzyklischen aromatischen Kohlenwasserstoffen bei Aufenthalt und/oder Tätigkeit in Örtlichkeiten, in welchen PAK freigesetzt oder vorhanden sind, bzw. ein hochwirksamer Schutz vor einer Einwirkung von PAK ausgesetzten Personen gegenüber einer PAK-Kontamination, insbesondere zur Verhinderung oder Minimierung einer PAK-Kontamination, bereitgestellt werden kann, wobei von besonderem Vorteil ist, dass das erfindungsgemäße Konzept erforderlichenfalls in Kombination mit einer in dem betreffenden Bereich bestehenden bzw. existenten oder üblichen Schutzoberbekleidung, insbesondere Arbeitsschutzoberbekleidung, vorzugsweise persönlichen Schutzausrüstung (PSA), umsetzbar bzw. realisierbar ist. Im Ergebnis resultiert damit ein hocheffizientes und leistungsstarkes sowie extrem ökonomisches und darüber hinaus hochgradig nachhaltiges Schutzkonzept gegenüber polyzyklischen aromatischen Kohlenwasserstoffen in gasförmiger wie partikulär gebundener Form zum Schutz von Personen gegenüber PAK-Kontaminationen.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Bereitstellung der eingesetzten textilen Schutzmaterialien und Schutzbekleidung in Form einer Unterbekleidung (Unterwäsche)

Es werden unterschiedliche textile Schutzmaterialien hergestellt, nämlich zwei erfindungsgemäß eingesetzte Schutzmaterialien (Schutzmaterialien A1 und A2) sowie zwei Vergleichsschutzmaterialien (Schutzmaterialien B1 und B2), wobei alle vorgenannten Schutzmaterialien A1, A2, B1 und B2 dann in an sich bekannter Weise jeweils zu einer dreiteiligen Unterwäsche gemäß Fig. 3 verarbeitet werden (Unterwäsche auf Basis einer dreiteiligen Kombination von (i) Schutzhose, (ii) Schutzhemd einschließlich Bedeckung der Arme und (iii) Schutzkopfhaube/ Schutzbalaklava). Es resultieren vier verschiedene, jeweils dreiteilige Unterwäschekombinationen, welche entsprechend der Schutzmaterialien, auf Basis derer sie hergestellt sind, nachfolgend als "Schutzunterwäsche A1" und "Schutzunterwäsche A2" (jeweils erfindungsgemäß) sowie "Schutzunterwäsche B1" und "Schutzunterwäsche B2" (jeweils Vergleich) bezeichnet werden. Als weitere Vergleichs-Schutzunterwäsche ("Schutzunterwäsche B3") dient eine handelsübliche zweischichtige Feuerwehr-Bestandsunterwäsche mit äußerer Wollschicht und innerer Viskoseschicht, wie sie bei europäischen Feuerwehreinsatzkräften zum Einsatz kommt.

Die Bezeichnungen "innen" und "außen" (z. B. Innenschicht bzw. innere Schicht und Außenschicht bzw. äußere Schicht etc.), wie sie im Rahmen der vorliegenden Erfindung verwendet werden, beziehen sich dabei auf den Anwendungszustand bzw. Tragezustand. Insbesondere ist die Innenschicht bzw. innere Schicht der textilen Schutzmaterialien bzw. Schutzbekleidungsstücke von der PAK-Kontaminationsquelle abgewandt bzw. dem Träger zugewandt und liegt auf der Haut auf, während die Außenschicht bzw. äußere Schicht der textilen Schutzmaterialien bzw. Schutzbekleidungsstücke der PAK-Kontaminationsquelle zugewandt bzw. dem Träger abgewandt ist.

Die jeweils erfindungsgemäßen Schutzunterwäschen "Schutzunterwäsche A1" und "Schutzunterwäsche A2" weisen einen Aufbau des Schutzmaterials gemäß Fig. 1 auf (jedoch ohne die weitere oder zweite Abdeckschicht 7), wobei die Abdeckschicht 6 die Außenschicht bildet und die textile Trägerschicht 2 die Innenschicht bildet. Der Schichtaufbau der "Schutzunterwäsche A1" und der "Schutzunterwäsche A2" ist somit wie folgt (wobei die Bezugszeichen die zuvor angegebene Bedeutung haben):
2 (innen) / 3 / 4 / 5 / 6 (außen)

Die "Schutzunterwäsche A1" und die "Schutzunterwäsche A2" unterscheiden sich dadurch voneinander, dass bei der "Schutzunterwäsche A1" die Haftmittelschicht 3 in Form eines getrockneten und ausgehärteten, d. h. vernetzten, gebrochenen Klebstoffpolymerschaums vorliegt (entspricht Fig. 2A), wohingegen im Fall der "Schutzunterwäsche A2" die Haftmittelschicht 3 in Form eines regelmäßigen Rasters einer Vielzahl von einzelnen, über die textile Trägerschicht 2 verteilten Klebstoff(polymer)punkten ausgebildet ist (entspricht Fig. 2B).

Die Vergleichsunterwäsche "Schutzunterwäsche B1" unterscheidet sich von der erfindungsgemäßen "Unterwäsche A1" durch das Fehlen einer Partikel- und Aerosolfilterschicht 5 (d. h. der Schichtaufbau der "Schutzunterwäsche B1" ist wie folgt: 2 (innen) / 3 / 4 / 6 (außen)).

Die Vergleichsunterwäsche "Schutzunterwäsche B2" dagegen unterscheidet sich von der erfindungsgemäßen "Unterwäsche A1" durch das Fehlen einer Adsorptionsschicht 4 (d. h. der Schichtaufbau der "Schutzunterwäsche B2" ist wie folgt: 2 (innen) / 3 / 5 / 6 (außen)).

Die Beschaffenheit der einzelnen Schichten ist wie folgt:
Als textile Trägerschicht 2 wird jeweils ein gasdurchlässiges textiles Flächengebilde in Form einer Maschenware (nämlich: Gestrick (Strickware)) aus Baumwollfasern eingesetzt.

Die Haftmittelschicht 3 wird jeweils als eine wasserdampf- und gasdurchlässige bzw. diskontinuierlich ausgebildete Klebstoffschicht auf Basis eines Polyurethan-Klebstoffpolymers ausgebildet und wird derart auf die textile Trägerschicht 2 aufgetragen, dass sie teilweise in die textile Trägerschicht 2 eingedrungen vorliegt bzw. dass sie sich in die textile Trägerschicht (2) hineinerstreckt (Auftragsmenge: ca. 30 g/m² Trockengewicht).

Die mittels der Haftmittelschicht 3 an der textilen Trägerschicht 2 fixierte bzw. zum Haften gebrachte, diskontinuierlich ausgebildete und gasdurchlässige Adsorptionsschicht 4 wird durch eine Vielzahl einzelner Adsorberpartikel 4a in Form von Aktivkohlepartikeln in Kugelform ("Kugelkohle") gebildet (Auflagemenge: ca. 38 g/m²,), wobei die Adsorberpartikel 4a derart an der Haftmittelschicht 3 fixiert bzw. zum Haften gebracht sind, dass mehr als 50 % der Oberfläche der Adsorberpartikel 4a nicht mit Klebstoff(polymer) bedeckt sind (bestätigt durch Analyse mittels REM-Aufnahmen).

Die Eigenschaften der als Adsorberpartikel 4a eingesetzten Aktivkohle sind wie folgt: Gesamtporenvolumen (Gesamtporenvolumen nach Gurvich): ca. 1,3 cm³/g, davon > 65 % durch Poren mit Porendurchmessern < 50 nm; spezifische BET-Oberfläche: ca. 2.200 m²/g; mittlerer Durchmesser der Partikel: ca. 0,06 mm; Aktivkohlepartikel auf Basis einer polymerbasierten sphärischen Aktivkohle (PBSAC; *Polymer-based Spherical Activated Carbon*); Aktivkohlepartikel hergestellt durch Carbonisierung und nachfolgende Aktivierung eines synthetischen partikulären Ausgangsmaterials auf Basis organischer Polymerpartikel (= sulfonierte organische Polymere auf Basis von divinylbenzolvernetztem Polystyrol). Die Aktivkohle weist eine Abriebfestigkeit, bestimmt gemäß ASTM D3802:2016, von ca. 100 % auf. Die Butanadsorption, bestimmt gemäß ASTM D5742-16, liegt bei ca. 55 % und die Iodzahl, bestimmt gemäß ASTM D4607:2014, liegt bei ca. 1.250 mg/g.

Die Schutzmaterialien der Unterwäschen A1 und A2 sowie B1 und B2 werden hergestellt, indem die einzelnen Schichten in an sich bekannter Weise laminiert werden.

Zunächst wird zur Herstellung der Schutzmaterialien A1, A2, B1 und B2 die Haftmittelschicht 3 auf die textilen Trägerschicht 2 aufgetragen:
Im Fall der Schutzmaterialien A1 sowie B1 wird entsprechend der WO 2017/016694 A1 vorgegangen (vgl. auch Fig. 2A) und zu diesem Zweck eine zuvor unter mechanischem Energieeintrag aufgeschäumte, wässrig basierte Lösung bzw. Dispersion eines Polyurethan-Klebstoffpolymers auf die textile Trägerschicht 2 aufgetragen (Nassauftragsmenge: 60 g/m² bei einer Dicke von etwa 0,2 bis 0,4 mm; Dispersionsklebstoff) (einhergehend mit einem teilweisen Eindringen des Klebstoffpolymers in die textile Trägerschicht 2), woran dann im noch feuchten Zustand des Klebstoffpolymers die Adsorberpartikel 4a durch Aufstreuen und leichtes Andrücken aufgebracht bzw. fixiert werden mit der Maßgabe, dass mehr als 50 % der Oberfläche der Adsorberpartikel 4a nicht mit Klebstoffpolymer bedeckt sind; es folgt eine Trocknung und Aushärtung der Lösung bzw. Dispersion des Klebstoffpolymers zur weiterführenden Fixierung der Adsorberpartikel 4a und zur Ausbildung bzw. zum Erhalt des getrockneten und ausgehärteten gebrochenen Klebstoffpolymerschaums bzw. der ausgehärteten Klebstoffschicht 3 mit dem gebrochenen Schaum (Trocknung und Aushärtung bei Temperaturen im Bereich zwischen 100 °C und 150 °C). Im Fall des Schutzmaterials B2 wird analog vorgegangen, wobei jedoch die Aufbringung der Adsorptionsschicht 4 bzw. der Adsorberpartikel 4a entfällt.

Im Fall des Schutzmaterials A2 (vgl. auch Fig. 2B) wird dagegen über eine Schablone ein aufgeschmolzenes polyurethanbasiertes Klebstoffpolymer (Schmelzklebstoff) in Form eines regelmäßigen Rasters einer Vielzahl von über die textile Trägerschicht 2 verteilten einzelnen Klebstoffpolymerpunkten aufgebracht bzw. aufgedruckt (einhergehend mit einem teilweisen Eindringen des Klebstoffpolymers in die textile Trägerschicht 2), woran dann im noch unvernetzten Zustand des Klebstoffpolymers die Adsorberpartikel 4a durch Aufstreuen und leichtes Andrücken aufgebracht bzw. fixiert werden mit der Maßgabe, dass mehr als 50 % der Oberfläche der Adsorberpartikel 4a nicht mit Klebstoffpolymer bedeckt sind; es folgt eine Aushärtung bzw. Vernetzung des Klebstoffpolymers zur weiterführenden Fixierung der Adsorberpartikel 4a.

Auf die auf diese Weise mittels der Haftmittelschicht 3 an der textilen Trägerschicht 2 fixierte Adsorptionsschicht 4 mit der Vielzahl einzelner Adsorberpartikel 4a werden dann in an sich bekannter Weise im Fall der Schutzmaterialien A1 und A2 die übrigen Schichten 5 und 6 (d. h. Partikel- und Aerosolfilterschicht 5 sowie textile Abdeckschicht 6) auflaminiert; im Fall des Vergleichsschutzmaterials B1 entfällt dagegen die Partikel- und Aerosolfilterschicht 5 (d. h. Auflaminieren nur der textilen Abdeckschicht 6 unmittelbar auf die Adsorptionsschicht 4).

Die Herstellung des Vergleichsschutzmaterials B2 erfolgt in entsprechender Weise, jedoch unter Entfallen bzw. Weglassen der Adsorptionsschicht 4, wie zuvor beschrieben.

Auf diese Weise resultieren die beiden erfindungsgemäßen Schutzmaterialien A1 und A2 einerseits sowie die zwei Vergleichsschutzmaterialien (d. h. Schutzmaterialien B1 und B2) andererseits, wobei alle vorgenannten Schutzmaterialien A1, A2, B1 und B2 in an sich bekannter Weise jeweils zu einer dreiteiligen Unterwäsche gemäß Fig. 3 verarbeitet bzw. konfektioniert werden (Unterwäsche auf Basis einer dreiteiligen Kombination von (i) Schutzhose, (ii) Schutzhemd einschließlich Bedeckung der Arme und (iii) Schutzkopfhaube/ Schutzbalaklava).

Es resultieren vier verschiedene, jeweils dreiteilige Unterwäschekombinationen, nämlich "Schutzunterwäsche A1" und "Schutzunterwäsche A2" (jeweils erfindungsgemäß) sowie "Schutzunterwäsche B1" und "Schutzunterwäsche B2" (jeweils Vergleich).

Verschiedene Eigenschaften der Schutzunterwäschen werden anschließend bestimmt und erfasst.

Für die erfindungsgemäßen Schutzmaterialien bzw. Schutzunterwäschen A1 und A2 werden die folgenden Eigenschaften ermittelt:
- Gesamtflächengewicht (bestimmt als Trockengewicht gemäß DIN EN 12127, nach 1-stündiger Trocknung bei 105 °C): (340 ± 20) g/m²
- Dicke (Gesamtquerschnittsdicke) gemäß DIN EN ISO 5084: ca. 1,2 mm
- Luftdurchlässigkeit gemäß DIN EN ISO 9237 (Strömungswiderstand): mindestens 5 mm/s
- Wasserdampfdurchgangswiderstand (Rₑₜ) gemäß DIN EN 343:2019: höchstens 15 m² Pa / Watt
- Berstdruck gemäß DIN EN ISO 13938-2: mindestens 100 kPa (Kilopascal)
- Höchstzugkraft(dehnung) gemäß DIN EN ISO 13934-1: > 200 Newton
- Dehnungsbelastung / Dehnungsfähigkeit (Elongation) in Längs- und Querrichtung gemäß DIN 53835-14 bei 20 Newton: mindestens 5 %
- Schrumpfung in Längs- und Querrichtung gemäß DIN EN 5077: höchstens 5%
- Abscheidegrad, insbesondere Fraktionsabscheidegrad: mindestens 90 % (bestimmt nach DIN EN 1822 bei einer Druckdifferenz von 15 Pascal mit Kaliumchlorid (KCI) als Testsubstanz als Mindestwirkungsgrad (MPPS, insbesondere MPPS = 0,1 µm bis 0,3 µm))
- Butanadsorption (bestimmt gemäß ASTM D5742-16): mindestens 20 g/m²

### Anwendungstests der bereitgestellten textilen Schutzmaterialien und Schutzbekleidungen

Die zuvor beschriebenen Unterwäschen A1 (Erfindung), A2 (Erfindung), B1 (Vergleich), B2 (Vergleich) und B3 (Vergleich) werden einer Testung in Bezug auf die Schutzwirkung gegenüber polyzyklischen aromatischen Kohlenwasserstoffen (PAK) im Rahmen einer Beaufschlagung mit Brandgasen getestet. Zu diesem Zweck werden die vorgenannten Unterwäschen mit einer üblichen Feuerwehrschutzoberbekleidung nach DIN EN 469 und einem üblichen Atemschutzgerät kombiniert.

Die betreffenden Testpersonen werden zuvor mit entsprechenden PAK-Sensoren ausgestattet, welche auf der Haut der Testpersonen verklebt werden, und zwar jeweils im Nackenbereich, im Brustbereich, im Oberarmbereich, im Oberschenkelbereich sowie im Hüftbereich. Als PAK-Sensoren werden jeweils polyurethanschaumbasierte passive Luftprobensammler eingesetzt (wie sie beschrieben sind in: B. Strandberg et al. "Evaluation of polyurethane foam passive air sampler (PUF) as a tool for occupational PAH measurements" in: Sphere, Vol. 190, Januar 2018, Seiten 35 bis 42), welche jeweils unmittelbar auf der Haut angebracht werden und nach Durchführung der Versuche entsprechend analysiert werden. Die polyurethanschaumbasierten PAK-Sensoren sind kreisrund ausgebildet (Durchmesser ca. 14 cm) und werden unmittelbar auf die Haut mittels Verkleben aufgebracht und befestigt.

Jeweils fünf Feuerwehrleute werden mit der vorgenannten Schutzkombination aus Feuerwehrschutzbekleidung nach DIN EN 469 mit Atemschutzgerät einerseits und der betreffenden Unterwäsche andererseits ausgerüstet (d. h. je fünf Feuerwehrleute mit Unterwäsche A1, je fünf Feuerwehrleute mit Unterwäsche A2, je fünf Feuerwehrleute mit Unterwäsche B1, je fünf Feuerwehrleute mit Unterwäsche B2 und je fünf Feuerwehrleute mit Unterwäsche B3). Diese Testpersonen werden zuvor mit den PAK-Sensoren auf der Haut an den genannten Körperstellen ausgestattet.

Zu Testzwecken wird ein definierter Brand in einem geschlossenen Stahlcontainer entfacht, einhergehend mit definierter Rauchgasentwicklung. Die PAK-Belastung des Rauchgases wird ebenfalls analysiert und die entsprechenden PAK-Substanzen werden analytisch ermittelt und identifiziert. Zu den aufgefundenen PAK-Substanzen gehören mehr als 32 verschiedene, substituierte und unsubstituierte Naphtaline, Naphtylene, Naphtene, Biphenyle, Fluorene, Anthracene, Phenanthrene, Pyrene, Perylene, Chrysene und Coronene.

Anschließend werden die mit den verschiedenen Unterwäschen ausgerüsteten Feuerwehrleute jeweils in Fünfergruppen mit den fünf unterschiedlichen Schutzunterwäschen in dem Brandcontainer mit den entsprechenden Brandgasen in Kontakt gebracht und beaufschlagt. Jede Brandtestung ("*Smoke Dive*") in dem Container dauert 25 Minuten (d. h. je 25-minütige *Smoke Dives*)*.*

Nach Abschluss der Versuche werden die PAK-Probensammler im Hinblick auf den PAK-Gehalt untersucht (übliche Analyse mittels Lösemittelextraktion und anschließender Aufreinigung durch Säulenchromatographie, gefolgt von GC/MS-Analyse über die Gesamtheit von mehr als 32 einzelnen PAK-Stoffen). Die Quantifizierung erfolgt als PAK-Menge in der Einheit Nanogramm per Probennahme-Sensor (gemittelt jeweils über alle PAK-Sensoren einer betreffenden Testperson und dann gemittelt über die je 5 Testpersonen einer Gruppe).

Aus diesen Werten wird dann die mittlere Durchbruchrate und daraus dann schließlich der sogenannte Schutzfaktor ermittelt (Wie eingangs beschrieben, stellt der sogenannte Schutzfaktor in Bezug auf PAK den Kehrwert der Penetration in Bezug auf PAK dar, d. h. wenn z. B. der Schutzfaktor 100 beträgt, bedeutet dies, dass nicht mehr als 1/100 der PAK-Kontaminationen das Material durchdringen; ein Schutzfaktor von 100 bedeutet somit eine Penetration bzw. einen Durchbruch von nur 1 % der PAK-Kontaminationen).

Die Versuche für die erfindungsgemäßen Unterwäschen A1 und A2 werden dann in gleicher Weise nach jeweils zehnmaliger Wäsche der betreffenden Schutzunterwäsche (Wäsche nach DIN EN ISO 6330:2013-02) wiederholt; die Ergebnisse werden in gleicher Weise ausgewertet.

Die gemessene Gesamtmenge an PAK auf der Haut beträgt im Fall der Unterwäsche B3 im Durchschnitt etwa 6 % der Gesamtmenge der im Brandrauch vorhandenen PAK; dies entspricht einer etwa 15-fachen Reduktion der PAK-Mengen (d. h. Schutzfaktor: 15). Im Fall der ebenfalls nicht-erfindungsgemäßen Unterwäschen B1 bzw. B2 liegt dieser Schutzfaktor bei ca. 550 bzw. ca. 500. Im Fall der erfindungsgemäßen Unterwäschen A1 bzw. A2 dagegen liegt der Schutzfaktor bei 3.400 bzw. 3.340. Nach 10-facher Wäsche (Wäsche nach DIN EN ISO 6330:2013-02) liegt der Schutzfaktor immer noch bei 660 bzw. 610.

Mit der erfindungsgemäßen Konzeption kann somit eine ausgezeichnete Schutzwirkung gegenüber PAK-Kontaminationen in gasförmiger wie in partikulär gebundener Form erreicht werden, wobei sich das erfindungsgemäße Konzept auch nachträglich in bestehende Schutzausrüstungen nachrüsten bzw. integrieren lässt, was die Effizienz, Ökonomie und Nachhaltigkeit des erfindungsgemäßen Lösungsansatzes um so mehr hervorhebt.

### Bezugszeichenliste:

- 1: textiles Schutzmaterial
- 2: textile Trägerschicht
- 3: Haftmittelschicht
- 4: Adsorptionsschicht
- 4a: Adsorberpartikel
- 5: Partikel- und/oder Aerosolfilterschicht
- 6: Abdeckschicht
- 7: weitere oder zweite Abdeckschicht
- 8: Schutzbekleidung
- 8a: Schutzbeinkleid
- 8b: Schutzoberteil
- 8c: Schutzkopfbedeckung

## Patentansprüche

1. Verwendung einer Schutzbekleidung (8), bevorzugt in Form einer Schutzunterbekleidung, zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination, insbesondere zur Verhinderung oder Minimierung einer Kontamination,
wobei die Schutzbekleidung (8) ein textiles Schutzmaterial (1) aufweist oder hieraus gebildet ist,
wobei das textile Schutzmaterial (1) als ein mehrlagiges, eine Mehrzahl von miteinander verbundenen Lagen (2, 3, 4, 5, 6) aufweisendes textiles Verbundmaterial ausgebildet ist,
wobei das textile Schutzmaterial (1) die folgenden Schichten (2, 3, 4, 5, 6), vorzugsweise in der nachfolgend genannten Abfolge, aufweist:
(a) eine textile Trägerschicht (2), wobei die textile Trägerschicht (2) als ein vorzugsweise gasdurchlässiges, textiles Flächengebilde vorliegt und/oder ausgebildet ist,
(b) eine auf einer Seite der textilen Trägerschicht (2) aufgebrachte Haftmittelschicht (3), wobei die Haftmittelschicht (3) als eine wasserdampf- und/oder gasdurchlässige und/oder diskontinuierlich ausgebildete Klebstoffschicht, vorzugsweise auf Basis eines Klebstoffpolymers, vorliegt und/oder ausgebildet ist,
(c) eine an der Haftmittelschicht (3) fixierte und/oder zum Haften gebrachte, vorzugsweise diskontinuierlich ausgebildete und/oder gasdurchlässige, Adsorptionsschicht (4), wobei die Adsorptionsschicht (4) eine Vielzahl einzelner Adsorberpartikel (4a) umfasst oder hieraus gebildet ist,
(d) eine auf der Adsorptionsschicht (4) angeordnete und/oder mit der Adsorptionsschicht (4) verbundene Partikel- und/oder Aerosolfilterschicht (5), vorzugsweise Partikel- und Aerosolfilterschicht (5), wobei die Partikel- und/oder Aerosolfilterschicht (5) als ein gasdurchlässiges textiles Flächengebilde, welches eine Vielzahl einzelner Textilfasern umfasst oder hieraus gebildet ist, vorliegt und/oder ausgebildet ist,
(e) gegebenenfalls eine auf der Partikel- und Aerosolfilterschicht (5) angeordnete und/oder mit der Partikel- und Aerosolfilterschicht (5) verbundene Abdeckschicht (6), wobei die Abdeckschicht (6) als vorzugsweise gasdurchlässiges textiles Flächengebilde vorliegt und/oder ausgebildet ist.

2. Verwendung nach Anspruch 1,
wobei die Schutzbekleidung (8) in Form mindestens eines Schutzbekleidungsstücks (8a, 8b, 8c), vorzugsweise in Form einer Mehrzahl von insbesondere zueinander komplementärer Schutzbekleidungsstücke (8a, 8b, 8c), bevorzugt in Form einer Schutzunterbekleidung, ausgebildet ist und/oder vorliegt; und/oder
wobei die Schutzbekleidung (8) mindestens ein Schutzbekleidungsstück (8a, 8b, 8c), vorzugsweise eine Mehrzahl von insbesondere zueinander komplementärer Schutzbekleidungsstücke (8a, 8b, 8c), bevorzugt in Form einer Schutzunterbekleidung, aufweist; und/oder
wobei die Schutzbekleidung (8), bevorzugt in Form einer Schutzunterbekleidung, zum Schutz von Unterkörper, Oberkörper und Kopf vorliegt und/oder ausgebildet ist.

3. Verwendung nach Anspruch 1 oder 2,
wobei die Schutzbekleidung (8) in Form einer Schutzunterbekleidung, eingesetzt wird und/oder vorliegt; und/oder
wobei die Schutzbekleidung (8) als eine Kombination von (i) Schutzbeinkleid (8a), insbesondere Schutzhose, (ii) Schutzoberteil (8b), insbesondere Schutzhemd, Schutz-Shirt oder Schutzpullover, insbesondere einschließlich Bedeckung der Arme, und (iii) Schutzkopfbedeckung (8c), insbesondere Schutzkopfhaube oder Schutzbalaklava, vorliegt und/oder ausgebildet ist; und/oder
wobei die Schutzbekleidung (8) in Form einer Schutzunterbekleidung, eingesetzt wird und/oder vorliegt, wobei die Schutzbekleidung (8) als eine Kombination von (i) Schutzbeinkleid (8a), insbesondere Schutzhose, (ii) Schutzoberteil (8b), insbesondere Schutzhemd, Schutz-Shirt oder Schutzpullover, insbesondere einschließlich Bedeckung der Arme, und (iii) Schutzkopfbedeckung (8c), insbesondere Schutzkopfhaube oder Schutzbalaklava, vorliegt und/oder ausgebildet ist; und/oder
wobei die Schutzbekleidung (8) und/oder das Schutzmaterial (1) bei der Verwendung und/oder im Anwendungszustand, insbesondere im Tragezustand, derart angeordnet und/oder eingesetzt wird, dass die Partikel- und/oder Aerosolfilterschicht (5) und/oder die gegebenenfalls vorhandene Abdeckschicht (6) der Kontaminationsquelle zugewandt ist/sind und/oder dass die Partikel- und/oder Aerosolfilterschicht (5) und/oder die gegebenenfalls vorhandene Abdeckschicht (6) vom Träger der Schutzbekleidung (8) abgewandt ist/sind und/oder dass die Partikel- und/oder Aerosolfilterschicht (5) und/oder die gegebenenfalls vorhandene Abdeckschicht (6) eine Außenschicht der Schutzbekleidung (8) und/oder des Schutzmaterials (1) bildet/bilden; und/oder
wobei die Schutzbekleidung (8) und/oder das Schutzmaterial (1) bei der Verwendung und/oder im Anwendungszustand, insbesondere im Tragezustand, derart angeordnet und/oder eingesetzt wird, dass die textile Trägerschicht (2) und/oder die gegebenenfalls vorhandene weitere oder zweite Abdeckschicht (7) von der Kontaminationsquelle abgewandt ist/sind und/oder dass die textile Trägerschicht (2) und/oder die gegebenenfalls vorhandene weitere oder zweite Abdeckschicht (7) dem Träger der Schutzbekleidung zugewandt ist/sind und/oder dass die textile Trägerschicht (2) und/oder die gegebenenfalls vorhandene weitere oder zweite Abdeckschicht (7) eine Innenschicht der Schutzbekleidung (8) und/oder des Schutzmaterials (1) bildet/bilden; und/oder
wobei die Schutzbekleidung (8) als Schutzunterbekleidung eingesetzt wird; und/oder
wobei die Schutzbekleidung (8) als Schutzunterbekleidung in Kombination mit einer Schutzoberbekleidung, insbesondere in Kombination mit einer Arbeitsschutzoberbekleidung, vorzugsweise in Kombination mit einer persönlichen Schutzausrüstung, eingesetzt wird.

4. Verwendung nach einem oder mehreren der vorangehenden Ansprüche,
wobei das Schutzmaterial (1) und/oder die Schutzbekleidung (8) gasdurchlässig, insbesondere luftdurchlässig, und/oder wasserdampfdurchlässig ausgebildet ist, vorzugsweise gasdurchlässig, insbesondere luftdurchlässig, und wasserdampfdurchlässig ausgebildet ist; und/oder
wobei das Schutzmaterial (1) und/oder die Schutzbekleidung (8) eine Gasdurchlässigkeit, insbesondere Luftdurchlässigkeit, bei einem Strömungswiderstand von 100 Pascal, insbesondere bestimmt gemäß DIN EN ISO 9237, im Bereich von 0,5 mm/s bis 500 mm/s, insbesondere im Bereich von 1 mm/s bis 450 mm/s, vorzugsweise im Bereich von 2,5 mm/s bis 400 mm/s, besonders bevorzugt im Bereich von 3,5 mm/s bis 300 mm/s, ganz besonders bevorzugt im Bereich von 5 mm/s bis 250 mm/s, aufweist; und/oder
wobei das Schutzmaterial (1) und/oder die Schutzbekleidung (8) einen Wasserdampfdurchgangswiderstand (Rₑₜ), insbesondere bestimmt gemäß DIN EN 343:2019, von höchstens 15 m² Pa / Watt, insbesondere von höchstens 10 m² Pa / Watt, bevorzugt von höchstens 8 m² Pa / Watt, vorzugsweise von höchstens 7 m² Pa / Watt, noch mehr bevorzugt von höchstens 6 m² Pa / Watt, ganz besonders bevorzugt von höchstens 5 m² Pa / Watt, aufweist; und/oder
wobei das Schutzmaterial (1) und/oder die Schutzbekleidung (8) eine Dicke, insbesondere Gesamtquerschnittsdicke, im Bereich von 0,25 mm bis 25 mm, insbesondere im Bereich von 0,5 mm bis 15 mm, bevorzugt im Bereich von 0,6 mm bis 10 mm, vorzugsweise im Bereich von 0,75 mm bis 5 mm, besonders bevorzugt im Bereich von 0,8 mm bis 2 mm, aufweist, insbesondere bestimmt gemäß DIN EN ISO 5084; und/oder
wobei das Schutzmaterial (1) und/oder die Schutzbekleidung (8) einen Berstdruck, insbesondere bestimmt nach DIN EN ISO 13938-2, im Bereich von 50 kPa bis 1.000 kPa, insbesondere im Bereich von 75 kPa bis 800 kPa, vorzugsweise im Bereich von 90 kPa bis 600 kPa, besonders bevorzugt im Bereich von 100 kPa 500 kPa, aufweist; und/oder
wobei das Schutzmaterial (1) und/oder die Schutzbekleidung (8) eine Höchstzugkraft und/oder Höchstzugkraftdehnung, bevorzugt in Längs- und Querrichtung, insbesondere bestimmt nach DIN EN ISO 13934-1, im Bereich von 200 Newton bis 4.000 Newton, insbesondere im Bereich von 225 Newton bis 3.750 Newton, vorzugsweise im Bereich von 250 Newton bis 3.500 Newton, besonders bevorzugt im Bereich von 275 Newton 3.000 Newton; und/oder
wobei das Schutzmaterial (1) und/oder die Schutzbekleidung (8) eine Dehnungsbelastung und/oder Dehnungsfähigkeit in mindestens eine Richtung, insbesondere in Längs- oder Querrichtung, bestimmt nach DIN 53835-14 bei 20 Newton, von mindestens 2,5 %, vorzugsweise von mindestens 5 %, bevorzugt von mindestens 10 %, aufweist; und/oder
wobei das Schutzmaterial (1) und/oder die Schutzbekleidung (8) eine Schrumpfung in mindestens eine Richtung, insbesondere in Längs- oder Querrichtung, bestimmt nach DIN EN 5077, von höchstens 10 %, vorzugsweise von höchstens 6 %, bevorzugt von höchstens 3 %, aufweist; und/oder
wobei das Schutzmaterial (1) und/oder die Schutzbekleidung (8) waschbar, insbesondere waschbar und trockenbar, ausgebildet ist.

5. Verwendung nach einem oder mehreren der vorangehenden Ansprüche,
wobei die Haftmittelschicht (3) und/oder der Klebstoff der Haftmittelschicht (3) als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die textile Trägerschicht (2) aufgebracht und/oder aufgetragen, wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von über die Trägerschicht (2) verteilten Klebstoff(polymer)punkten ausgebildet ist, vorzugsweise in Form eines getrockneten und/oder ausgehärteten, insbesondere vernetzten, gebrochenen Klebstoffpolymerschaums; und/oder
wobei die Klebstoffschicht entweder in Form eines getrockneten und/oder ausgehärteten, insbesondere vernetzten, gebrochenen Klebstoffpolymerschaums oder aber in Form eines Rasters einer Vielzahl von über die Trägerschicht (2) verteilten Klebstoff(polymer)punkten ausgebildet ist, vorzugsweise in Form eines getrockneten und/oder ausgehärteten, insbesondere vernetzten, gebrochenen Klebstoffpolymerschaums.

6. Verwendung nach einem oder mehreren der vorangehenden Ansprüche,
wobei die Haftmittelschicht (3) und/oder der Klebstoff der Haftmittelschicht (3) als eine wasserdampf- und/oder luftdurchlässige, vorzugsweise wasserdampf- und luftdurchlässige, und/oder diskontinuierlich ausgebildete Klebstoffschicht auf Basis eines getrockneten und/oder ausgehärteten, insbesondere vernetzten, gebrochenen Klebstoffpolymerschaums auf die textile Trägerschicht (2) aufgebracht und/oder aufgetragen ist; oder
wobei die Haftmittelschicht (3) und/oder der Klebstoff der Haftmittelschicht (3) als eine wasserdampf- und/oder luftdurchlässige, vorzugsweise wasserdampf- und luftdurchlässige, und/oder diskontinuierlich ausgebildete Klebstoffschicht auf Basis eines Klebstoffpolymers auf die textile Trägerschicht (2) aufgebracht und/oder aufgetragen, wobei die Klebstoffschicht in Form eines Rasters einer Vielzahl von über die Trägerschicht (2) verteilten Klebstoff(polymer)punkten ausgebildet ist; und/oder wobei die Klebstoffschicht in Form eines Rasters einer Vielzahl von über die Trägerschicht (2) verteilten Klebstoff(polymer)punkten ausgebildet ist.

7. Verwendung nach einem oder mehreren der vorangehenden Ansprüche,
wobei die Adsorberpartikel (4a) der Adsorptionsschicht (4) ausgewählt sind aus der Gruppe von
(i) insbesondere partikulärer Aktivkohle und/oder Aktivkohlepartikeln, vorzugsweise in Form von Aktivkohlepartikeln in Kornform oder Aktivkohlepartikeln in Kugelform oder Aktivkohlepartikeln in Faserform;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren und/oder metallorganischen Gerüstmaterialien, insbesondere MOFs (*Metall Organic Framework*), COFs (*Covalent Organic Framework*), ZIFs (*Zeolithe Imidazolate Framework*), POMs (*Polymer Organic Material*) und/oder OFCs;
(viii) mineralischen Granulaten;
(ix) Klathraten; sowie
(x) deren Mischungen und/oder Kombinationen;
wobei (i) besonders bevorzugt ist; und/oder
wobei die Adsorberpartikel (4a) der Adsorptionsschicht (4) Aktivkohlepartikel, vorzugsweise in Form von Aktivkohlepartikeln in Kornform oder Aktivkohlepartikeln in Kugelform, bevorzugt in Form von Aktivkohlepartikel in Kugelform, sind.

8. Verwendung nach einem oder mehreren der vorangehenden Ansprüche,
wobei das Schutzmaterial (1) und/oder die Schutzbekleidung (8) mit einer flammhemmenden oder flammresistenten Ausrüstung versehen ist, insbesondere mit einer flammhemmenden oder flammresistenten Ausrüstung auf Basis halogen- und/oder phosphorhaltiger Flammschutzmittel, bevorzugt Phosphatester, Phosphonate, Phosphinate;
insbesondere wobei die flammhemmende oder flammresistente Ausrüstung durch Imprägnierung des Schutzmaterials (1) und/oder der Schutzbekleidung (8) mit dem Flammschutzmittel erfolgt ist.

9. Verwendung nach einem oder mehreren der vorangehenden Ansprüche zum Schutz von Personen gegenüber polyzyklische aromatische Kohlenwasserstoffe enthaltenden Gasen, insbesondere Abgasen oder Rauchgasen, von Verbrennungs- und/oder Hochtemperaturprozessen, insbesondere zum Schutz von Personen gegenüber polyzyklische aromatische Kohlenwasserstoffe enthaltenden Gasen, insbesondere Abgasen oder Rauchgasen, von, aus oder in Bränden, Kokereien, Gießereien Stahlwerken, Verhüttungsprozessen, Metall- und Stahlerzeugungs- und -verarbeitungsprozessen, Hochofenprozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen.

10. Verwendung nach einem oder mehreren der vorangehenden Ansprüche,
wobei die polyzyklischen aromatischen Kohlenwasserstoffe aus Gasen, insbesondere Abgasen oder Rauchgasen, von Verbrennungs- und/oder Hochtemperaturprozessen, stammen, insbesondere aus Gasen, insbesondere Abgasen oder Rauchgasen, von, aus oder in Bränden, Kokereien, Gießereien Stahlwerken, Verhüttungsprozessen, Metall- und Stahlerzeugungs- und -verarbeitungsprozessen, Hochofenprozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen.

11. Verwendung nach einem oder mehreren der vorangehenden Ansprüche,
wobei die zu schützenden Personen Feuerwehrleute oder arbeitende Personen in Kokereien, Gießereien Stahlwerken, Verhüttungsprozessen, Metall- und Stahlerzeugungs- und -verarbeitungsprozessen, Hochofen-prozessen, Abfallverbrennungsprozessen, Asphalterzeugungs- und -verarbeitungsprozessen, Glaserzeugungs- und -verarbeitungsprozessen, Feuerfestwarenerzeugungs- und -verarbeitungsprozessen sind, vorzugsweise Feuerwehrleute.

12. Verwendung nach einem oder mehreren der vorangehenden Ansprüche zum Schutz von Feuerwehrleuten gegenüber polyzyklische aromatische Kohlenwasserstoffe enthaltenden Gasen, insbesondere Abgasen oder Rauchgasen, aus Bränden;
insbesondere wobei die Schutzbekleidung (8) als Schutzunterbekleidung in Kombination mit einer Schutzoberbekleidung, insbesondere in Kombination mit einer Arbeitsschutzoberbekleidung, vorzugsweise in Kombination mit einer persönlichen Schutzausrüstung, bevorzugt in Kombination mit einer Feuerwehrschutzoberbekleidung nach DIN EN 469, eingesetzt wird; und/oder
insbesondere wobei die Schutzbekleidung (8) in Form einer Schutzunterbekleidung eingesetzt wird und/oder vorliegt, wobei die Schutzbekleidung (8) als eine Kombination von (i) Schutzbeinkleid (8a), insbesondere Schutzhose, (ii) Schutzoberteil (8b), insbesondere Schutzhemd, Schutz-Shirt oder Schutzpullover, insbesondere einschließlich Bedeckung der Arme, und (iii) Schutzkopfbedeckung (8c), insbesondere Schutzkopfhaube oder Schutzbalaklava, vorliegt und/oder ausgebildet ist.

13. Verfahren zum Schutz von Personen gegenüber einer Einwirkung und/oder Kontamination mit aus einer Kontaminationsquelle freigesetzten polyzyklischen aromatischen Kohlenwasserstoffen bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination, insbesondere zur Verhinderung oder Minimierung einer Kontamination,
wobei die Personen mit einer Schutzbekleidung (8), bevorzugt in Form einer Schutzunterbekleidung, ausgerüstet und/oder versehen, insbesondere bekleidet, werden
wobei die Schutzbekleidung (8) ein textiles Schutzmaterial (1) aufweist oder hieraus gebildet ist,
wobei das textile Schutzmaterial (1) als ein mehrlagiges, eine Mehrzahl von miteinander verbundenen Lagen (2, 3, 4, 5, 6) aufweisendes textiles Verbundmaterial ausgebildet ist,
wobei das textile Schutzmaterial (1) die folgenden Schichten (2, 3, 4, 5, 6), vorzugsweise in der nachfolgend genannten Abfolge, aufweist:
(a) eine textile Trägerschicht (2), wobei die textile Trägerschicht (2) als ein vorzugsweise gasdurchlässiges, textiles Flächengebilde vorliegt und/oder ausgebildet ist,
(b) eine auf einer Seite der textilen Trägerschicht (2) aufgebrachte Haftmittelschicht (3), wobei die Haftmittelschicht (3) als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
(c) eine an der Haftmittelschicht (3) fixierte und/oder zum Haften gebrachte, vorzugsweise diskontinuierlich ausgebildete und/oder gasdurchlässige, Adsorptionsschicht (4), wobei die Adsorptionsschicht (4) eine Vielzahl einzelner Adsorberpartikel (4a) umfasst oder hieraus gebildet ist,
(d) eine auf der Adsorptionsschicht (4) angeordnete und/oder mit der Adsorptionsschicht (4) verbundene Partikel- und/oder Aerosolfilterschicht (5), vorzugsweise Partikel- und Aerosolfilterschicht (5), wobei die Partikel- und/oder Aerosolfilterschicht (5) als ein gasdurchlässiges textiles Flächengebilde, welches eine Vielzahl einzelner Textilfasern umfasst oder hieraus gebildet ist, vorliegt und/oder ausgebildet ist,
(e) gegebenenfalls eine auf der Partikel- und Aerosolfilterschicht (5) angeordnete und/oder mit der Partikel- und Aerosolfilterschicht (5) verbundene Abdeckschicht (6), wobei die Abdeckschicht (6) als vorzugsweise gasdurchlässiges textiles Flächengebilde vorliegt und/oder ausgebildet ist.

14. Schutzbekleidungskombination zum Schutz von Personen gegenüber einer Einwirkung und/oder Kontamination mit aus einer Kontaminationsquelle freigesetzten polyzyklischen aromatischen Kohlenwasserstoffen (PAK) bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination, insbesondere zur Verhinderung oder Minimierung einer Kontamination und/oder insbesondere zur Verhinderung oder Minimierung einer Kontamination mit aus einer Kontaminationsquelle freigesetzten polyzyklischen aromatischen Kohlenwasserstoffen, vorzugsweise zum Schutz von einer Einwirkung von polyzyklischen aromatischen Kohlenwasserstoffen ausgesetzten Personen,
wobei die Schutzbekleidungskombination aufweist:
(A) eine Schutzoberbekleidung, insbesondere eine Arbeitsschutzoberbekleidung, vorzugsweise eine persönliche Schutzausrüstung, bevorzugt eine Feuerwehrschutzoberbekleidung nach DIN EN 469; und
(B) eine Schutzbekleidung (8) in Form einer Schutzunterbekleidung, insbesondere wobei die Schutzbekleidung (8) als eine Kombination von (i) Schutzbeinkleid (8a), insbesondere Schutzhose, (ii) Schutzoberteil (8b), insbesondere Schutzhemd, Schutz-Shirt oder Schutzpullover, insbesondere einschließlich Bedeckung der Arme, und (iii) Schutzkopfbedeckung (8c), insbesondere Schutzkopfhaube oder Schutzbalaklava, vorliegt und/oder ausgebildet ist;
wobei die Schutzbekleidung (8) ein textiles Schutzmaterial (1) aufweist oder hieraus gebildet ist,
wobei das textile Schutzmaterial (1) als ein mehrlagiges, eine Mehrzahl von miteinander verbundenen Lagen (2, 3, 4, 5, 6) aufweisendes textiles Verbundmaterial ausgebildet ist,
wobei das textile Schutzmaterial (1) die folgenden Schichten (2, 3, 4, 5, 6), vorzugsweise in der nachfolgend genannten Abfolge, aufweist:
(a) eine textile Trägerschicht (2), wobei die textile Trägerschicht (2) als ein vorzugsweise gasdurchlässiges, textiles Flächengebilde vorliegt und/oder ausgebildet ist,
(b) eine auf einer Seite der textilen Trägerschicht (2) aufgebrachte Haftmittelschicht (3), wobei die Haftmittelschicht (3) als eine wasserdampf- und/oder gasdurchlässige und/oder diskontinuierlich ausgebildete Klebstoffschicht, vorzugsweise auf eines Basis eines Klebstoffpolymers, vorliegt und/oder ausgebildet ist,
(c) eine an der Haftmittelschicht (3) fixierte und/oder zum Haften gebrachte, vorzugsweise diskontinuierlich ausgebildete und/oder gasdurchlässige, Adsorptionsschicht (4), wobei die Adsorptionsschicht (4) eine Vielzahl einzelner Adsorberpartikel (4a) umfasst oder hieraus gebildet ist,
(d) eine auf der Adsorptionsschicht (4) angeordnete und/oder mit der Adsorptionsschicht (4) verbundene Partikel- und/oder Aerosolfilterschicht (5), vorzugsweise Partikel- und Aerosolfilterschicht (5), wobei die Partikel- und/oder Aerosolfilterschicht (5) als ein gasdurchlässiges textiles Flächengebilde, welches eine Vielzahl einzelner Textilfasern umfasst oder hieraus gebildet ist, vorliegt und/oder ausgebildet ist,
(e) gegebenenfalls eine auf der Partikel- und Aerosolfilterschicht (5) angeordnete und/oder mit der Partikel- und Aerosolfilterschicht (5) verbundene Abdeckschicht (6), wobei die Abdeckschicht (6) als vorzugsweise gasdurchlässiges textiles Flächengebilde vorliegt und/oder ausgebildet ist.

15. Verwendung einer Schutzbekleidungskombination gemäß Anspruch 14
zum Schutz von Personen gegenüber einer Einwirkung und/oder Kontamination mit aus einer Kontaminationsquelle freigesetzten polyzyklischen aromatischen Kohlenwasserstoffen bei Aufenthalt und/oder Tätigkeit in Örtlichkeiten, in welchen polyzyklische aromatische Kohlenwasserstoffe freigesetzt werden oder vorhanden sind, und/oder zum Schutz von einer Einwirkung von polyzyklischen aromatischen Kohlenwasserstoffen ausgesetzten Personen gegenüber einer Kontamination, insbesondere zur Verhinderung oder Minimierung einer Kontamination; und/oder
zur Verhinderung oder Minimierung einer Kontamination mit aus einer Kontaminationsquelle freigesetzten polyzyklischen aromatischen Kohlenwasserstoffen, insbesondere zum Schutz von einer Einwirkung von polyzyklischen aromatischen Kohlenwasserstoffen ausgesetzten Personen.

## Claims

1. Use of a protective clothing (8), preferably in the form of a protective undergarment, for protecting persons against exposure and/or contamination with polycyclic aromatic hydrocarbons (PAHs) released from a contamination source during presence and/or activity in locations where polycyclic aromatic hydrocarbons are released or present, and/or for protecting persons exposed to polycyclic aromatic hydrocarbons from contamination, in particular for preventing or minimizing contamination,
wherein the protective clothing (8) comprises a textile protective material (1) or is formed therefrom,
wherein the textile protective material (1) is designed as a multilayer textile composite material comprising a plurality of interconnected layers (2, 3, 4, 5, 6),
wherein the textile protective material (1) comprises the following layers (2, 3, 4, 5, 6), preferably in the sequence stated below:
(a) a textile carrier layer (2), wherein the textile carrier layer (2) is present and/or designed as a preferably gas-permeable textile sheet structure,
(b) an adhesive layer (3) applied on one side of the textile carrier layer (2), wherein the adhesive layer (3) is present and/or designed as a water vapor- and/or gas-permeable and/or discontinuous adhesive layer, preferably based on an adhesive polymer,
(c) an adsorption layer (4) fixed to and/or bonded to the adhesive layer (3), preferably designed to be discontinuous and/or gas-permeable, wherein the adsorption layer (4) comprises or is formed from a plurality of individual adsorbent particles (4a),
(d) a particle and/or aerosol filter layer (5) arranged on and/or connected to the adsorption layer (4), preferably a particle and aerosol filter layer (5), wherein the particle and/or aerosol filter layer (5) is present and/or designed as a gas-permeable textile sheet structure comprising or formed from a plurality of individual textile fibers,
(e) optionally, a cover layer (6) arranged on and/or connected to the particle and aerosol filter layer (5), wherein the cover layer (6) is present and/or designed as a preferably gas-permeable textile sheet structure.

2. Use according to claim 1,
wherein the protective clothing (8) is designed and/or provided in the form of at least one protective garment (8a, 8b, 8c), preferably in the form of a plurality of, in particular mutually complementary, protective garments (8a, 8b, 8c), preferably in the form of a protective undergarment; and/or
wherein the protective clothing (8) comprises at least one protective garment (8a, 8b, 8c), preferably a plurality of, in particular mutually complementary, protective garments (8a, 8b, 8c), preferably in the form of a protective undergarment; and/or
wherein the protective clothing (8), preferably in the form of a protective undergarment, is provided and/or designed for protecting the lower body, upper body and head.

3. Use according to claim 1 or 2,
wherein the protective clothing (8) is used and/or provided in the form of a protective undergarment; and/or
wherein the protective clothing (8) is provided and/or designed as a combination of (i) a protective legwear (8a), in particular protective pants, (ii) a protective upper garment (8b), in particular a protective shirt, a protective T-shirt or a protective sweater, in particular including an arm coverage, and (iii) a protective head covering (8c), in particular a protective hood or a protective balaclava; and/or
wherein the protective clothing (8) is used and/or provided in the form of a protective undergarment, the protective clothing (8) being provided and/or designed as a combination of (i) a protective legwear (8a), in particular protective pants, (ii) a protective upper garment (8b), in particular a protective shirt, a protective T-shirt or a protective sweater, in particular including an arm coverage, and (iii) a protective head covering (8c), in particular a protective hood or a protective balaclava; and/or
wherein the protective clothing (8) and/or the protective material (1), during use and/or in the state of use, in particular when worn, is arranged and/or used such that the particle and/or aerosol filter layer (5) and/or the optionally present cover layer (6) faces the contamination source and/or faces away from the wearer of the protective clothing (8) and/or forms an outer layer of the protective clothing (8) and/or of the protective material (1); and/or
wherein the protective clothing (8) and/or the protective material (1), during use and/or in the state of use, in particular when worn, is arranged and/or used such that the textile carrier layer (2) and/or the optionally present further or second cover layer (7) faces away from the contamination source and/or faces the wearer of the protective clothing and/or forms an inner layer of the protective clothing (8) and/or of the protective material (1); and/or
wherein the protective clothing (8) is used as protective undergarment; and/or
wherein the protective clothing (8) is used as a protective undergarment in combination with a protective outer clothing, in particular in combination with an (occupational) protective outer clothing (protective outer workwear), preferably in combination with a personal protective equipment.

4. Use according to one or more of the preceding claims,
wherein the protective material (1) and/or the protective clothing (8) is designed to be gas-permeable, in particular air-permeable, and/or water vapor-permeable, preferably gas-permeable, in particular air-permeable, and water vapor-permeable; and/or
wherein the protective material (1) and/or the protective clothing (8) has a gas-permeability, in particular air-permeability, at a pressure differential of 100 Pascal, in particular determined according to DIN EN ISO 9237, in the range of from 0.5 mm/s to 500 mm/s, in particular from 1 mm/s to 450 mm/s, preferably from 2.5 mm/s to 400 mm/s, more preferably from 3.5 mm/s to 300 mm/s, most preferably from 5 mm/s to 250 mm/s; and/or
wherein the protective material (1) and/or the protective clothing (8) has a water vapor resistance (Ret), in particular determined according to DIN EN 343:2019, of not more than 15 m²Pa/W, in particular not more than 10 m²Pa/W, preferably not more than 8 m²Pa/W, more preferably not more than 7 m²Pa/W, even more preferably not more than 6 m²Pa/W, most preferably not more than 5 m²Pa/W; and/or
wherein the protective material (1) and/or the protective clothing (8) has a thickness, in particular an overall cross-sectional thickness, in the range of from 0.25 mm to 25 mm, in particular from 0.5 mm to 15 mm, preferably from 0.6 mm to 10 mm, more preferably from 0.75 mm to 5 mm, most preferably from 0.8 mm to 2 mm, in particular determined according to DIN EN ISO 5084; and/or
wherein the protective material (1) and/or the protective clothing (8) has a bursting strength, in particular determined according to DIN EN ISO 13938-2, in the range of from 50 kPa to 1,000 kPa, in particular from 75 kPa to 800 kPa, preferably from 90 kPa to 600 kPa, more preferably from 100 kPa to 500 kPa; and/or
wherein the protective material (1) and/or the protective clothing (8) has a maximum tensile strength and/or maximum tensile elongation, preferably in the longitudinal and transverse directions, in particular determined according to DIN EN ISO 13934-1, in the range of from 200 Newton to 4,000 Newton, in particular from 225 Newton to 3,750 Newton, preferably from 250 Newton to 3,500 Newton, more preferably from 275 Newton to 3,000 Newton; and/or
wherein the protective material (1) and/or the protective clothing (8) has an elongation under load and/or stretchability in at least one direction, in particular in the longitudinal or transverse direction, determined according to DIN 53835-14 at 20 Newton, of at least 2.5%, preferably at least 5%, more preferably at least 10%; and/or
wherein the protective material (1) and/or the protective clothing (8) has shrinkage in at least one direction, in particular in the longitudinal or transverse direction, determined according to DIN EN 5077, of not more than 10%, preferably not more than 6%, more preferably not more than 3%; and/or
wherein the protective material (1) and/or the protective clothing (8) is designed to be washable, in particular washable and dryable.

5. Use according to one or more of the preceding claims,
wherein the adhesive layer (3) and/or the adhesive of the adhesive layer (3) is applied to and/or coated onto the textile carrier layer (2) as a water vapor- and/or air-permeable, preferably water vapor- and air-permeable, and/or discontinuously formed adhesive layer based on an adhesive polymer, wherein the adhesive layer is formed either in the form of a dried and/or cured, in particular crosslinked, fractured (broken) adhesive polymer foam or in the form of a grid comprising a plurality of adhesive (polymer) dots distributed over the carrier layer (2), preferably in the form of a dried and/or cured, in particular crosslinked, fractured (broken) adhesive polymer foam; and/or
wherein the adhesive layer is formed either in the form of a dried and/or cured, in particular crosslinked, fractured (broken)adhesive polymer foam or in the form of a grid comprising a plurality of adhesive (polymer) dots distributed over the carrier layer (2), preferably in the form of a dried and/or cured, in particular crosslinked, fractured (broken) adhesive polymer foam.

6. Use according to one or more of the preceding claims,
wherein the adhesive layer (3) and/or the adhesive of the adhesive layer (3) is applied to and/or coated onto the textile carrier layer (2) as a water vapor- and/or air-permeable, preferably water vapor- and air-permeable, and/or discontinuously formed adhesive layer based on a dried and/or cured, in particular crosslinked, fractured (broken) adhesive polymer foam; or
wherein the adhesive layer (3) and/or the adhesive of the adhesive layer (3) is applied to and/or coated onto the textile carrier layer (2) as a water vapor- and/or air-permeable, preferably water vapor- and air-permeable, and/or discontinuously formed adhesive layer based on an adhesive polymer, wherein the adhesive layer is formed in the form of a grid comprising a plurality of adhesive (polymer) dots distributed over the carrier layer (2); and/or wherein the adhesive layer is formed in the form of a grid comprising a plurality of adhesive (polymer) dots distributed over the carrier layer (2).

7. Use according to one or more of the preceding claims,
wherein the adsorbent particles (4a) of the adsorption layer (4) are selected from the group consisting of:
(i) particulate activated carbon and/or activated carbon particles, preferably in the form of granular activated carbon particles, spherical activated carbon particles or fibrous activated carbon particles;
(ii) zeolites, in particular natural and/or synthetic zeolites;
(iii) molecular sieves, in particular zeolitic molecular sieves, synthetic molecular sieves, and/or synthetic molecular sieves based on carbon, oxides, and/or glasses;
(iv) metal oxides and/or metal particles;
(v) ion exchange resins, in particular polydisperse and/or monodisperse cation and/or anion exchangers, in particular of the gel type and/or macroporous type;
(vi) inorganic oxides, in particular silicon dioxides, silica gels and/or aluminum oxides;
(vii) porous organic polymers and/or porous organic-inorganic hybrid polymers and/or metal-organic framework materials, in particular MOFs (Metal-Organic Frameworks), COFs (Covalent Organic Frameworks), ZIFs (Zeolitic Imidazolate Frameworks), POMs (Polymer Organic Materials), and/or OFCs;
(viii) mineral granulates;
(ix) clathrates; and
(x) mixtures and/or combinations thereof;
wherein (i) is particularly preferred; and/or
wherein the adsorbent particles (4a) of the adsorption layer (4) are activated carbon particles, preferably in the form of granular activated carbon particles or spherical activated carbon particles, more preferably in the form of spherical activated carbon particles.

8. Use according to one or more of the preceding claims,
wherein the protective material (1) and/or the protective clothing (8) is provided with a flame-retardant or flame-resistant finish, in particular with a flame-retardant or flame-resistant finish based on halogen- and/or phosphorus-containing flame retardants, preferably phosphate esters, phosphonates, phosphinates;
in particular wherein the flame-retardant or flame-resistant finish is achieved by impregnating the protective material (1) and/or the protective clothing (8) with the flame retardant.

9. Use according to one or more of the preceding claims for protecting persons against gases containing polycyclic aromatic hydrocarbons, in particular exhaust gases or flue gases, from combustion and/or high-temperature processes, in particular for protecting persons against gases containing polycyclic aromatic hydrocarbons, in particular exhaust gases or flue gases, from, out of or in fires, coke plants, foundries, steelworks, smelting processes, metal and steel production and processing processes, blast furnace processes, waste incineration processes, asphalt production and processing processes, glass production and processing processes and refractory material production and processing processes.

10. Use according to one or more of the preceding claims,
wherein the polycyclic aromatic hydrocarbons originate from gases, in particular exhaust gases or flue gases, from combustion and/or high-temperature processes, in particular from gases, in particular exhaust gases or flue gases, from, out of or in fires, coke plants, foundries, steelworks, smelting processes, metal and steel production and processing processes, blast furnace processes, waste incineration processes, asphalt production and processing processes, glass production and processing processes and refractory material production and processing processes.

11. Use according to one or more of the preceding claims,
wherein the persons to be protected are firefighters or workers in coke plants, foundries, steelworks, smelting processes, metal and steel production and processing processes, blast furnace processes, waste incineration processes, asphalt production and processing processes, glass production and processing processes and refractory material production and processing processes, preferably firefighters.

12. Use according to one or more of the preceding claims for protecting firefighters against gases containing polycyclic aromatic hydrocarbons, in particular exhaust gases or flue gases, from fires;
in particular wherein the protective clothing (8) is used as protective undergarment in combination with outer protective clothing, in particular in combination with an (occupational) protective outerwear (protective outer workwear), preferably in combination with a personal protective equipment, more preferably in combination with a firefighter protective outerwear according to DIN EN 469; and/or
in particular wherein the protective clothing (8) is used and/or provided in the form of a protective undergarment, wherein the protective clothing (8) is provided and/or configured as a combination of (i) a protective legwear (8a), in particular protective pants, (ii) a protective upper garment (8b), in particular a protective shirt, a protective T-shirt or a protective sweater, in particular including a coverage of the arms, and (iii) a protective headgear (8c), in particular a protective hood or a protective balaclava.

13. Method for protecting persons against exposure and/or contamination with polycyclic aromatic hydrocarbons released from a contamination source during presence and/or activity in locations in which polycyclic aromatic hydrocarbons are released or present, and/or for protecting persons exposed to polycyclic aromatic hydrocarbons against contamination, in particular for preventing or minimizing contamination,
wherein the persons are equipped and/or provided, in particular clothed, with a protective clothing (8), preferably in the form of a protective undergarment,
wherein the protective clothing (8) comprises a textile protective material (1) or is formed therefrom,
wherein the textile protective material (1) is designed as a multilayer textile composite material comprising a plurality of interconnected layers (2, 3, 4, 5, 6),
wherein the textile protective material (1) comprises the following layers (2, 3, 4, 5, 6), preferably in the sequence stated below:
(a) a textile carrier layer (2), which is present and/or designed as a preferably gas-permeable textile sheet structure,
(b) an adhesive layer (3) applied to one side of the textile carrier layer (2), wherein the adhesive layer (3) is present and/or designed as a water vapor- and/or gas-permeable and/or discontinuous adhesive layer, preferably based on an adhesive polymer,
(c) an adsorption layer (4) fixed to and/or bonded to the adhesive layer (3), preferably designed to be discontinuous and/or gas-permeable, wherein the adsorption layer (4) comprises or is formed from a plurality of individual adsorbent particles (4a),
(d) a particle and/or aerosol filter layer (5) arranged on and/or connected to the adsorption layer (4), preferably a particle and aerosol filter layer (5), wherein the particle and/or aerosol filter layer (5) is present and/or designed as a gas-permeable textile sheet structure comprising or formed from a plurality of individual textile fibers,
(e) optionally, a cover layer (6) arranged on and/or connected to the particle and aerosol filter layer (5), wherein the cover layer (6) is present and/or designed as a preferably gas-permeable textile sheet structure.

14. Protective clothing combination for protecting persons against exposure and/or contamination with polycyclic aromatic hydrocarbons (PAHs) released from a contamination source during presence and/or activity in locations in which polycyclic aromatic hydrocarbons are released or present, and/or for protecting persons exposed to polycyclic aromatic hydrocarbons against contamination, in particular for preventing or minimizing contamination and/or in particular for preventing or minimizing contamination with polycyclic aromatic hydrocarbons released from a contamination source, preferably for protecting persons exposed to polycyclic aromatic hydrocarbons,
wherein the protective clothing combination comprises:
(A) an outer protective clothing, in particular an (occupational) protective outerwear (protective outer workwear), preferably a personal protective equipment, more preferably a firefighter protective outerwear according to DIN EN 469; and
(B) a protective clothing (8) in the form of a protective undergarment, in particular wherein the protective clothing (8) is provided and/or configured as a combination of (i) a protective legwear (8a), in particular protective pants, (ii) a protective upper garment (8b), in particular a protective shirt, a protective T-shirt or a protective sweater, in particular including a coverage of the arms, and (iii) a protective headgear (8c), in particular a protective hood or a protective balaclava;
wherein the protective clothing (8) comprises a textile protective material (1) or is formed therefrom,
wherein the textile protective material (1) is designed as a multilayer textile composite material comprising a plurality of interconnected layers (2, 3, 4, 5, 6),
wherein the textile protective material (1) comprises the following layers (2, 3, 4, 5, 6), preferably in the sequence stated above:
(a) a textile carrier layer (2), wherein the textile carrier layer (2) is present and/or formed as a preferably gas-permeable textile web,
(b) an adhesive layer (3) applied to one side of the textile carrier layer (2), wherein the adhesive layer (3) is present and/or formed as a water vapor and/or gas-permeable and/or discontinuously formed adhesive layer, preferably based on an adhesive polymer,
(c) an adsorption layer (4) fixed to the adhesive layer (3) and/or brought into adhesion, preferably discontinuously formed and/or gas-permeable, wherein the adsorption layer (4) comprises a plurality of individual adsorbent particles (4a) or is formed therefrom,
(d) a particle and/or aerosol filter layer (5), preferably a particle and aerosol filter layer (5), arranged on the adsorption layer (4) and/or connected to the adsorption layer (4), wherein the particle and/or aerosol filter layer (5) is present and/or formed as a gas-permeable textile fabric which comprises a plurality of individual textile fibers or is formed therefrom,
(e) optionally, a cover layer (6) arranged on the particle and aerosol filter layer (5) and/or connected to the particle and aerosol filter layer (5), wherein the cover layer (6) is preferably a gas-permeable textile fabric and/or is formed as such.

15. Use of a protective clothing combination according to claim 14
for protecting persons against exposure and/or contamination with polycyclic aromatic hydrocarbons released from a contamination source during presence and/or activity in locations in which polycyclic aromatic hydrocarbons are released or present, and/or for protecting persons exposed to polycyclic aromatic hydrocarbons against contamination, in particular for preventing or minimizing contamination; and/or
for preventing or minimizing contamination with polycyclic aromatic hydrocarbons released from a contamination source, in particular for protecting persons exposed to polycyclic aromatic hydrocarbons.

## Revendications

1. Utilisation d'un vêtement de protection (8), de préférence sous la forme d'un sous-vêtement de protection, pour protéger des personnes contre l'exposition et/ou la contamination par des hydrocarbures aromatiques polycycliques (HAP) libérés par une source de contamination lorsqu'elles séjournent et/ou travaillent dans des lieux où des hydrocarbures aromatiques polycycliques sont libérés ou présents, et/ou pour protéger les personnes exposées à l'action d'hydrocarbures aromatiques polycycliques contre une contamination, en particulier pour empêcher ou minimiser une contamination,
le vêtement de protection (8) comportant un matériau de protection textile (1) ou étant formé à partir de celui-ci,
le matériau textile de protection (1) étant conçu comme un matériau composite textile multicouche comportant une pluralité de couches (2, 3, 4, 5, 6) reliées entre elles,
le matériau textile de protection (1) comportant les couches suivantes (2, 3, 4, 5, 6), de préférence dans l'ordre indiqué ci-dessous:
(a) une couche de support textile (2), la couche de support textile (2) se présentant et/ou étant formée comme un tissu textile de préférence perméable au gaz,
(b) une couche adhésive (3) appliquée sur un côté de la couche de support textile (2), la couche adhésive (3) se présentant et/ou étant formée comme une couche adhésive perméable à la vapeur d'eau et/ou aux gaz et/ou discontinue, de préférence à base d'un polymère adhésif,
(c) une couche d'adsorption (4) fixée et/ou amenée à adhérer à la couche adhésive (3), de préférence discontinue et/ou perméable aux gaz, la couche d'adsorption (4) comprenant une multitude de particules adsorbantes individuelles (4a) ou étant formée à partir de celles-ci,
(d) une couche filtrante de particules et/ou d'aérosols (5) disposée sur la couche adsorbante (4) et/ou reliée à la couche adsorbante (4), de préférence une couche filtrante de particules et d'aérosols (5), la couche filtrante de particules et/ou d'aérosols (5) se présentant et/ou étant formée comme une structure textile plane perméable aux gaz, qui comprend une multitude de fibres textiles individuelles ou est formée à partir de celles-ci,
(e) le cas échéant, une couche de recouvrement (6) disposée sur la couche filtrante de particules et d'aérosols (5) et/ou reliée à la couche filtrante de particules et d'aérosols (5), la couche de recouvrement (6) se présentant et/ou étant formée de préférence sous la forme d'une structure textile plane perméable aux gaz.

2. Utilisation selon la revendication 1,
le vêtement de protection (8) étant réalisé et/ou se présentant sous la forme d'au moins un vêtement de protection (8a, 8b, 8c), de préférence sous la forme d'une pluralité de vêtements de protection (8a, 8b, 8c) complémentaires les uns par rapport aux autres, de préférence sous la forme d'un sous-vêtement de protection; et/ou
le vêtement de protection (8) comportant au moins un vêtement de protection (8a, 8b, 8c), de préférence une pluralité de vêtements de protection (8a, 8b, 8c) complémentaires les uns des autres, de préférence sous la forme d'un sous-vêtement de protection; et/ou
le vêtement de protection (8), de préférence sous la forme d'un sous-vêtement de protection, étant présents et/ou conçus pour protéger le bas du corps, le haut du corps et la tête.

3. Utilisation selon la revendication 1 ou 2,
le vêtement de protection (8) étant utilisé et/ou présent sous la forme d'un sous-vêtement de protection; et/ou
le vêtement de protection (8) étant une combinaison (i) d'un vêtement de protection pour les jambes (8a), en particulier un pantalon de protection, (ii) d'un vêtement de protection supérieur (8b), en particulier une chemise de protection, un t-shirt de protection ou un pull de protection, couvrant en particulier les bras, et (iii) d'un couvre-chef de protection (8c), en particulier une cagoule de protection ou une cagoule de protection, et/ou est conçu; et/ou
le vêtement de protection (8) étant utilisé et/ou se présentant sous la forme d'un sous-vêtement de protection, les vêtement de protection (8) se présentant sous la forme d'une combinaison (i) d'un vêtement de protection pour les jambes (8a), en particulier de pantalons de protection, (ii) d'un vêtement de protection supérieur (8b), en particulier une chemise de protection, un t-shirt de protection ou un pull de protection, en particulier comprenant une couverture des bras, et (iii) d'un couvre-chef de protection (8c), en particulier une cagoule de protection ou une cagoule de protection, et/ou
le vêtement de protection (8) et/ou le matériau de protection (1) étant disposé et/ou utilisé lors de l'utilisation et/ou à l'état d'application, en particulier à l'état porté, de telle sorte que la couche filtrante de particules et/ou d'aérosols (5) et/ou la couche de recouvrement (6) éventuellement présente soient tournées vers la source de contamination et/ou que la couche filtrante de particules et/ou d'aérosols (5) et/ou la couche de recouvrement (6) éventuellement présente (6) est/sont détournée(s) du porteur du vêtement de protection (8) et/ou que la couche filtrante pour particules et/ou aérosols (5) et/ou la couche de recouvrement (6) éventuellement présente forme/forment une couche extérieure du vêtement de protection (8) et/ou du matériau de protection (1); et/ou
le vêtement de protection (8) et/ou le matériau de protection (1) étant disposé et/ou utilisé lors de l'utilisation et/ou à l'état d'application, en particulier à l'état porté, de telle sorte que la couche de support textile (2) et/ou la couche de recouvrement supplémentaire ou deuxième couche de recouvrement (7) éventuellement présente soient détournées de la source de contamination et/ou que la couche de support textile (2) et/ou la couche de recouvrement supplémentaire ou deuxième couche de recouvrement (7) éventuellement présente soient tournées vers le porteur du vêtement de protection et/ou que la couche de support textile (2) et/ou la couche de recouvrement supplémentaire ou secondaire (7) éventuellement présente forme/forment une couche intérieure du vêtement de protection (8) et/ou du matériau de protection (1); et/ou
le vêtement de protection (8) étant utilisé comme sous-vêtement de protection; et/ou
le vêtement de protection (8) étant utilisé comme sous-vêtement de protection en combinaison avec un vêtement de protection supérieur, en particulier en combinaison avec un vêtement de travail de protection, de préférence en combinaison avec un équipement de protection individuelle.

4. Utilisation selon une ou plusieurs des revendications précédentes,
le matériau de protection (1) et/ou le vêtement de protection (8) étant perméable aux gaz, en particulier perméable à l'air, et/ou perméable à la vapeur d'eau, de préférence perméable aux gaz, en particulier perméable à l'air, et perméable à la vapeur d'eau; et/ou
le matériau de protection (1) et/ou le vêtement de protection (8) présentant une perméabilité aux gaz, en particulier à l'air, avec une résistance à l'écoulement de 100 pascals, déterminée en particulier selon la norme DIN EN ISO 9237, comprise entre 0,5 mm/s et 500 mm/s, en particulier dans la plage de 1 mm/s à 450 mm/s, de préférence dans la plage de 2,5 mm/s à 400 mm/s, de manière particulièrement préférée dans la plage de 3,5 mm/s à 300 mm/s, de manière tout particulièrement préférée dans la plage de 5 mm/s à 250 mm/s; et/ou
le matériau de protection (1) et/ou le vêtement de protection (8) présentant une résistance à la transmission de vapeur d'eau (Rₑₜ), déterminée en particulier selon la norme DIN EN 343:2019, d'au maximum 15 m² Pa / Watt, en particulier d'au maximum 10 m² Pa / Watt, de préférence d'au plus 8 m² Pa / Watt, de préférence d'au plus 7 m² Pa / Watt, encore plus préférablement d'au plus 6 m² Pa / Watt, très particulièrement préférablement d'au plus 5 m² Pa / Watt; et/ou
le matériau de protection (1) et/ou le vêtement de protection (8) ayant une épaisseur, en particulier une épaisseur totale, comprise entre 0,25 mm et 25 mm, en particulier comprise entre 0,5 mm et 15 mm, de préférence comprise entre 0,6 mm et 10 mm, de préférence comprise entre 0,75 mm et 5 mm, de manière particulièrement préférée comprise entre 0,8 mm et 2 mm, en particulier déterminée selon la norme DIN EN ISO 5084; et/ou
le matériau de protection (1) et/ou le revêtement de protection (8) ayant une pression d'éclatement, déterminée en particulier selon la norme DIN EN ISO 13938-2, comprise entre 50 kPa et 1 000 kPa, en particulier comprise entre 75 kPa et 800 kPa, de préférence comprise entre 90 kPa et 600 kPa, de manière particulièrement préférée comprise entre 100 kPa et 500 kPa; et/ou
le matériau de protection (1) et/ou le vêtement de protection (8) présentant une force de traction maximale et/ou un allongement maximal sous traction, de préférence dans le sens longitudinal et transversal, déterminés en particulier selon la norme DIN EN ISO 13934-1, comprise entre 200 newtons et 4 000 newtons, en particulier comprise entre 225 newtons et 3 750 newtons, de préférence comprise entre 250 newtons et 3 500 newtons, de manière particulièrement préférée comprise entre 275 newtons et 3 000 newtons; et/ou
le matériau de protection (1) et/ou le vêtement de protection (8) présentant une contrainte d'étirement et/ou une capacité d'étirement dans au moins une direction, en particulier dans le sens longitudinal ou transversal, déterminée selon la norme DIN 53835-14 à 20 newtons, d'au moins 2,5 %, de préférence d'au moins 5 %, de préférence d'au moins 10 %; et/ou
le matériau de protection (1) et/ou le vêtement de protection (8) présentant un rétrécissement dans au moins une direction, en particulier dans le sens longitudinal ou transversal, déterminé selon la norme DIN EN 5077, d'au plus 10 %, de préférence d'au plus 6 %, de préférence d'au plus 3 %; et/ou
le matériau de protection (1) et/ou le vêtement de protection (8) étant lavable, en particulier lavable et séchable.

5. Utilisation selon une ou plusieurs des revendications précédentes,
la couche adhésive (3) et/ou l'adhésif de la couche adhésive (3) étant appliqué(s) et/ou étalé(s) sur la couche de support textile sous la forme d'une couche adhésive perméable à la vapeur d'eau et/ou à l'air, de préférence perméable à la vapeur d'eau et à l'air, et/ou discontinue, à base d'un polymère adhésif (2), la couche adhésive étant formée soit sous la forme d'une mousse polymère adhésive séchée et/ou durcie, en particulier réticulée, ou bien sous la forme d'une trame d'une pluralité de points adhésifs polymères répartis sur la couche de support (2) (polymère) répartis sur la couche support (2), de préférence sous la forme d'une mousse polymère adhésive séchée et/ou durcie, en particulier réticulée, fragmentée; et/ou
la couche adhésive étant réalisée soit sous la forme d'une mousse polymère adhésive séchée et/ou durcie, en particulier réticulée, fragmentée, soit sous la forme d'une trame d'une multitude de points adhésifs (polymères) répartis sur la couche de support (2) (polymère) répartis sur la couche de support (2), de préférence sous la forme d'une mousse polymère adhésive séchée et/ou durcie, en particulier réticulée, fragmentée.

6. Utilisation selon une ou plusieurs des revendications précédentes,
la couche adhésive (3) et/ou l'adhésif de la couche adhésive (3) étant formé sous la forme d'une couche adhésive perméable à la vapeur d'eau et/ou à l'air, de préférence perméable à la vapeur d'eau et à l'air, et/ou discontinue à base d'une mousse polymère adhésive séchée et/ou durcie, en particulier réticulée, fragmentée, sur la couche de support textile (2); ou
la couche adhésive (3) et/ou l'adhésif de la couche adhésive (3) étant appliqué(e) sur la couche de support textile (2) sous la forme d'une couche adhésive perméable à la vapeur d'eau et/ou à l'air, de préférence perméable à la vapeur d'eau et à l'air, et/ou discontinue à base d'un polymère adhésif sur la couche de support textile (2), la couche adhésive étant formée sous la forme d'une trame d'une multitude de points adhésifs (polymères) répartis sur la couche de support (2) ; et/ou la couche adhésive d' s étant formée sous la forme d'une trame d'une multitude de points adhésifs (polymères) répartis sur la couche de support (2).

7. Utilisation selon une ou plusieurs des revendications précédentes,
les particules adsorbantes (4a) de la couche adsorbante (4) étant choisies dans le groupe constitué par
(i) le charbon actif en particulier particulaire et/ou les particules de charbon actif, de préférence sous forme de particules de charbon actif sous forme de grains ou de particules de charbon actif sous forme de billes ou de particules de charbon actif sous forme de fibres;
(ii) des zéolithes, en particulier des zéolithes naturelles et/ou synthétiques;
(iii) des tamis moléculaires, en particulier des tamis moléculaires zéolithiques, des tamis moléculaires synthétiques et/ou en particulier des tamis moléculaires synthétiques à base de carbone, d'oxydes et/ou de verres;
(iv) particules d'oxyde métallique et/ou métalliques;
(v) Résines échangeuses d'ions, en particulier échangeurs cationiques et/ou anioniques polydispersés et/ou monodispersés, en particulier de type gel et/ou de type macroporeux;
(vi) oxydes inorganiques, en particulier dioxydes de silicium, gels de silice et/ou oxydes d'aluminium;
(vii) polymères organiques poreux et/ou polymères hybrides organiques-inorganiques poreux et/ou matériaux de structure organométalliques, en particulier MOF (*Metal Organic Framework*)*,* COF (*Covalent Organic Framework*)*,* ZIF (*Zeolite Imidazolate Framework*)*,* POM (*Polymer Organic Material*) et/ou OFC;
(viii) granulés minéraux;
(ix) clathrates; ainsi que
(x) leurs mélanges et/ou combinaisons;
où (i) est particulièrement préféré; et/ou
les particules adsorbantes (4a) de la couche adsorbante (4) étant des particules de charbon actif, de préférence sous forme de particules de charbon actif granulaires ou de particules de charbon actif sphériques, de préférence sous forme de particules de charbon actif sphériques.

8. Utilisation selon une ou plusieurs des revendications précédentes,
le matériau de protection (1) et/ou le vêtement de protection (8) étant pourvu d'un traitement ignifuge ou résistant aux flammes, en particulier d'un traitement ignifuge ou résistant aux flammes à base d'agents ignifuges halogénés et/ou phosphorés, de préférence des esters phosphoriques, des phosphonates, des phosphinates;
en particulier, le traitement ignifuge ou résistant aux flammes étant réalisé par imprégnation du matériau de protection (1) et/ou du vêtement de protection (8) avec le retardateur de flamme.

9. Utilisation selon une ou plusieurs des revendications précédentes pour la protection des personnes contre les gaz contenant des hydrocarbures aromatiques polycycliques, en particulier les gaz d'échappement ou les gaz de combustion, provenant de processus de combustion et/ou à haute température, en particulier pour la protection des personnes contre les gaz contenant des hydrocarbures aromatiques polycycliques, en particulier les gaz d'échappement ou les gaz de combustion, provenant de, ou dans, des incendies, des cokeries, des fonderies, aciéries, processus de fusion, processus de production et de transformation des métaux et de l'acier, processus de haut fourneau, processus d'incinération des déchets, processus de production et de transformation de l'asphalte, processus de production et de transformation du verre, processus de production et de transformation de produits réfractaires.

10. Utilisation selon une ou plusieurs des revendications précédentes,
les hydrocarbures aromatiques polycycliques provenant de gaz, en particulier de gaz d'échappement ou de gaz de combustion, issus de processus de combustion et/ou à haute température, en particulier de gaz, en particulier de gaz d'échappement ou de gaz de combustion, provenant de, issus de ou dans des incendies, des cokeries, fonderies, aciéries, processus de fusion, processus de production et de traitement des métaux et de l'acier, processus de haut fourneau, processus d'incinération des déchets, processus de production et de traitement de l'asphalte, processus de production et de traitement du verre, processus de production et de traitement des produits réfractaires.

11. Utilisation selon une ou plusieurs des revendications précédentes,
Les personnes à protéger sont les pompiers ou les personnes travaillant dans les cokeries, les fonderies, les aciéries, les processus de fusion, les processus de production et de transformation des métaux et de l'acier, les processus de haut fourneau, les processus d'incinération des déchets, de production et de transformation d'asphalte, de production et de transformation de verre, de production et de transformation de produits réfractaires, de préférence des pompiers.

12. Utilisation selon une ou plusieurs des revendications précédentes pour protéger les pompiers contre les gaz contenant des hydrocarbures aromatiques polycycliques, en particulier les gaz d'échappement ou les gaz de combustion provenant d'incendies;
en particulier lorsque le vêtement de protection (8) est utilisé comme sous-vêtement de protection en combinaison avec un vêtement de protection supérieur, en particulier en combinaison avec un vêtement de travail de protection, de préférence en combinaison avec un équipement de protection individuelle, de préférence en combinaison avec un vêtement de protection pour pompiers selon la norme DIN EN 469; et/ou
en particulier lorsque le vêtement de protection (8) est utilisé et/ou se présente sous la forme d'un sous-vêtement de protection, le vêtement de protection (8) étant une combinaison (i) d'un vêtement de protection pour les jambes (8a), en particulier un pantalon de protection, (ii) d'un haut de protection (8b), en particulier une chemise de protection, un t-shirt de protection ou un pull de protection, couvrant en particulier les bras, et (iii) d'un couvre-chef de protection (8c), en particulier une cagoule de protection ou une cagoule de protection, et/ou est conçu.

13. Procédé pour protéger des personnes contre une exposition et/ou une contamination par des hydrocarbures aromatiques polycycliques libérés à partir d'une source de contamination lorsqu'elles séjournent et/ou travaillent dans des lieux où des hydrocarbures aromatiques polycycliques sont libérés ou présents, et/ou pour protéger les personnes exposées à l'action d'hydrocarbures aromatiques polycycliques contre une contamination, en particulier pour empêcher ou minimiser une contamination,
les personnes étant équipées et/ou pourvues, en particulier vêtues, d'un vêtement de protection (8), de préférence sous la forme d'un sous-vêtement de protection,
le vêtement de protection (8) comportant un matériau de protection textile (1) ou étant formés à partir de celui-ci,
le matériau de protection textile (1) étant conçu comme un matériau composite textile multicouche comportant une pluralité de couches (2, 3, 4, 5, 6) reliées entre elles,
le matériau de protection textile (1) comportant les couches suivantes (2, 3, 4, 5, 6), de préférence dans l'ordre indiqué ci-dessous:
(a) une couche de support textile (2), la couche de support textile (2) se présentant et/ou étant formée comme un tissu textile de préférence perméable au gaz,
(b) une couche adhésive (3) appliquée sur un côté de la couche de support textile (2), la couche adhésive (3) se présentant et/ou étant formée comme une couche adhésive perméable à la vapeur d'eau et/ou aux gaz et/ou discontinue, de préférence à base d'un polymère adhésif,
(c) une couche d'adsorption (4) fixée et/ou amenée à adhérer à la couche adhésive (3), de préférence discontinue et/ou perméable aux gaz, la couche d'adsorption (4) comprenant une multitude de particules adsorbantes individuelles (4a) ou étant formée à partir de celles-ci,
(d) une couche filtrante de particules et/ou d'aérosols (5) disposée sur la couche adsorbante (4) et/ou reliée à la couche adsorbante (4), de préférence une couche filtrante de particules et d'aérosols (5), la couche filtrante de particules et/ou d'aérosols (5) se présentant et/ou étant formée comme une structure textile plane perméable aux gaz, qui comprend une multitude de fibres textiles individuelles ou est formée à partir de celles-ci,
(e) le cas échéant, une couche de recouvrement (6) disposée sur la couche filtrante de particules et d'aérosols (5) et/ou reliée à la couche filtrante de particules et d'aérosols (5), la couche de recouvrement (6) se présentant et/ou étant formée de préférence sous la forme d'une structure textile plane perméable aux gaz.

14. Combinaison de vêtements de protection destinée à protéger des personnes contre l'exposition et/ou la contamination par des hydrocarbures aromatiques polycycliques (HAP) libérés par une source de contamination lorsqu'elles séjournent et/ou travaillent dans des lieux où des hydrocarbures aromatiques polycycliques sont libérés ou présents, et/ou pour protéger les personnes exposées à l'action d'hydrocarbures aromatiques polycycliques contre une contamination, en particulier pour empêcher ou minimiser une contamination et/ou en particulier pour empêcher ou minimiser une contamination par des hydrocarbures aromatiques polycycliques libérés à partir d'une source de contamination, de préférence pour protéger les personnes exposées à des hydrocarbures aromatiques polycycliques,
la combinaison de vêtements de protection comprenant:
(A) un vêtement de protection supérieur, en particulier un vêtement de travail de protection, de préférence un équipement de protection individuelle, de préférence un vêtement de protection pour pompiers selon la norme DIN EN 469; et
(B) un vêtement de protection (8) sous la forme d'un sous-vêtement de protection, en particulier le vêtement de protection (8) étant une combinaison (i) d'un vêtement de protection pour les jambes (8a), en particulier un pantalon de protection, (ii) d'un haut de protection (8b), en particulier une chemise de protection, un t-shirt de protection ou un pull de protection, en particulier comprenant une couverture des bras, et (iii) d'un couvre-chef de protection (8c), en particulier une cagoule de protection ou une cagoule de protection, et/ou est conçu;
les vêtement de protection (8) comportant un matériau de protection textile (1) ou étant formés à partir de celui-ci,
le matériau textile de protection (1) étant conçu comme un matériau composite textile multicouche comportant une pluralité de couches (2, 3, 4, 5, 6) reliées entre elles,
le matériau textile de protection (1) comportant les couches suivantes (2, 3, 4, 5, 6), de préférence dans l'ordre indiqué ci-dessous:
(a) une couche de support textile (2), la couche de support textile (2) se présentant et/ou étant formée comme un tissu textile de préférence perméable au gaz,
(b) une couche adhésive (3) appliquée sur un côté de la couche de support textile (2), la couche adhésive (3) se présentant et/ou étant formée comme une couche adhésive perméable à la vapeur d'eau et/ou aux gaz et/ou discontinue, de préférence à base d'un polymère adhésif,
(c) une couche d'adsorption (4) fixée et/ou amenée à adhérer à la couche adhésive (3), de préférence discontinue et/ou perméable aux gaz, la couche d'adsorption (4) comprenant une multitude de particules adsorbantes individuelles (4a) ou étant formée à partir de celles-ci,
(d) une couche filtrante de particules et/ou d'aérosols (5) disposée sur la couche adsorbante (4) et/ou reliée à la couche adsorbante (4), de préférence une couche filtrante de particules et d'aérosols (5), la couche filtrante de particules et/ou d'aérosols (5) se présentant et/ou étant formée comme une structure textile plane perméable aux gaz, qui comprend une multitude de fibres textiles individuelles ou est formée à partir de celles-ci,
(e) le cas échéant, une couche de recouvrement (6) disposée sur la couche filtrante de particules et d'aérosols (5) et/ou reliée à la couche filtrante de particules et d'aérosols (5), la couche de recouvrement (6) se présentant et/ou étant formée de préférence sous la forme d'une structure textile plane perméable aux gaz.

15. Utilisation d'une combinaison de vêtements de protection selon la revendication 14
pour protéger des personnes contre une exposition et/ou une contamination par des hydrocarbures aromatiques polycycliques libérés par une source de contamination lorsqu'elles séjournent et/ou travaillent dans des lieux où des hydrocarbures aromatiques polycycliques sont libérés ou présents, et/ou pour protéger les personnes exposées à l'action d'hydrocarbures aromatiques polycycliques contre une contamination, en particulier pour empêcher ou minimiser une contamination; et/ou
pour empêcher ou minimiser une contamination par des hydrocarbures aromatiques polycycliques libérés à partir d'une source de contamination, en particulier pour protéger les personnes exposées à l'action d'hydrocarbures aromatiques polycycliques.
